# EUROPÄISCHE PATENTSCHRIFT

(11) **EP 2 340 686 B1**
(45) Veröffentlichungstag und Bekanntmachung des Hinweises auf die Patenterteilung: **03.12.2014**
(21) Anmeldenummer: 09736151.3
(22) Anmeldetag: 14.10.2009
(51) Int. Cl.: H05B 3/26

(54) **HEIZSYSTEM MIT ZUMINDEST EINER ELEKTROTHERMISCHEN HEIZSCHICHT, EIN STRUKTURBAUTEIL MIT EINER SOLCHEN HEIZSCHICHT, EIN HEIZVERFAHREN SOWIE EIN VERFAHREN ZUR HERSTELLUNG EINES BAUTEIL-HALBZEUGES ODER EINES BAUTEILS MIT EINER HEIZVORRICHTUNG**
HEATING SYSTEM WITH AT LEAST AN ELECTROTHERMAL HEATING LAYER, A STRUCTURAL PIECE WITH SUCH HEATING LAYER, AN HEATING PROCESS AND ALSO A MANUFACTURING PROCESS OF INTERMEDIATE PIECE OR OF A PIECE INSIDE A HEATING APPARATUS
SYSTÈME DE CHAUFFAGE AVEC AU MOINS UNE COUCHE DE CHAUFFAGE ÉLECTROTHERMIQUE, UNE STRUCTURE DE CONSTRUCTION COMPORTANT UNE TELLE COUCHE DE CHAUFFAGE, UN PROCÉDÉ DE CHAUFFAGE AINSI QU'UN PROCÉDÉ DE FABRICATION D'UNE PIÈCE SEMI-FINIE OU D'UNE PIÉCE COMPORTANT UN TELLE APPAREILLAGE DE CHAUFFAGE.

(30) Priorität: 14.10.2008 US 105117 P; 14.10.2008 DE 102008051558; 14.10.2008 US 105077 P; 14.10.2008 DE 102008051553; 14.10.2008 US 105085 P; 14.10.2008 DE 102008051549; 14.10.2008 US 105059 P; 14.10.2008 DE 102008051533; 31.12.2008 DE 102008063410; 31.12.2008 DE 102008063409; 31.12.2008 DE 102008063408; 31.12.2008 US 142031 P; 31.12.2008 US 142010 P; 31.12.2008 US 142021 P
(43) Veröffentlichungstag der Anmeldung: 06.07.2011
(73) Patentinhaber: Airbus Operations GmbH, 21129 Hamburg (DE); Airbus Opérations SAS, 31060 Toulouse (FR)
(72) Erfinder: ORAWETZ, Holger, 01257 (DE); REPPE, Matti, 01239 Dresden (DE); ROTH, York, Caesar, BS79HN Bristol (GB); LATRILLE, Martin, F-31200 Toulouse (FR)
(74) Vertreter: UEXKÜLL & STOLBERG
(86) Internationale Anmeldenummer: PCT/EP2009/007381
(87) Internationale Veröffentlichungsnummer: WO 2010/049063

(56) Entgegenhaltungen:
- WO-A1-2007/107732
- DE-A1-102004 031 625
- GB-A- 2 437 120
- US-A- 5 925 275
- US-A- 6 137 083
- US-A1- 2006 006 165
- US-B1- 6 283 411

## Beschreibung

Die Erfindung betrifft ein Strukturbauteil mit einem Heizsystem.

Aus der US 6 283 411 B1 ist ein Struktur-Bauteil mit einem Heizsystem mit zumindest einer Energieversorgungs-Vorrichtung bekannt.

Die DE 198 31 574 A1 beschreibt eine Sitzheizung mit einem elektrischen Flächenheizelement aus gewebten Kohlenstofffilamenten, das als flexibles Widerstandsmaterial dient, an das entlang eines Randbereichs des Flächenheizelements Hauptelektroden für eine Beheizung des Flächenheizelements angeschlossen ind. Um eine verkürzte Aufwärmzeit zu erreichen, weist die Sitzheizung eine Zusatzeinrichtung mit sich über einen Teilbereich des Flächenheizelements erstreckenden Elektroden auf.

Die DE 10 2004 042 423 A1 beschreibt ein aerodynamisches Bauteil mit einer Flächenheizung zur Verhinderung von Vereisungen einer äußeren Oberfläche des Bauteils.

Auch ist aus der DE 10 2004 031 625 A1 eine Schaltungsanordnung zur Diagnose eines Heizwiderstands bekannt, um eine Heiztemperatur zu bestimmen.

Ein Verfahren zur Temperaturregelung eines Heizelements beschreibt die EP 0 745 919 A1. In der Messphase wird das Heizen unterbrochen und der Widerstand des Heizelements mit der Sollwert-Vorgabe verglichen. Je nachdem, ob der Widerstand des Heizelements unter dem Sollwert liegt, wird nun der Ansteuerung für den Wechselspannungsschalter mitgeteilt, ob geheizt wird oder nicht geheizt werden muss, um den Sollwert zu erreichen.

Ein System zur Verhinderung von Eisbildung beschreibt die WO2007/107732 A1, das derart ausgeführt ist, dass die verwendeten Heizvorrichtungen auf einer konstanten Temperatur gehalten werden.

Aus der US 5824996 ist ein elektrisch leitendes textiles Heizelement bekannt, das aus Bändern, die aus nicht-metallischen Garnen gewebt sind, hergestellt ist. Dabei werden die Bänder in ihrer Längsrichtung auf ein Trägerteil abgelegt.

Aus der US 2006/0278631 A1 ist bekannt zur Herstellung eines elektrisch leitenden textilen Heizelements ein bandförmige Gewebe oder ungewebte Materialstrukturen zu verwenden, die in einer zuvor vorbereiteten Form auf ein Trägerteil aufgeklebt werden.

Die DE 101 51 298 A1 beschreibt eine Heizfolie auf einem Trägermaterial, in das Widerstandsdrähte entlang Vorzugsrichtungen integriert sind.

Weiterhin ist aus dem allgemeinen Stand der Technik ein Verfahren zur Herstellung eines Heizkörpers bekannt, bei dem auf ein Trägermaterial eine elektrisch leitende Kohlefaser-Schicht aufgedampft wird.

Die US 6 137 083 beschreibt eine Heizschicht an einem aerodynamischen Bauteil zum Beheizen eines länglichen Bereichs an demselben. Die Heizschicht ist aus einem Gewebe gebildet, bei dem Bündel von elektrisch leitenden Rovings und diese voneinander trennenden Isolationsfasern mit Schussfäden verwebt sind, die transversal zu diesen und in der das Gewebe stützenden Schussrichtung verlaufen. Die Heizschicht ist derart auf einer Oberfläche des aerodynamischen Bauteils aufgebracht, dass die Bündel von Rovings parallel zueinander entlang der Vorderkante des Bauteils verlaufen. Ein solches Gewebe ist für großflächige Realisierungen nachteilig, da in diesen Fällen das Gewebe beim Herstellungsprozess insgesamt unter Einsatz von Bindermaterial stabilisiert werden muss. Das Bindermaterial verschlechtert die Materialeigenschaften wie die Steifigkeit und Festigkeit oder Ermüdungs-Eigenschaften der Heizschicht. Diese Eigenschaften sind insbesondere für Anwendungen im Flugzeugbau zur Bildung stabiler aerodynamischer Bauteile mit großer Lebensdauer von großer Wichtigkeit.

Die DE 42 14 636 A1 beschreibt ein multiaxiales Verstärkungsgebilde aus mindestens einer flächigen Trägerlage und dieser Trägerlage zugeordneten Verstärkungsfäden die zumindest bereichsweise entsprechend den im Formteil auftretenden Spannungen kraftlinienorientiert verlaufen.

Eine Aufgabe der Erfindung ist, ein Struktur-Bauteil mit einem Heizsystem bereitzustellen, mit dem das Strukturbauteil auf effiziente Weise und gleichzeitig mit schnell zu erzielenden Heizeffekten beheizt werden kann und das insbesondere für den jeweiligen Anwendungsfall optimiert werden kann, um eine effektive Erwärmung von Bauteil-Oberflächen zu ermöglichen. Das erfindungsgemäße Heizsystem soll insbesondere in der Lage sein, ein Strukturbauteil eines Flugzeugs den Flugzeuganforderungen entsprechend zu beheizen. Dabei soll es nach einem Aspekt der Erfindung möglich sein, dass das wärmeerzeugende Material des Heizsystems insbesondere hinsichtlich des Gewichts in optimaler Weise in das Strukturbauteil integriert ist. Weiterhin ist eine Aufgabe der Erfindung, ein Struktur-Bauteil und eine Anordnung mit einem Struktur-Bauteil bereitzustellen, das ein solches Heizsystem aufweist.

Diese Aufgabe wird mit den Merkmalen des Anspruchs 1 gelöst. Weitere Ausführungsformen sind in den auf diesen rückbezogenen Unteransprüchen angegeben.

Erfindungsgemäß wird eine Faserverbund-Heizschicht aus zumindest einem Bündel oder einem Verbund oder einem Band von Rovingen aus elektrisch leitende Materialien verwendet, die beim Anschließen einer elektrischen Versorgung als Ohmscher Widerstand wirken und dadurch Wärme erzeugen.

Diese bieten gegenüber gewebten Materialien den Vorteil, dass mit diesen Strukturbauteile mit besseren Eigenschaften der Festigkeit und der Ermüdungseigenschaften herstellbar sind und gleichzeitig dass mit diesen ein energetisch effizientes Aufheizen des Strukturbauteils, dessen Bestandteil diese sind, möglich ist.

Das erfindungsgemäße Struktur-Bauteil kann sich gemäß spezieller Einzelfall-Anforderungen in besonders effizienter Weise aufheizen. Insbesondere wird mit der erfindungsgemäßen Lösung ein Heizsystem verewendet, das sich unter dem Gesichtspunkt der Energie-Effizienz für die Beheizung von Flugzeug-Strukturbauteilen eignet. Insbesondere kann das erfindungsgemäße Heizsystem zur Beheizung von der Strömung ausgesetzten Außenflächen von Flugzeug-Strukturbauteilen verwendet werden, um die Eisbildung an solchen äußeren Flächen von Strukturbauteilen zu verhindern und zu reduzieren. Insbesondere ist durch die Integration der erfindungsgemäß vorgesehenen Heizschicht möglich, Strukturbauteile bereitzustellen, die besonders gewichtsgünstig und dabei auch besonders wärme-effizient sind. Erfindungsgemäß ist zur Bildung der Heizschicht zumindest ein Bündel oder ein Verbund oder ein Band von Rovingen vorgesehen, das bzw. der insbesondere derart in einem Strukturbauteil integriert ist, dass die Rovinge Spannungen des Strukturbauteils aufnehmen können, die durch äußere Kräfte auf das Strukturbauteil entstehen. Die nach der Erfindung in das Strukturbauteil integrierte Heizschicht ist auf diese Weise ein lastübertragender Bestandteil des Strukturbauteils.

Weiterhin sind zeitlich veränderliche Heizströme mit phasenweise hohen Spitzen möglich in der Heizschicht möglich, da die in der erfindungsgemäß verwendeten Heizschicht lokal auftretenden Temperaturen kontrollierbar und insbesondere regelbar sind. Die Kombination der Optimierbarkeit der Roving-Struktur auf dem Trägerteilhalbzeug bzw. an der Heizschicht mit der Kontrollierbarkeit oder Regelbarkeit der in der Heizschicht auftretenden Temperaturen macht einen besonders effektiven Einsatz in bestimmten Anwendungsfällen möglich, in denen mit möglichst einfach gebauten und leichten Strukturen und Materialien kurzzeitig hohe Heizleistungen notwendig sind. Ein bevorzugter Anwendungsfall sind demgemäß Bauteile von Flugzeugen insbesondere von Oberflächen von von der Umgebungsluft umströmten aerodynamischen Körpern. Die erfindungsgemäße Lösung erlaubt eine sichere und zeitlich beständige Integration einer Heizschicht in ein Bauteil und insbesondere ein Schalenteil eines aerodynamischen Körpers eines Flugzeugs. Weiterhin sind die Effekte einer Erhitzung der erfindungsgemäß hergestellten Heizschicht auf das Bauteil, auf dem die Heizschicht angeordnet ist, auf sehr einfache Weise kontrollierbar.

Erfindungsgemäß ist ein Heizsystem mit zumindest einer Energieversorgungs-Vorrichtung vorgesehen. Das Heizsystem weist insbesondere auf:
▪ eine Basis-Heizvorrichtung mit einer Isolationsschicht, mit einer darauf angeordneten elektrothermischen Basis-Heizschicht, die aus zumindest einem Bündel oder einem Verbund oder einem Band von Rovings gebildet ist, und mit einer elektrischen Anschlussvorrichtung, über die die zumindest eine Energieversorgungs-Vorrichtung an die Basis-Heizschicht angeschlossen ist,
▪ eine Zusatz-Heizvorrichtung mit einer Isolationsschicht, mit einer darauf angeordneten elektrothermischen Zusatz-Heizschicht und mit einer elektrischen Anschlussvorrichtung, über die die Energieversorgungs-Vorrichtung an die Zusatz-Heizschicht angeschlossen ist.

Dabei ist insbesondere vorgesehen, dass die Enden jedes Rovings an jeweils eine Elektrode der elektrischen Anschlussvorrichtung angeschlossen sind, so dass jedes Roving zwischen den beiden Elektroden der elektrischen Anschlussvorrichtung verläuft. Weiterhin verlaufen die Rovings bei dem Vorsehen einer Mehrzahl derselben entlang zueinander und durchgängig zwischen den Anschlussvorrichtungen.

Insbesondere ist ein Struktur-Bauteil mit einer Vorrichtung zum Beheizen einer Oberfläche des Strukturbauteils vorgesehen, wobei die Vorrichtung zum Beheizen einer Oberfläche des Strukturbauteils das vorgenannte Heizsystem aufweist und insbesondere gebildet ist aus:
▪ einer Anordnung aus einer Isolationsschicht, mit einer auf einer Trägerschicht oder der Oberfläche des Strukturbauteils angeordneten elektrothermischen Basis-Heizschicht, die aus von zumindest einem Bündel oder einem Verbund oder einem Band von Rovingen gebildet ist, und mit einer elektrischen Anschlussvorrichtung zum Anschluss einer Energieversorgungs-Vorrichtung an die Basis-Heizschicht, wobei die Enden jedes Rovings an jeweils eine Elektrode der elektrischen Anschlussvorrichtung angeschlossen sind,
▪ einer Zusatz-Heizvorrichtung mit einer auf der Trägerschicht oder der Oberfläche des Strukturbauteils angeordneten Isolationsschicht, mit einer darauf angeordneten elektrothermischen Zusatz-Heizschicht (11), die aus zumindest einem Bündel oder einem Verbund oder einem Band von Rovingen gebildet ist, und mit einer elektrischen Anschlussvorrichtung (A11-1, A11-2) zum Anschluss einer Energieversorgungs-Vorrichtung (E10, E11, E12) an die Zusatz-Heizschicht.

Die Enden jedes Rovings sind jeweils an eine Elektrode der elektrischen Anschlussvorrichtung angeschlossen, so dass jedes Roving zwischen den beiden Elektroden der elektrischen Anschlussvorrichtung verläuft. Weiterhin verlaufen die Rovinge bei dem Vorsehen einer Mehrzahl derselben entlang zueinander.

Durch eine derartige Heizschicht ist ein energetisch sehr effizientes Aufheizen des Strukturbauteils möglich.

Dabei sind die Basis-Heizvorrichtung und die Zusatz-Heizvorrichtung zur Herstellung einer funktional zusammenhängenden Heizwirkung räumlich einander zugeordnet und die Energieversorgungs-Vorrichtung ist dabei derart gestaltet ist, dass der Zusatz-Heizschicht in der Aktivierungsphase in zumindest einem zeitlichen Teilabschnitt Strom zugeführt wird, um das Strukturbauteil im Bereich der Zusatzheizschicht auf eine angenommene Soll-Temperatur zu erwärmen, und dass der Basis-Heizschicht über die Aktivierungsphase hinaus permanent Strom zugeführt wird, so dass die Basis-Heizschicht permanent und die Zusatz-Heizschicht in dem zeitlichen Teilabschnitt Wärme erzeugt. Die Aktivierungsphase erstreckt sich über einen Zeitraum, für dessen Ende angenommen wird, dass das Strukturbauteil im Bereich der Zusatzheizschicht eine Soll-Temperatur angenommen hat.

Dabei kann die Energieversorgungs-Vorrichtung insbesondere derart gestaltet sein, dass in ersten Zeitabschnitten der Heizphase in der Zusatz-Heizschicht Strom mit einer Stärke fließt, die um 50% größer ist als der Strom, der durch die Basis-Heizschicht fließt, und dass in zweiten Zeitabschnitten der Heizphase, die auf jeweils einen ersten Zeitabschnitt folgen, in der Zusatz-Heizschicht Strom mit einer Stärke fließt, die um 50% geringer ist als der Strom, der durch die Basis-Heizschicht fließt.

Alternativ oder zusätzlich kann das Heizsystem aufweisen: eine weitere Zusatz-Heizvorrichtung mit einer Isolationsschicht, mit einer darauf angeordneten weiteren elektrothermischen Zusatz-Heizschicht und mit einer elektrischen Anschlussvorrichtung, über die die Energieversorgungs-Vorrichtung an die weitere Zusatz-Heizschicht angeschlossen ist,
▪ wobei die Funktion der Energieversorgungs-Vorrichtung zur Steuerung des Stroms in den Heizschichten derart gestaltet ist, dass sich für den in den Zusatz-Heizschichten jeweils fließenden Strom in jeder Zusatz-Heizschicht erste und zweite Zeitabschnitte mit unterschiedlichen Stromstärken des Heizstroms bilden, die sich einander abwechseln,
▪ wobei die Stromstärken in den jeweils ersten Heizphasen wesentlich größer sind als die Stromstärken in den jeweils zweiten Heizphasen.

Dabei können die erste elektrothermische Zusatz-Heizschicht und die weitere elektrothermische Zusatz-Heizschicht in Bezug auf die flächige Erstreckung der Basis-Heizschicht innerhalb derselben angeordnet sein.

Nach einem weiteren erfindungsgemäßen Ausführungsbeispiel kann die zumindest eine Basis-Heizschicht und/oder kann die zumindest eine elektrothermische Zusatz-Heizschicht aus zumindest einem über die elektrischen Anschlussvorrichtungen an die Energieversorgungs-Vorrichtung angeschlossenen Band von elektrisch leitfähigen Rovingen, die insbesondere Kohlenstoffleiter aufweisen können, gebildet sein, wobei das zumindest eine Band von Rovingen derart angeordnet ist, dass sich dieses flächig über die Zusatz-Heizschichten verteilt. Die Rovinge können also generell aus einem elektrisch leitfähigen Material gebildet sein. In einem speziellen Ausführungsbeispiel können die Rovinge aus Kohlenstoffleitern gebildet sein. Dadurch kann die jeweilige Heizschicht strukturell oder materialtechnisch in besonderer Weise mit der jeweils zugeordneten Isolationsschicht und/oder dem Bauteil, auf der die jeweilige Heizschicht angeordnet ist, integriert sein. Beispielsweise kann vorgesehen sein, dass diese Schichten dann in einem integrierten Herstellungsprozess hergestellt werden und/oder dabei insbesondere einstückig hergestellt werden. Bei den Ausführungsformen der Erfindung kann alternativ oder zusätzlich vorgesehen sein, dass die elektrothermische Basis-Heizschicht aus zumindest einem über die elektrischen Anschlussvorrichtungen an die Energieversorgungs-Vorrichtung angeschlossenen Band von Rovingen mit Kohlenstoffleitern gebildet ist, wobei das zumindest eine Band von Rovingen derart angeordnet ist, dass sich dieses in einer Lage flächig über die Basis-Heizschicht verteilt. In allen Fällen kann der Roving aus Kohlenstoff-Filamenten gebildet sein, die in den Rovingen parallel zueinander und zumindest abschnittsweise in Längsrichtung der Rovinge verlaufen.

Bei dem erfindungsgemäßen Heizsystem kann weiterhin vorgesehen sein, dass die zumindest eine elektrothermische Zusatz-Heizschicht aus zumindest einem über die elektrischen Anschlussvorrichtungen an die Energieversorgungs-Vorrichtung angeschlossenen Band von Rovingen gebildet ist, das mäanderförmig innerhalb der jeweiligen Heizschicht verläuft.

Der Heizbereich der ersten und/oder der zweiten inneren Heizvorrichtung kann aus, in der Dickenrichtung des jeweiligen Heizbereichs gesehen, einer Lage zumindest eines Bandes von Rovingen gebildet sein.

Generell können die Heizschichten aus Rovingen und dabei einer Lage oder mehreren Lagen von Rovingen gebildet sein.

Alternativ oder zusätzlich kann die elektrothermische Schicht aus metallischen Leitern gebildet sein.

Die Isolationsschichten können dabei einteilig oder mehrteilig gebildet sein.

Erfindungsgemäß ist weiterhin eine Anordnung aus einem Struktur-Bauteil und einem Heizsystem zum Beheizen einer Oberfläche des Strukturbauteils vorgesehen, wobei das Strukturbauteil nach einem der hierin beschriebenen Ausführungsformen gebildet ist. Das Strukturbauteil der Anordnung aus einem Struktur-Bauteil und einem Heizsystem kann insbesondere ein Schalen-Bauteil aufweisen. Dabei kann die Oberfläche, auf der die Heizschichten angeordnet sind, Teil des Schalen-Bauteils sein.

Erfindungsgemäß kann das Schalen-Bauteil eine Außenhaut eines Vorflügels sein und kann die Basis-Heizschicht auf der Innenseite und/oder der Außenseite der Außenhaut angeordnet sein. Die zumindest eine Zusatz-Heizschicht kann auf der Innenseite und/oder der Außenseite der Außenhaut angeordnet sein.

Die Erfindung ist bei metallischen und nicht-metallischen Bauweisen, d.h. für metallische und nicht-metallische Strukturbauteile einsetzbar.

Vorzugsweise wird eine einzelne Schicht von Rovingen auf die Isolierschicht oder das Bauteil angeordnet. Dadurch ist ein effizientes Erwärmen des Bauteils möglich.

Die Stromstärken in den jeweiligen, z.B. ersten und zweiten, Heizphasen können, insbesondere bei innerhalb der jeweiligen Heizphasen zeitabhängige Stromstärken, mittlere Stromstärken sein.

Nach einem weiteren Aspekt der Erfindung ist ein Heizsystem mit zumindest einer elektrothermischen Heizschicht vorgesehen. Das Heizsystem weist weiterhin auf:
▪ eine Energieversorgungs-Vorrichtung mit einer Lastspannungs-Versorgungsvorrichtung zum Anlegen einer Lastspannung zum Erwärmen der Heizschicht, wobei die Lastspannungs-Versorgungsvorrichtung mit einer elektrischen Anschlussvorrichtung an die Heizschicht angeschlossen ist, und mit einer Messspannungs-Versorgungsvorrichtung zum Aufbringen einer Messspannung, die geringer ist als die Spannung zum Erwärmen der Heizschicht, aufweist, wobei die Messspannungs-Versorgungsvorrichtung mit einer elektrischen Anschlussvorrichtung an die Heizschicht angeschlossen ist,
▪ eine mit der Lastspannungs-Versorgungsvorrichtung und der Messspannungs-Versorgungsvorrichtung gekoppelte Ansteuerungsvorrichtung, die diese zur Aufbringung der Lastspannung und der Messspannung ansteuert und die eine Ansteuerungsfunktion aufweist, mit der die Lastspannung auf Null gefahren wird und anschließend die Messspannung angelegt wird und mit der zeitlich abwechselnd die Lastspannung zum Erwärmen der Heizschicht und die Messspannung zum Messen des Widerstands der Heizschicht durchgeführt wird,
▪ eine Auswertungs-Vorrichtung zur Ermittlung des elektrischen Widerstands der Heizschicht aufgrund der gemessenen Stromstärke,
wobei die elektrothermische Heizschicht aus zumindest einem jeweils über die elektrischen Anschlussvorrichtungen an die Energieversorgungs-Vorrichtung angeschlossenen Bündel oder einem Verbund oder einem Band von Rovings mit Kohlenstoffleitern gebildet ist, wobei das zumindest eine Band von Rovings derart angeordnet ist, dass sich dieses flächig über die Heizschichten verteilt und wobei die Enden jedes Rovings an jeweils eine Elektrode der elektrischen Anschlussvorrichtung angeschlossen sind.

Die Heizschicht kann insbesondere integraler Bestandteil eines beschriebenen Strukturbauteils nach der Erfindung sein, so dass diese lasttragender Bestandteil des Strukturbauteils ist.

Das Heizsystem kann weiterhin nach einer erfindungsgemäßen Ausführungsform realisiert sein.

In einem Ausführungsbeispiel der Erfindung weist die Auswertungs-Vorrichtung eine Funktion auf, mit der aufgrund des Widerstands der Heizschicht die Ermittlung der Temperatur der Heizschicht vorgenommen wird. Alternativ oder zusätzlich kann die Auswertungs-Vorrichtung eine Funktion aufweisen, mit der aufgrund des Widerstands der Heizschicht die Integrität der Heizschicht und/oder des Bauteils ermittelt wird.

Bei dem erfindungsgemäßen Heizsystem kann insbesondere vorgesehen sein, dass die Energieversorgungs-Vorrichtung eine Messspannungs-Versorgungsvorrichtung zum Aufbringen einer Messspannung, die geringer ist als die Spannung zum Erwärmen der Heizschicht, aufweist, wobei die Messspannungs-Versorgungsvorrichtung mit einer elektrischen Anschlussvorrichtung an die Heizschicht angeschlossen ist. Dabei kann das Heizsystem weiterhin aufweisen: eine mit der Lastspannungs-Versorgungsvorrichtung und der Messspannungs-Versorgungsvorrichtung gekoppelte Ansteuerungsvorrichtung, die diese zur Aufbringung der Lastspannung und der Messspannung ansteuert und die eine Ansteuerungsfunktion aufweist, mit der die Lastspannung auf einen zu vernachlässigenden Wert oder auf Null gefahren wird und anschließend die Messspannung angelegt wird. Die Messspannung kann insbesondere unter 5 Volt liegen.

Die Messvorrichtung kann dabei zur Messung eines durch die Messspannung verursachten elektrischen Widerstands oder zur Ermittlung der Integrität der Heizschicht und/oder des Bauteils vorgesehen sein.

Die Ansteuerungsvorrichtung kann insbesondere derart ausgeführt sein, dass zeitlich abwechselnd die Lastspannung zum Erwärmen der Heizschicht und die Messspannung zum Messen des Widerstands der Heizschicht durchgeführt wird. Dieses Abwechseln von Anlegen der Lastspannung und Anlegen der Messspannung kann auch mit einer zeitlich konstanten Frequenz erfolgen.

Dabei kann weiterhin vorgesehen sein, dass zeitlich abwechselnd eine Lastspannung durch den ersten Energieversorgungs-Teil zum Erwärmen der Heizschicht und eine Messspannung durch den zweiten Energieversorgungs-Teil zum Messen des Widerstands der Heizschicht erzeugt wird.

Nach einem weiteren Aspekt der Erfindung kann das erfindungsgemäße Heizsystem derart gestaltet sein,
▪ dass in der zumindest einen elektrothermischen Heizschicht eine elektrische Messleitung gelegen ist, die in der Heizschicht integriert ist,
▪ dass die Energieversorgungs-Vorrichtung eine Messspannungs-Versorgungsvorrichtung zum Aufbringen einer Messspannung aufweist, die über Messleitungs-Anschlüsse an den elektrischen Leiter angeschlossen ist,
▪ dass die Messvorrichtung zur Messung einer durch die Messspannung verursachten Stromstärke in der Messleitung vorgesehen ist.

Das Heizsystem kann dabei insbesondere aufweisen: eine Energieversorgungs-Vorrichtung mit einer Lastspannungs-Versorgungsvorrichtung zum Anlegen einer Lastspannung zum Erwärmen der Heizschicht, wobei die Lastspannungs-Versorgungsvorrichtung mit einer elektrischen Anschlussvorrichtung an die Heizschicht angeschlossen ist.

Die elektrothermische Heizschicht ist dabei aus zumindest einem über die elektrischen Anschlussvorrichtungen an die Energieversorgungs-Vorrichtung angeschlossenen zumindest einem Bündel oder Verbund oder Band von Rovings mit Kohlenstoffleitern gebildet, wobei die Enden jedes Rovings an jeweils eine Elektrode der elektrischen Anschlussvorrichtung angeschlossen sind, so dass jedes Roving zwischen den beiden Elektroden der elektrischen Anschlussvorrichtung verläuft und wobei das zumindest eine Band von Rovings jeweils derart angeordnet ist, dass sich dieses flächig über die Zusatz-Heizschichten verteilt. Weiterhin ist in der zumindest einen elektrothermischen Heizschicht eine elektrische Messleitung gelegen, die in der Heizschicht integriert ist. Weiterhin ist vorgesehen:
▪ dass die Energieversorgungs-Vorrichtung eine Messspannungs-Versorgungsvorrichtung zum Aufbringen einer Messspannung aufweist, die über Messleitungs-Anschlüsse an die elektrische Messleitung angeschlossen ist,
▪ dass die Messvorrichtung zur Messung einer durch die Messspannung verursachten Stromstärke in der Messleitung vorgesehen ist.
▪ dass die Messvorrichtung funktional mit einer Sensorwert-Verarbeitungsvorrichtung in Verbindung steht, die eine Vergleichsfunktion aufweist, die Temperaturwerte mit zumindest einem Vergleichswert, der einer Wahrscheinlichkeit einer Eisbildung am Schalenteil entspricht, vergleicht und einen Signalwert an eine Systemfunktion sendet, wenn der Grenzwert erreicht oder überschritten wird.

Die Messleitung kann aus einem Bündel oder einem Verbund oder einem Band von Rovingen gebildet sein.

Die Heizschicht kann nach einem Ausführungsbeispiel Bestandteil eines der genannten Strukturbauteile sein und als Bestandteil eines solchen Strukturbauteils erfindungsgemäß hergestellt sein.

Dabei kann insbesondere vorgesehen sein, dass die Messspannung geringer als 1/10 der Spannung zum Erwärmen der Heizschicht ist. Dadurch können für die Messspannungs-Versorgungsvorrichtung und die Messvorrichtung für kleine Spannungen und Stromstärken geeignete Bauteile und insbesondere kleinere Bauteile verwendet werden.

Bei diesen Ausführungsbeispielen kann das Heizsystem derart gestaltet sein, dass die Messvorrichtung funktional mit einer Sensorwert-Verarbeitungsvorrichtung in Verbindung steht, die eine Vergleichsfunktion aufweist, die Temperaturwerte mit zumindest einem Vergleichswert, der einer Wahrscheinlichkeit einer Eisbildung am Schalenteil entspricht, vergleicht und einen Signalwert an eine Systemfunktion sendet, wenn der Grenzwert erreicht oder überschritten wird.

Insbesondere kann die Systemfunktion derart gestaltet sein, dass diese die Erwärmung der Heizschicht stoppt, wenn der einer Wahrscheinlichkeit einer Eisbildung am Schalenteil entsprechende Grenzwert überschritten wird.

Nach einem weiteren Aspekt der Erfindung kann die Heizvorrichtung derart gestaltet sein, dass diese verschiedene Heizstufen mit verschiedenen Wärmeleistungen erzeugen kann, und kann die Systemfunktion derart ausgeführt sein, dass das Warnsignal bei dem Vorliegen zumindest einer vorgegebenen Heizstufe, bei der die maximale Wärmeleistung erzeugt wird, und dem gleichzeitigen Überschreiten des einer Wahrscheinlichkeit einer Eisbildung am Schalenteil entsprechende Grenzwerts erzeugt wird. Das Warnsignal kann insbesondere bei dem Vorliegen der höchsten Heizstufe erzeugt werden.

Nach einem weiteren Ausführungsbeispiel der Erfindung kann eine Regelfunktion zur Regelung der Temperatur des Schalenteils vorgesehen sein, die mit der Sensorwert-Verarbeitungsvorrichtung funktional verbunden ist und von dieser die ermittelten Temperaturwerte als Eingangsgröße empfängt, wobei die Regelfunktion auf der Basis einer Soll-Temperatur Kommandosignale an die Energieversorgungs-Vorrichtung erzeugt.

Erfindungsgemäß ist weiterhin ein Strukturbauteil insbesondere eines Flugzeugs mit einem Schalenteil vorgesehen, das eine umströmte Außenfläche und einen inneren Bereich aufweist, wobei das Strukturbauteil weiterhin eine Heizschicht eines Heizsystems nach einem Ausführungsbeispiel der Erfindung aufweist. Weiterhin ist dem Strukturbauteil bzw. der Heizschicht eine Energieversorgungs-Vorrichtung, eine Messvorrichtung und eine Auswertungs-Vorrichtung zugeordnet oder in diesem bzw. dieser integriert.

Nach einem weiteren Aspekt der Erfindung ist ein Verfahren zum kontrollierten Beheizen eines Heizsystems mit zumindest einer elektrothermischen Heizschicht mit den Schritten vorgesehen:
▪ in einer Heizphase Anlegen einer Lastspannung an die Heizschicht zum Erwärmen der Heizschicht,
▪ während oder außerhalb der Heizphase Anlegen einer Messspannung an die Heizschicht, die geringer ist als die Lastspannung,
▪ Messung einer Stromstärke-Änderung, die aufgrund der Temperaturabhängigkeit des elektrischen Widerstandes des Kohlenstofffaserheizelementes bei angelegter Messspannung auftritt.

Das Heizsystem ist insbesondere nach einem erfindungsgemäßen Ausführungsbeispiel gestaltet. Bei diesem Verfahren kann eine Ermittlung der Temperatur der Heizschicht aufgrund der Stromstärke-Änderung erfolgen, aufgrund der Temperaturabhängigkeit des elektrischen Widerstandes der Kohlenstofffaserheizschicht. Alternativ oder zusätzlich kann vorgesehen sein, dass aufgrund des Widerstands der Heizschicht die Integrität der Heizschicht und/oder des Bauteils ermittelt wird.

Nach einem weiteren Aspekt der Erfindung ist vorgesehen: ein Verfahren zur Überprüfung der Integrität einer Heizschicht, die aus einem von zumindest einem Bündel oder einem Verbund oder einem Band von Rovings gebildet ist, wobei in der zumindest einen elektrothermischen Heizschicht eine elektrische Messleitung gelegen ist, die in der Heizschicht integriert ist, gekennzeichnet durch die Schritte:
- Anlegen einer Lastspannung, nach einem vorbestimmten Zeitraum nach Anlegen der Lastspannung Messung eines Laststroms in der Heizschicht als Wert für eine zu erzielende Temperatur,
- anschließend Messung eines Messstroms in der Messleitung aufgrund einer vorgegebenen an diese angelegten Messspannung als Wert für eine Ist-Temperatur,
- Vergleich des Wertes für die zu erzielenden Temperatur und des Wertes für die Ist-Temperatur und bei Abweichung der für Temperaturen stehenden Werte um einen Mindestbetrag Zuordnung eines Fehlerzustands der Heizschicht.

Bei diesem Verfahren kann insbesondere vorgesehen sein, dass als Messleitung zumindest ein Bündel oder ein Verbund oder ein Band von Rovings verwendet wird. Als Messleitung kann insbesondere eine gesonderte Messleitung verwendet werden, die zwischen Rovings gelegen ist.

Das Verfahren kann derart ausgeführt sein, dass ein erster Mindestbetrag und ein zweiter Mindestbetrag für die Ermittlung der Abweichung der für Temperaturen stehenden Werte vorgegeben sind, wobei der erste Mindestbetrag geringer ist als der zweite Mindestbetrag, und dass der Heizschicht ein erster Fehlerzustand zugeordnet wird, wenn die Abweichung der für Temperaturen stehenden Werte zwischen dem ersten und dem zweiten Mindestbetrag gelegen ist, und dass der Heizschicht ein zweiter Fehlerzustand zugeordnet wird, wenn die Abweichung der für Temperaturen stehenden Werte über dem zweiten Mindestbetrag gelegen ist. Dabei kann insbesondere aufgrund der Zuordnung des zweiten Fehlerzustands die Heizschicht als defekt angesehen werden und die jeweilige Funktion zum Anlegen der Lastspannung derart konfiguriert sein, dass diese aufgrund dieser Zuordnung nicht betätigt wird.

Erfindungsgemäß ist weiterhin ein Heizsystem mit einem Strukturbauteil mit zumindest einer elektrothermischen Heizschicht als integrales Bestandteil desselben vorgesehen, aufweisend:
▪ eine Energieversorgungs-Vorrichtung mit einer Lastspannungs-Versorgungsvorrichtung zum Anlegen einer Lastspannung zum Erwärmen der Heizschicht, wobei die Lastspannungs-Versorgungsvorrichtung mit einer elektrischen Anschlussvorrichtung an die Heizschicht angeschlossen ist,
▪ wobei in der zumindest einen elektrothermischen Heizschicht eine elektrische Messleitung gelegen ist, die in der Heizschicht integriert ist,
▪ wobei die elektrothermische Heizschicht aus zumindest einem über die elektrischen Anschlussvorrichtungen an die Energieversorgungs-Vorrichtung angeschlossenen Band von Rovings mit Kohlenstoffleitern gebildet ist, wobei die Enden jedes Rovings an jeweils eine Elektrode der elektrischen Anschlussvorrichtung angeschlossen sind, so dass jedes Roving zwischen den beiden Elektroden der elektrischen Anschlussvorrichtung verläuft und wobei das zumindest eine Band von Rovings jeweils derart angeordnet ist, dass sich dieses flächig über die Zusatz-Heizschichten verteilt,
▪ wobei die Energieversorgungs-Vorrichtung eine Lastspannungs-Versorgungsvorrichtung zum Aufbringen einer Messspannung aufweist, die über Messleitungs-Anschlüsse an die elektrische Messleitung angeschlossen ist,
▪ wobei die Messvorrichtung zur Messung einer durch die Messspannung verursachten Stromstärke in der Messleitung vorgesehen ist.
▪ wobei die Messvorrichtung funktional mit einer Kontrollvorrichtung in Verbindung steht, die zur Überprüfung der Integrität der Heizschicht eine Lastspannung anlegt, nach einem vorbestimmten Zeitraum nach Anlegen der Lastspannung einen Laststrom in der Heizschicht als Wert für eine zu erzielende Temperatur misst, anschließend einen Messstroms in der Messleitung aufgrund einer vorgegebenen an diese angelegten Messspannung als Wert für eine Ist-Temperatur erfasst, anschließend einen Vergleich des Wertes für die zu erzielenden Temperatur und des Wertes für die Ist-Temperatur und bei Abweichung der für Temperaturen stehenden Werte um einen Mindestbetrag Zuordnung eines Fehlerzustands der Heizschicht durchführt.

Nach einem weiteren Aspekt der Erfindung wird ein Verfahren zur Herstellung eines Bauteil-Halbzeugs zur Verwendung für die Herstellung eines dreidimensionalen Bauteils, auf dessen Oberfläche zumindest eine Heizschicht angeordnet ist, bereitgestellt, aufweisend die Schritte:
▪ in einem Roving-Definitionsschritt, ausgehend von einer für jede vorgesehene Heizschicht zu erzielenden flächenspezifischen Heizleistung bei einer vorgegebenen Heizspannung, Festlegung der geometrischen Anordnung und/oder des Verlaufs von zumindest einem Bündel oder einem Verbund oder einem Band von Rovingen zur Bildung einer Heizschicht mit einem minimalen Energieverbrauch,
▪ gemäß der Anordnung und des Verlaufs des zumindest einen Bündels oder Bands von Rovingen nach dem Roving-Definitionsschritt Aufbringen von elektrisch leitenden Rovingen schrittweise nebeneinander auf ein flach eingespanntes, aus einem elektrisch isolierenden Material gebildeten Trägerteil-Halbzeug und Befestigen der Rovinge auf dem Trägerteil-Halbzeug,
▪ Durchführen eines Stabilisierungsprozesses zur Stabilisierung des Halbzeugs mit den Rovingen oder dem zumindest einen Bündel oder dem zumindest einen Verbund oder dem zumindest einen Band von Rovingen.

Die Festlegung der geometrischen Anordnung und/oder des Verlaufs von zumindest einem Bündel oder einem Verbund oder einem Band von Rovings zur Bildung einer Heizschicht kann dabei ausgehend von einem vorgegebenen geometrischen Randverlauf für die Heizschicht erfolgen.

Weiterhin kann vorgesehen sein, dass die Festlegung der geometrischen Anordnung und/oder des Verlaufs des zumindest einen Bündels oder einen Verbunds oder eines Bands von Rovingen zur Bildung einer Heizschicht ausgehend einer vorgegebenen Gruppe von Anordnungen und/oder Verläufen der Rovings innerhalb des vorgegebenen geometrischen Randverlaufs ausgewählt wird. Dabei kann vorgesehen sein, dass zu der vorgegebenen Gruppe von Verläufen der Rovings ein serpentinenförmiger und/oder kreisförmiger Verlauf der Rovings in der Heizschicht gehört.

Bei diesem Verfahren kann weiterhin die geometrische Anordnung und/oder der Verlauf des zumindest einen Bündels oder einen Verbunds oder einen Bands von Rovingen zur Bildung einer Heizschicht vorgegeben sein und ausgehend von dieser Vorgabe die Anzahl der Rovinge und/oder Größe der Rovinge und/oder der Abstand zwischen Rovings ermittelt werden.

Das Befestigen der Rovinge auf dem Trägerteil-Halbzeug kann insbesondere durch ein Näh- oder Stickverfahren oder ein Klebeverfahren auf dem Trägerteil-Halbzeug erfolgen.

Der Stabilisierungsprozess kann insbesondere einen Binderprozess beinhalten. Dabei kann insbesondere vorgesehen sein, dass die Rovinge durch ein Näh- oder Stickverfahren auf dem Trägerteil-Halbzeug befestigt werden.

Das Befestigen der Rovinge kann insbesondere durch ein Näh- und/oder Stickverfahren auf dem Trägerteil-Halbzeug und dabei insbesondere einzeln oder auch gruppenweise erfolgen. D.h. es kann vorgesehen sein, dass jeder Roving einzeln durch ein Stickverfahren auf dem Trägerteil-Halbzeug befestigt wird und/oder dass mehrere Rovinge zusammen durch ein Stickverfahren auf dem Trägerteil-Halbzeug befestigt werden. Bei der gruppenweisen Befestigung der Rovinge ist insbesondere vorgesehen, dass Guppen von bis zu drei Rovingen zusammen befestigt werden, bevor anschließend ein oder mehrere Rovinge aufgelegt und befestigt wird bzw. werden. Bei der einzelnen Befestigung der Rovinge auf dem Trägerteil-Halbzeug kann zusätzlich vorgesehen sein, dass Gruppen von Rovingen durch ein Stickverfahren auf dem Trägerteil-Halbzeug befestigt werden.

Alternativ oder zusätzlich kann vorgesehen sein, dass die Rovinge durch ein Klebeverfahren auf dem Trägerteil-Halbzeug befestigt werden.

Die auf dem Trägerteil-Halbzeug aufzubringenden Rovinge können aus trockenem Material und/oder aus Prepreg-Material gebildet sein. Für die Durchführung eines Klebeverfahrens zur Befestigung der Rovinge auf dem Trägerteil-Halbzeug kann Harz von Prepreg-Rovingen verwendet werden, sofern für die Rovinge Prepreg-Material verwendet wird.

Durch das erfindungsgemäße Herstellungsverfahren mit einem Befestigen der Rovinge durch ein Stickverfahren auf dem Trägerteil-Halbzeug ist insbesondere möglich, dass die Rovinge über die Fläche des Trägerteil-Halbzeugs derart verteilt werden, dass jeder Roving in der Dickenrichtung des Trägerteil-Halbzeugs oder der zu bildenden Heizschicht gesehen auf derselben Ablageebene verläuft. Es werden also dabei keine Überlagerungen der einzelnen Rovinge oder Überlagerungen von Abschnitten desselben Rovings in der genannten Dickenrichtung zugelassen. Die Befestigung der Rovinge auf dem Trägerteil kann schrittweise für jeden einzelnen Roving erfolgen, so dass nach dem Feststicken eines Rovings auf dem Trägerteil der nächste Roving auf das Trägerteil aufgelegt wird.

Dieses Verfahren kann im einzelnen Anwendungsfall aufwendig sein, jedoch hat die sich aus diesem Verfahren ergebende Anordnung von Rovingen auf dem Trägerteil-Halbzeug den Vorteil, dass z.B. die Anordnung, der Verlauf, die Dicke, die Beschaffenheit und/oder die Anzahl der Rovinge nach vorgebbaren Optimierungskriterien optimierbar ist oder sind. Weiterhin sind zeitlich veränderliche Heizströme mit phasenweise hohen Spitzen in der Heizschicht möglich, da die in der erfindungsgemäßen Heizschicht lokal auftretenden Temperaturen kontrollierbar und insbesondere regelbar sind. Die Kombination der Optimierbarkeit der Roving-Struktur auf dem Trägerteilhalbzeug bzw. an der Heizschicht mit der Kontrollierbarkeit oder Regelbarkeit der in der Heizschicht auftretenden Temperaturen macht einen besonders effektiven Einsatz in bestimmten Anwendungsfällen möglich, in denen mit möglichst einfach gebauten und leichten Strukturen und Materialien kurzzeitig hohe Heizleistungen möglich sind. Ein bevorzugter Anwendungsfall sind demgemäß Bauteile von Flugzeugen insbesondere von Oberflächen von der Umgebungsluft umströmten aerodynamischen Körpern. Die erfindungsgemäße Lösung erlaubt eine sichere und zeitlich beständige Integration einer Heizschicht in eine Bauteil und insbesondere ein Schalenteil eines aerodynamischen Körpers eines Flugzeugs. Weiterhin sind die Effekte einer Erhitzung der erfindungsgemäß hergestellten Heizschicht auf das Bauteil, auf das die Heizschicht angeordnet ist, auf sehr einfache Weise kontrollierbar.

Nach einem Ausführungsbeispiel des erfindungsgemäßen Verfahrens kann weiterhin vorgesehen sein, dass das Auflegen und Befestigen der Rovinge auf das Trägerteil-Halbzeug derart erfolgt, dass die Rovinge ein Band aus einer Lage von nebeneinander liegenden Rovingen bilden. Dabei können die Rovinge derart aufgelegt werden, dass diese parallel zueinander und abschnittsweise serpentinenförmig verlaufen.

Nach einem weiteren Ausführungsbeispiel des erfindungsgemäßen Verfahrens kann vorgesehen sein, dass nach dem Befestigen der Rovinge auf dem Trägerteil dieses mit den darauf befestigten Rovingen auf ein Werkzeug mit einer dreidimensionalen Auflageflächen-Kontur aufgelegt wird.

Bei einer Weiterführung des erfindungsgemäßen Verfahrens ist vorgesehen, dass in dem Heizschicht-Definitionsschritt ausgehend von einer Definition von zumindest einer Heizschicht auf dem herzustellenden Bauteil die für jede vorgesehene Heizschicht zu erzielende flächenspezifische Heizleistung bei einer vorgegebenen Spannung ermittelt wird.

Alternativ oder zusätzlich kann bei dem erfindungsgemäßen Verfahren vorgesehen sein, dass nach dem Heizschicht-Definitionsschritt in einem Roving-Definitionsschritt für eine flächenspezifische Heizleistung die Anzahl der Rovinge für die jeweilige Heizschicht minimiert wird.

Erfindungsgemäß kann vorgesehen sein, dass nach dem Heizschicht-Definitionsschritt in einem Roving-Definitionsschritt für eine flächenspezifische Heizleistung die Anzahl der Bündel oder Bänder von Rovingen für die jeweilige Heizschicht minimiert wird.

Nach dem erfindungsgemäßen Verfahren kann auch vorgesehen sein, dass vor dem Auflegen der Trägerteil-Halbzeugs auf ein Werkzeug mit einer dreidimensionalen Auflageflächen-Kontur eine Kontaktierung von Endabschnitten der Rovinge oder des zumindest einen Bündels oder Bands von Rovingen durch Verbindung eines metallischen Kontaktkörpers mit den Endabschnitten der Rovinge oder des zumindest einen Bündels oder Bands von Rovingen mittels elektrisch leitfähigen Klebstoffs erfolgt. Der Klebstoff kann insbesondere ein Metall enthaltender Klebstoff sein.

Bei dem erfindungsgemäßen Verfahren können die Rovinge oder die Bündel von Rovingen oder das zumindest eine Band von Rovingen aus elektrisch leitenden metallischen und nichtmetallischen Fasern gebildet sein.

Nach einem weiteren Ausführungsbeispiel des erfindungsgemäßen Verfahrens kann vorgesehen sein, dass zwischen elektrisch leitenden Rovingen des zumindest einen Bündels oder Verbunds oder Bands von Rovingen Rovinge aus Glas abgelegt werden, um elektrisch leitende Rovinge voneinander elektrisch zu isolieren.

Nach einem weiteren Ausführungsbeispiel des erfindungsgemäßen Verfahrens kann vorgesehen sein, dass zwischen elektrisch leitenden Rovingen oder des zumindest einen Bündels oder Verbunds oder Bands von Rovingen ein Glasgewebe abgelegt wird, um zwei Schichten von Rovings voneinander elektrisch zu isolieren. Erfindungsgemäß ist weiterhin ein Verfahren zur Herstellung eines Bauteils mit einer Anordnung von zumindest einer Heizschicht vorgesehen, bei dem die Herstellung eines Bauteil-Halbzeugs nach einem Ausführungsbeispiel des Verfahrens zur Herstellung eines Bauteil-Halbzeugs zur Verwendung für die Herstellung eines dreidimensionalen Bauteils erfolgt. Dabei ist vorgesehen, dass das Bauteil-Halbzeug mittels eines Harzinfusions- oder Harzinjektions-Verfahrens hergestellt wird. Alternativ oder zusätzlich können zur Herstellung des Bauteil-Halbzeugs Prepreg-Halbzeuge verwendet werden, so dass das Bauteil-Halbzeug in einem Prepreg-Herstellungsverfahren hergestellt wird. Dabei kann insbesondere für das Trägerteil-Halbzeug und/oder das Material für die Isolationsschicht und/oder das Material für die Rovinge Prepreg-Material verwendet werden.

Dabei kann weiterhin vorgesehen sein, dass das gehärtete Bauteil spanend nachbearbeitet wird. Alternativ oder zusätzlich kann vorgesehen sein, dass ein Anschließen einer Energieversorgungs-Vorrichtung und eine Funktionsprüfung der Heizschicht-Anordnung mittels eines Thermographie-Verfahrens vorgenommen werden.

Erfindungsgemäß ist weiterhin ein Bauteil mit zumindest einer elektrothermischen Heizschicht vorgesehen, wobei die zumindest eine elektrothermische Zusatz-Heizschicht aufweist: eine Mehrzahl von Rovingen, die mit elektrischen Leitern gebildet ist, wobei die Mehrzahl von Rovingen derart angeordnet ist, dass sich die Mehrzahl von Rovingen flächig über die Heizschicht verteilt, und elektrische Anschlussvorrichtungen zum Anschluss der Heizschicht an eine Energieversorgungs-Vorrichtung. Die Mehrzahl von Rovingen kann dabei insbesondere zumindest ein Band von Rovingen bilden, wobei das zumindest eine Band von Rovingen derart angeordnet ist, dass sich dieses flächig über die Heizschicht verteilt. Die elektrischen Leiter der Rovinge können Kohlenstoffleiter sein oder aus diesen gebildet sein, wobei das zumindest eine Band von Rovingen derart angeordnet ist, dass sich dieses in einer Lage flächig über die Heizschicht verteilt. Insbesondere kann der zumindest eine Roving aus Kohlenstoff-Filamenten gebildet sein, die in den Rovingen parallel zueinander und zumindest abschnittsweise in Längsrichtung der Rovinge verlaufen. Die Rovinge können mäanderförmig innerhalb der zumindest einen elektrothermischen Heizschicht verlaufen.

Weiterhin kann die elektrothermische Heizschicht aus, in ihrer Dickenrichtung gesehen, einer Lage zumindest eines Bandes von Rovingen gebildet sein.

Alternativ oder zusätzlich kann die elektrothermische Heizschicht aus metallischen Leitern gebildet sein.

Nach einem weiteren Aspekt der Erfindung wird ein Pyrometer zur Messung der Temperatur an einem Bereich des Strukturbauteils verwendet. Dabei ist insbesondere ein Strukturbauteil eines Flugzeugs mit einer Temperatur-Messvorrichtung zur Ermittlung der Temperatur eines Bereichs des Strukturbauteils vorgesehen, wobei das Strukturbauteil ein Schalenteil mit einer umströmten Außenfläche und einem inneren Bereich und ein Trägerbauteil aufweist. Die Temperatur-Messvorrichtung weist insbesondere auf:
▪ ein an einem Trägerbauteil des Strukturbauteils angeordnetes Pyrometer, das auf einen Bereich an der dem Pyrometer zugewandten Oberfläche des Schalenteils gerichtet ist, und einen Strahlungssensor zur Erzeugung von Sensorwerten aufgrund der Wärmestrahlung aufweist,
▪ eine Sensorwert-Verarbeitungsvorrichtung, die aus den von dem Strahlungssensor erfassten Sensorwerten Temperaturwerte ermittelt.

Dabei kann die Sensorwert-Verarbeitungsvorrichtung eine Vergleichsfunktion aufweisen, die Temperaturwerte mit zumindest einem Vergleichswert, der einer Wahrscheinlichkeit einer Eisbildung am Schalenteil entspricht, vergleicht und einen Signalwert an eine Systemfunktion sendet, wenn der Grenzwert erreicht oder überschritten wird.

Nach einem weiteren Ausführungsbeispiel der Erfindung kann vorgesehen sein, dass am Schalenteil eine Heizvorrichtung zur Verhinderung einer Eisbildung an dem Schalenteil angeordnet ist und die Systemfunktion derart gestaltet ist, dass diese die Heizvorrichtung einschaltet, wenn der einer Wahrscheinlichkeit einer Eisbildung am Schalenteil entsprechende Grenzwert überschritten wird. Dabei kann die Heizvorrichtung derart gestaltet sein, dass diese verschiedene Heizstufen erzeugen kann, und die Systemfunktion derart ausgeführt ist, dass das Warnsignal bei dem Vorliegen der höchsten Heizstufe, bei der die maximale Wärmeleistung erzeugt wird, und dem gleichzeitigen Überschreiten des einer Wahrscheinlichkeit einer Eisbildung am Schalenteil entsprechende Grenzwerts erzeugt wird.

Die erfindungsgemäße Kombination aus einem Strukturbauteil und einer Temperatur-Messvorrichtung kann derart gestaltet sein, dass an einer Oberfläche des Schalenteils zumindest eine Heizschicht angeordnet ist, die durch eine Energieversorgungs-Vorrichtung zur Verhinderung von Eisbildung erwärmt werden kann.

Der Temperatur-Messvorrichtung kann eine Regelfunktion zur Regelung der Temperatur des von dem Pyrometer erfassten Bereichs des Schalenteils zugeordnet sein, die mit der Sensorwert-Verarbeitungsvorrichtung funktional verbunden ist und von dieser die Temperaturwerte als Eingangsgröße empfängt, die aus Sensorwerten des Pyrometers ermittelt wurden, wobei die Regelfunktion auf der Basis einer Soll-Temperatur des von dem Pyrometer erfassten Bereichs des Schalenteils Kommandosignale an die Energieversorgungs-Vorrichtung erzeugt.

Erfindungsgemäß kann das Pyrometer derart an dem Träger-Bauteil angebracht sein, dass die Lage und/oder die Position des Pyrometers einstellbar ist.

Vorteile bei dem Einsatz eines Pyrometers ergeben sich insbesondere dadurch, dass die Messung in sehr kurzer Zeit, und zwar typischerweise in einem Zeitraum zwischen 1 ms und 10 µs erfolgen kann. Dadurch kann die Auswertung in einer Auswertungsvorrichtung und insbesondere eine Regelung der Temperatur mit einer Enteisungsvorrichtung in kurzer Zeit und sogar innerhalb derselben Iterationsrate erfolgen. Die Fehlerrate der Messvorrichtung mit dem Pyrometer weist keinen Verschleiß auf, so dass diese mit einer geringen Fehlerrate versehen ist. Auch ist mit der erfindungsgemäßen Verwendung eines Pyrometers eine ausreichende Genauigkeit der Messung verbunden, da mit dem Pyrometer keine Temperatur-Beeinflussung des Messobjekts gegebene ist und sich keine Fehler durch mangelhaften Wärmekontakt eines Sensors mit dem Bauteil, an dem die Messung vorzunehmen ist, ergeben. Insbesondere kann auch eine Messung mit dem Pyrometer auch bei dem Auftreten elektromagnetischer Felder an einer Oberfläche des Bauteils erfolgen.

Zur direkten Erfassung von Temperaturen an Bereichen von Bauteilen und insbesondere Schalenbauteilen könnten in das Bauteil bzw. das Schalenbauteil integrierte Thermoelemente verwendet werden. Demgegenüber hat der Einsatz eines Pyrometers zur Temperaturerfassung an Enteisungsstrukturen für Luftfahrtbauteile den Vorteil, dass dieses als zusätzliche Komponente in eine optimierte Bauteil-Struktur eingebaut werden kann, ohne das Schalenbauteils des jeweiligen Bauteils modifizieren zu müssen. Demgegenüber ist durch die Verwendung von in das Bauteil bzw. das Schalenbauteil integrierten Thermoelementen eine aufwendigere Fertigung der Bauteilstruktur erforderlich. Auch würde eine Integration eines traditionellen Thermoelementes zu Aufdickungen des Schalenbauteils führen, was an umströmten Luftfahrtteilen ungünstig wäre. Weiterhin ist die Verbindungstechnik, mit der ein Thermoelement in ein Schalenbauteil zu integrieren ist, wegen einer unsicheren Lebensdauer der Verbindung an Flugzeug-Bauteilen problematisch. Weiterhin ist die thermische Ankopplung an die Heizstruktur kompliziert und aufwendig und nur mit technischen Einschränkungen mit Folgen bei der Erfassung von Temperaturen möglich. Das Thermoelement wäre zu träge, um eine hohe Aufheizrate bei der Aktivierung einer Enteisung an einem Flugzeug-Bauteil mit vollziehen und erfassen zu können.

Bei einem Einbau eines Pyrometers in ein Strukturbauteil eines Flugzeugs kann durch einen geeigneten Abstand und einer Optik eine Fläche definiert werden, in der das Pyrometer "integral" die Temperatur erfassen kann. Mit einem in ein Schalenbauteil integrierten Thermoelement kann die Temperatur nur lokal auf einer sehr kleinen Fläche am Heizelement erfasst werden.

Der Austausch des Pyrometers im Schadensfall ist unproblematisch und vor allem im Vergleich zu der Verwendung eines in einem Schalenbauteil integrierten Thermoelements vorteilhaft, da das Pyrometer im Falle eines Defekts austauschbar ist. Im Gegensatz dazu müsste bei einem in die Heizstruktur integrierten Thermoelement das gesamte Schalenbauteil erneuert werden.

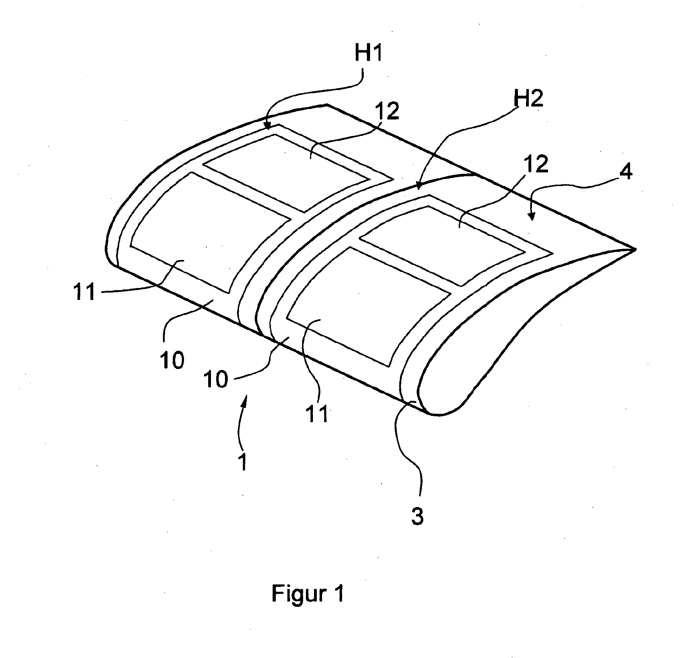

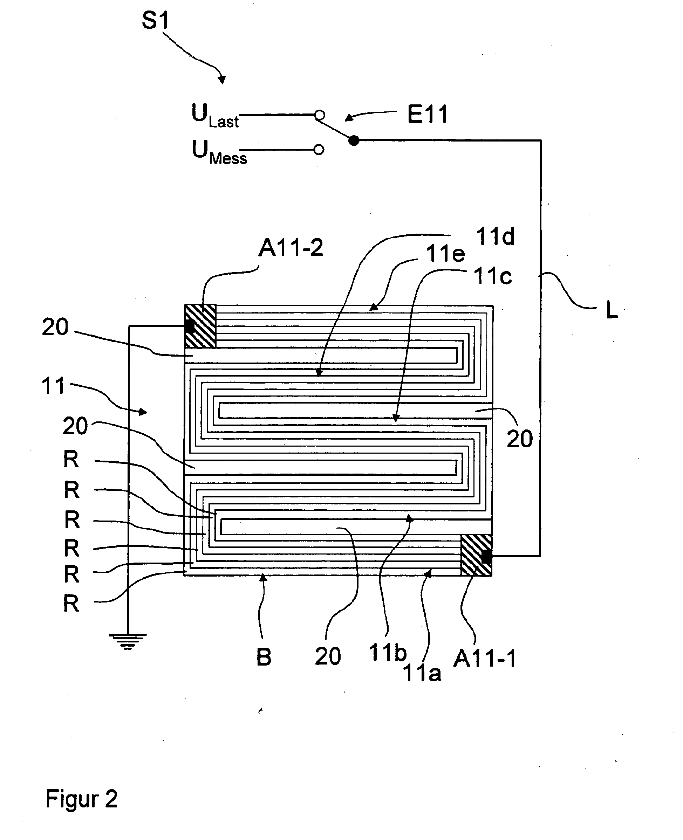

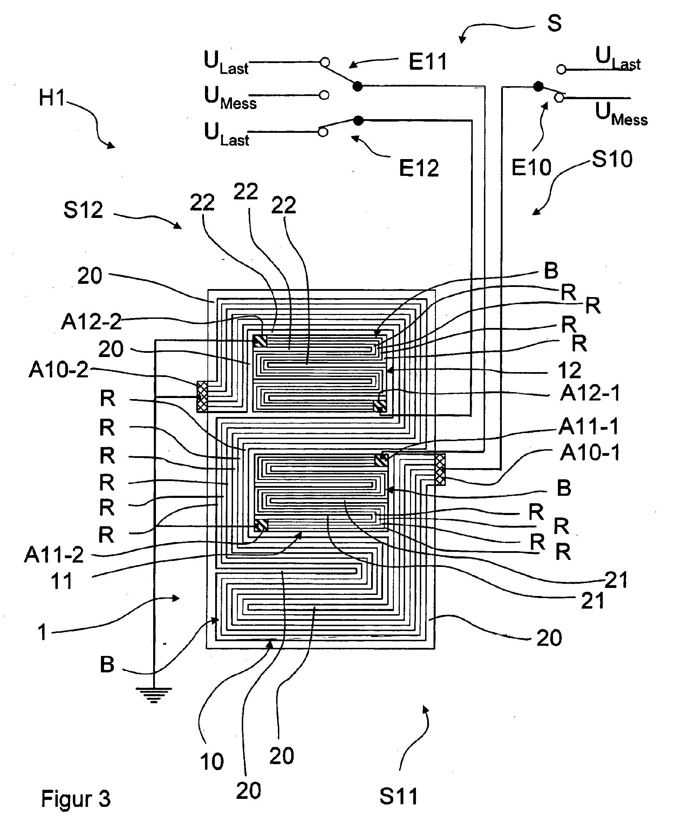

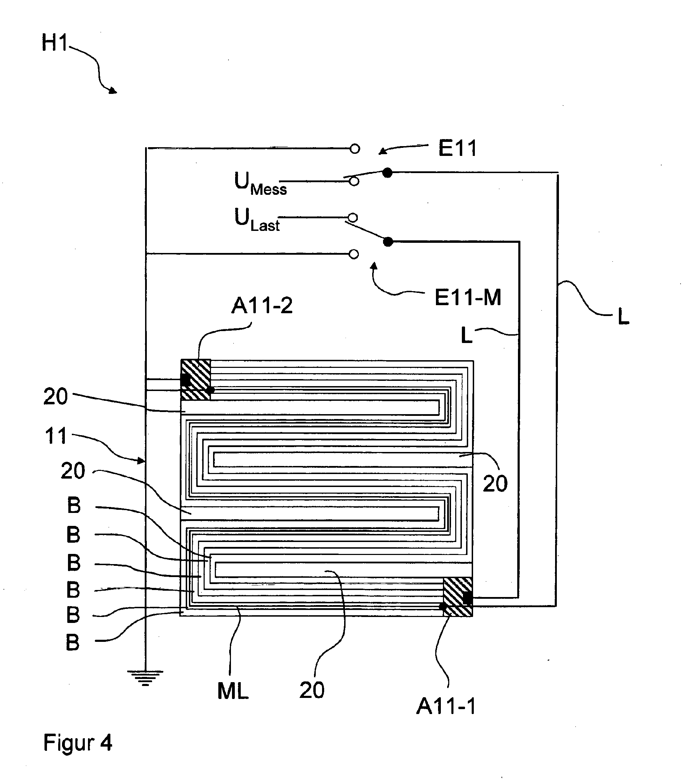

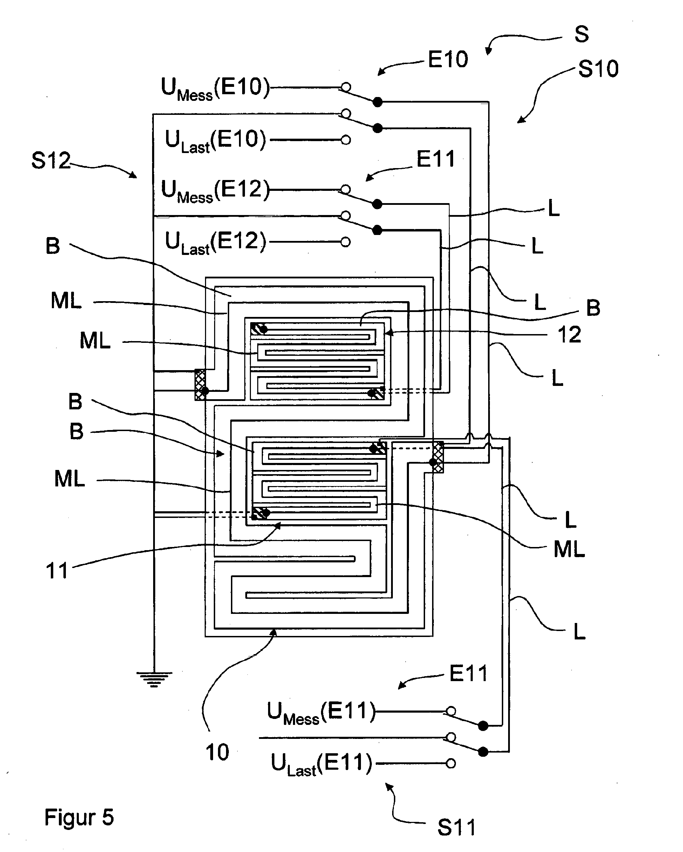

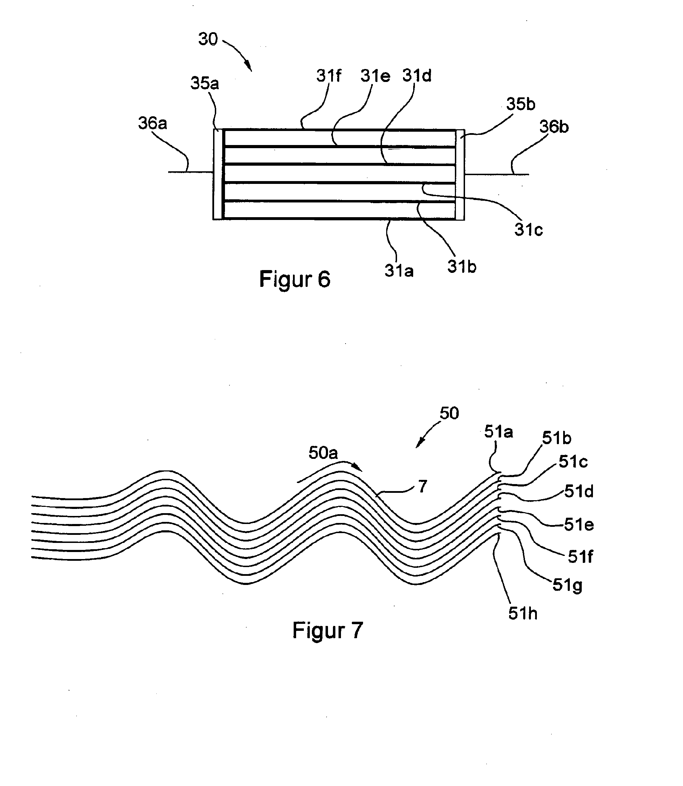

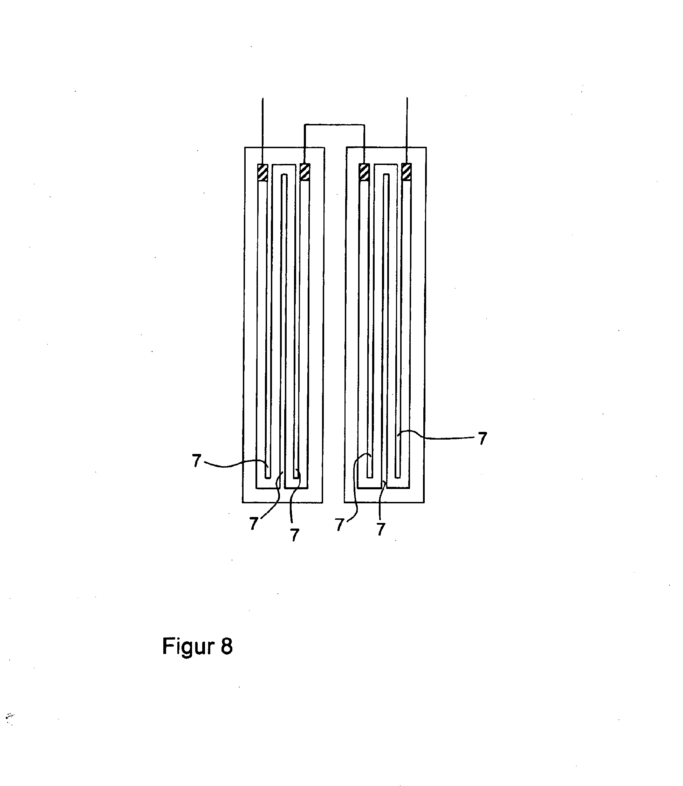

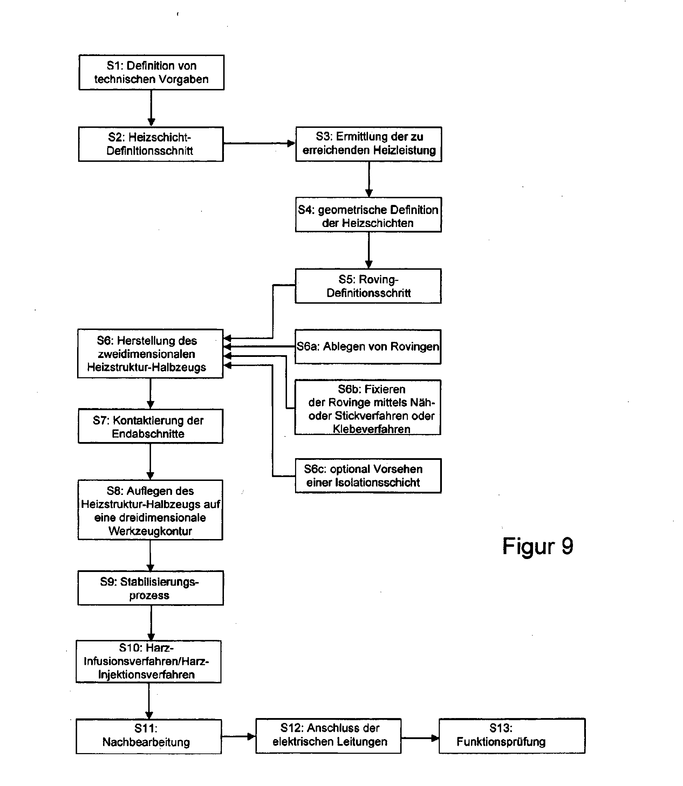

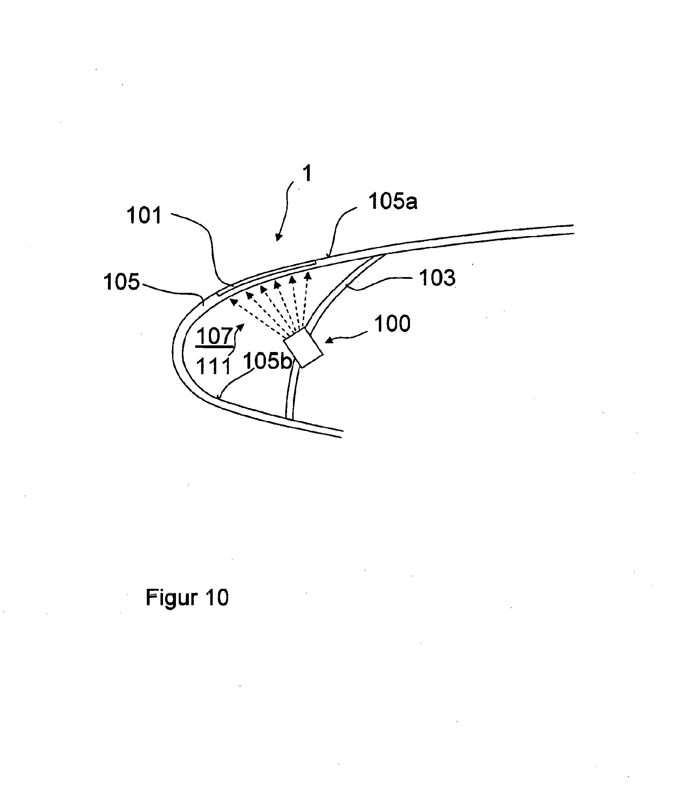

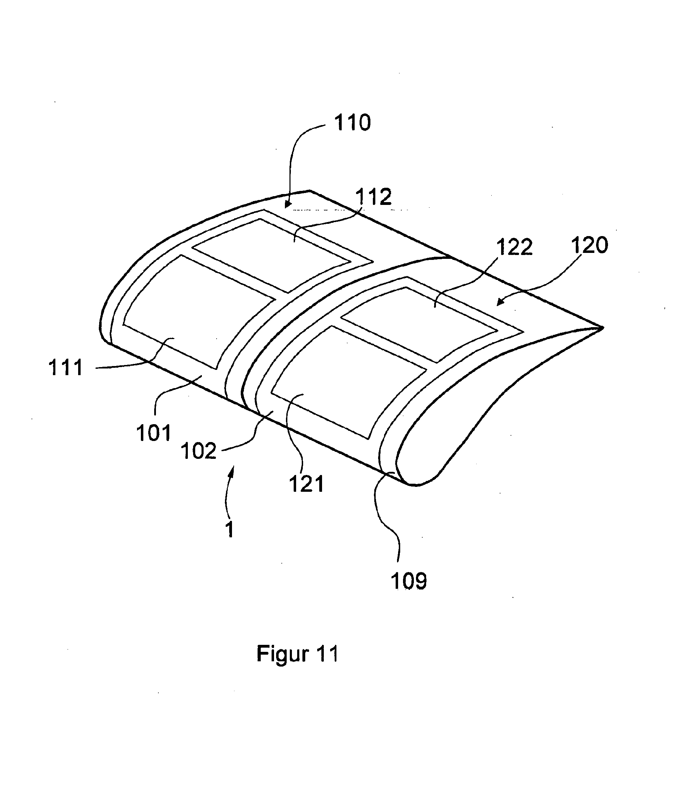

Im Folgenden werden Ausführungsbeispiele der Erfindung an Hand der beigefügten Figuren beschrieben, die zeigen:
▪ Figur 1 eine perspektivische Darstellung einer Vorderkantenklappe mit zwei Heizschichten eines Heizsystems nach der Erfindung,
▪ Figur 2 eine schematische Darstellung eines Ausführungsbeispiels eines erfindungsgemäßen Heizsystems mit einer aus Kohlenstoff-Rovings gebildeten Heizschicht mit einer Energieversorgungs-Vorrichtung, die zur Überwachung der Heizschicht verwendet werden kann,
▪ Figur 3 eine schematische Darstellung eines Ausführungsbeispiels eines erfindungsgemäßen Heizsystems mit drei aus Kohlenstoff-Rovings gebildeten Heizschichten mit einer Energieversorgungs-Vorrichtung, die zur Überwachung der Heizschicht verwendet werden kann,
▪ Figur 4 eine schematische Darstellung eines Ausführungsbeispiels eines erfindungsgemäßen Heizsystems mit einer aus Kohlenstoff-Rovings gebildeten Heizschicht mit einer Energieversorgungs-Vorrichtung, die zur Überwachung der Heizschicht verwendet werden kann, wobei in die Heizschicht ein elektrischer Leiter integriert ist, dessen Widerstand zur Ermittlung der Zustands der Heizschicht verwendet wird,
▪ Figur 5 eine schematische Darstellung eines Ausführungsbeispiels eines erfindungsgemäßen Heizsystems mit drei aus Kohlenstoff-Rovings gebildeten Heizschichten mit einer Energieversorgungs-Vorrichtung, die eine Lastspannungs-Versorgungsvorrichtung und Messspannungs-Versorgungsvorrichtungen zur Überwachung der Heizschichten aufweist, wobei in die Heizschichten ein elektrischer Leiter integriert ist, dessen Widerstand zur Ermittlung des Zustands der Heizschicht verwendet wird,
▪ Figur 6 ein Ausführungsbeispiel einer Anordnung von Rovings zur Bildung einer Heizschicht für das erfindungsgemäße Heizsystem,
▪ Figur 7 ein weiteres Ausführungsbeispiel einer Anordnung von Rovings zur Bildung einer Heizschicht für das erfindungsgemäße Heizsystem,
▪ Figur 8 ein weiteres Ausführungsbeispiel einer Anordnung von Rovings zur Bildung einer Heizschicht für das erfindungsgemäße Heizsystem,
▪ Figur 9 ein Flussdiagramm mit erfindungsgemäßen Verfahrensschritten, wobei einige der dargestellten Verfahrensschritte als optional anzusehen sind,
▪ Figur 10 eine schematische Schnittdarstellung eines Ausführungsbeispiels der Erfindung mit einer Vorderkanten-Klappe eines Flugzeugs, die ein Schalenteil und einen inneren Bereich aufweist, in dem ein Pyrometer zu Erfassung der Temperatur des Schalenteils angeordnet ist;
▪ Figur 11 einen Abschnitt einer Vorderkantenklappe eines Flugzeugs, in den zwei Heizungs-Zusatzkörper integriert sind.

Erfindungsgemäß ist ein Heizsystem mit zumindest einer elektrothermischen Heizschicht vorgesehen, die insbesondere aus Kohlenstofffasern gebildet ist und auf einem Bauteil 1 angeordnet ist. Das Heizsystem weist weiterhin auf:
▪ eine Energieversorgungs-Vorrichtung mit einer Lastspannungs-Versorgungsvorrichtung zum Anlegen einer Lastspannung zum Erwärmen der Heizschicht, wobei die Lastspannungs-Versorgungsvorrichtung mit einer elektrischen Anschlussvorrichtung an die Heizschicht angeschlossen ist,
▪ eine Messvorrichtung zur Messung einer Stromstärke, wenn die Lastspannung aufgebracht wird, und
▪ eine Auswertungs-Vorrichtung zur Ermittlung des elektrischen Widerstands der Heizschicht aufgrund der gemessenen Stromstärke.

Insbesondere kann vorgesehen sein, dass basierend auf der Ermittlung des elektrischen Widerstands die bei diesem Widerstand auftretende Temperatur ermittelt wird.

Bei der Verwendung einer elektrothermischen Heizschicht wird erfindungsgemäß durch Messen der Stromstärke in der Heizschicht oder in einer elektrischen Zuleitung an die Heizschicht mit Hilfe der in demselben Zeitabschnitt an die Heizschicht angelegten Spannung und des Ohmschen Gesetzes der elektrische Widerstand ermittelt. Das erfindungsgemäße Heizsystem 1 ist aus zumindest einer elektrothermischen Heizschicht gebildet, die zur Anordnung auf ein Strukturbauteil vorgesehen ist. Mit der Anordnung der Heizschicht auf das Strukturbauteil kann dieses erwärmt werden, um die Umgebungsluft oder das Bauteil selbst zu erwärmen. Zum Messen der Stromstärke ist eine Messvorrichtung und zur Ermittlung des elektrischen Widerstands eine Auswertungs-Vorrichtung vorgesehen, die mit der Messvorrichtung funktional verbunden ist. Die Auswertungs-Vorrichtung kann zur Ermittlung des elektrischen Widerstands Eichtabellen aufweisen, die spezielle Eigenschaften des jeweiligen Bauteils 1, die z. B. zu Nichtlinearitätseffekten führen, berücksichtigen.

Je nach dem Anwendungsfall, wird die ermittelte Stromstärke zu verschiedenen Zwecken verwendet. Zum einen kann aus der ermittelten Stromstärke die jeweils in der Heizschicht und somit an dem Bauteil 1 vorliegenden Temperatur ermittelt werden. Dazu wird der Effekt ausgenutzt, dass sich der elektrische Widerstand der Kohlenstofffaserheizschicht mit der Temperatur ändert. In einem Ausführungsbeispiel der Erfindung weist die Auswertungs-Vorrichtung eine Funktion auf, mit der aufgrund des Widerstands der Heizschicht die Ermittlung der Temperatur der Heizschicht ermittelt wird. Hierzu können in der Auswertungs-Vorrichtung eine Korrelationstabelle oder eine Korrelationsfunktion implementiert sein, mit der die Auswertungs-Vorrichtung für das jeweilige Bauteil aus der ermittelten Stromstärke die Temperatur ermittelt. Alternativ oder zusätzlich kann die Auswertungs-Vorrichtung eine Funktion aufweisen, mit der aufgrund des Widerstands der Heizschicht die Integrität der Heizschicht ermittelt wird, da bei einem Abfallen der Stromstärke über einen vorbestimmten Grenzwert davon ausgegangen werden kann, dass die elektrothermische Schicht einen Defekt im elektrisch leitenden Bereich hat und somit auch als Teil des Bauteils einen Schaden aufweist. Die Auswertungs-Vorrichtung kann zu diesem Zweck eine Vergleichsfunktion aufweisen, die eine ermittelte oder die jeweils ermittelte Stromstärke mit einem vorgegebenen Grenzwert für eine Differenz der jeweils ermittelten Stromstärke mit einem bei einer jeweils anliegenden Spannung gespeicherten Soll-Stromstärkewert vergleicht. Die Auswertungs-Vorrichtung kann weiterhin eine Funktion aufweisen, die bei einem Überschreiten dieses Grenzwerts der jeweiligen Heizschicht den Status Defekt zuordnet. Weiterhin kann diese Funktion derart gestaltet sein, dass diese ein Warnsignal erzeugt und an eine andere Funktion zur Verwendung dieses Warnsignals ausgibt.

In einer Weiterführung der Erfindung weist die Energieversorgungs-Vorrichtung 21 des Heizsystems 1 eine Messspannungs-Versorgungsvorrichtung zum Aufbringen einer Messspannung auf, die geringer ist als die Spannung zum Erwärmen der Heizschicht. Beispielartig sind in der Figur 2 ein Ausführungsbeispiel eines Heizsystems S11 mit einer Heizschicht 11 zur Anwendung für ein erfindungsgemäßes Heizsystem und in der Figur 3 eine Kombination von drei Heizsystemen S10, S11, S12 mit insgesamt drei Heizschichten 10, 11, 12 zur Anwendung für ein erfindungsgemäßes Heizsystem dargestellt. Die Heizschicht 11 nach der Figur 2 hat eine Form, mit der die Heizschicht für eine Kombination von Heizschichten nach der Figur 3 verwendet und in diese integriert werden kann.

Bei diesen Ausführungsformen der dabei verwendeten Heizschichten sind die Heizschichten jeweils aus einer Mehrzahl von nebeneinander und ein Band B ausbildenden Rovingen R gebildet, die mäanderförmig verlaufen. Zu diesem Zweck sind parallel zueinander und nebeneinander verlaufende Abschnitte der Heizschichten 10, 11, 12 durch Isolationsvorrichtungen 20, 21 bzw. 22 aus elektrisch nicht-leitendem Material voneinander elektrisch isoliert. Mäanderförmig bezeichnet einen Verlauf von Rovingen R bzw. des Bandes B von Rovingen R, bei denen Längsabschnitte desselben Bandes B bzw. derselben Rovinge R in Bezug auf die Koordinaten zur Beschreibung der flächigen Erstreckung der elektrisch isolierenden Schicht, auf der die Rovinge R abgelegt werden, in einander entgegen gesetzten Richtungen verlaufen, so dass zwischen diesen Längsabschnitten Krümmungsabschnitte vorgesehen ist, wobei in Längsrichtung der Rovinge R oder des Bandes B aufeinander folgende Krümmungsabschnitte zueinander entgegen gesetzte Krümmungen haben. Mit anderen Worten: "Mäanderförmig" heißt in diesem Zusammenhang, dass Längsabschnitte ein und desselben Rovings nebeneinander und parallel zueinander abgelegt sind, wobei jeweils nebeneinander liegende Längsabschnitte in der Längserstreckung des Rovings hintereinander liegende Längabschnitte sind, so dass sich ein mäanderförmiger oder serpentinenförmiger Verlauf des Rovings ergibt.

Nach einer Ausführungsform der Erfindung erfolgt eine Temperatur-Ermittlung und eine Ermittlung der Integrität der Heizschicht durch permanente Messung des Laststroms der einen Lastwiderstand darstellenden Heizschicht. Bei einer Temperaturerhöhung der Heizschicht aufgrund des Stromflusses durch den Lastwiderstand steigt der Laststrom an, da der elektrische Gesamtwidersand der Heizschicht kleiner wird. Dies führt zu einem progressiven Temperaturanstieg der Heizschicht. Zur Detektion der Integrität der Heizschicht oder von Strukturschäden zum Zwecke eines Structural Health Monitoring erfolgt die Messung des Gesamtwiderstands der Heizschicht, der sich erhöht, wenn die Struktur der Heizschicht schadhaft ist, da dann der Querschnitt derselben lokal geringer ist.

Das Messen der Temperatur der Heizschicht und der Integrität der Heizschicht kann alternativ oder zusätzlich durch Anlegen einer Messspannung oder mittels einer in der Heizschicht integrierten Messleitung ML erfolgen (Figuren 4 und 5).

Bei der Ausführungsform der Figur 2 ist eine Energieversorgungs-Vorrichtung E11 mit einer Messspannungs-Versorgungsvorrichtung zur Erzeugung der Messspannung U_{Mess} und einer Lastspannungs-Versorgungsvorrichtung zur Erzeugung der Lastspannung U_{Last} vorgesehen, die mit zwei elektrischen Anschlussvorrichtungen A11-1, A11-2 an die Heizschicht angeschlossen ist. In analoger Weise sind bei der Ausführungsform der Figur 3 zur Versorgung von drei Heizschichten drei Energieversorgungs-Vorrichtungen E10, E11, E12 jeweils mit einer Messspannungs-Versorgungsvorrichtung zur Erzeugung der Messspannung U_{Mess} und einer Lastspannungs-Versorgungsvorrichtung zur Erzeugung der Lastspannung U_{Last} vorgesehen, die jeweils mit zwei elektrischen Anschlussvorrichtungen A10-1, A10-2; A11-1, A11-2; A12-1, A12-2 an die Heizschichten 10, 11, 12 angeschlossen sind.

Bei einem Ausführungsbeispiel des Heizsystems 1 weist dieses weiterhin auf: eine mit der Lastspannungs-Versorgungsvorrichtung und der Messspannungs-Versorgungsvorrichtung gekoppelte Ansteuerungsvorrichtung, die diese zur Aufbringung der Lastspannung und der Messspannung ansteuert, und die eine Ansteuerungsfunktion aufweist, mit der die Lastspannung auf Null gefahren, d.h. zumindest auf einen bei dem erfindungsgemäßen Messverfahren vernachlässigbaren geringen Wert gefahren wird und anschließend die Messspannung angelegt wird. Die Messvorrichtung ist dabei insbesondere zur Messung eines durch die Messspannung verursachten Widerstand vorgesehen. Die Zeitpunkte des Anlegens der Lastspannung und der Messspannung können insbesondere nach einer konstanten Frequenz vorgesehen sein.

In einem Anwendungsfall kann das Strukturbauteil, auf dem die Heizschichten des erfindungsgemäßen Heizsystems angeordnet werden, das Bauteil eines Flugzeugs sein, so dass das erfindungsgemäße Heizsystem bzw. die Heizschicht insbesondere eine Vereisung der Oberfläche des Strukturbauteils reduzieren oder verhindern kann. Das Strukturbauteil kann insbesondere ein von der Luftströmung umströmter aerodynamischer Körper des Flugzeugs, wie z.B. ein Flügel, eine Flügelklappe, eine Vorderkantenklappe, eine Flosse oder ein Seitenleitwerk sein. Insbesondere kann der aerodynamische Körper oder die Oberfläche, auf der die Heizschicht aufgebracht werden kann, eine der Strömung zugewandte Oberfläche oder eine mit einer solchen in Verbindung stehenden Oberfläche sein (Figur 1). Das Flugzeug kann generell ein Starrflügler oder ein Drehflügler sein. Dabei kann die Heizschicht auch auf der Oberfläche eines Propellers oder eines Rotors aufgebracht sein.

In der Figur 1 ist beispielartig für diese Anwendungen eine Vorderkantenklappe eines Flugzeugs dargestellt. Auf einer Oberfläche 3 des Bauteils 1 oder eines Basiskörpers 4, das im gezeigten Ausführungsbeispiel ein Schalenteil 4 der Vorderkantenklappe 1 ist, sind zwei Heizschicht-Anordnungen H1, H2 mit jeweils einer Basis-Heizschicht 10 und einer Mehrzahl von innerhalb der Basis-Heizschicht 10 angeordneten inneren Heizvorrichtungen oder Zusatz-Heizschichten 11, 12 integriert. Die Basis-Heizschicht 10 und die zumindest eine Zusatz-Heizschicht 11 sind als elektrothermische Heizschichten gestaltet, so dass diese zumindest teilweise elektrisch leitend ausgebildet sind und bei einer entsprechenden Bestromung Wärme erzeugen. Um die Basis-Heizschicht 10 und die zumindest eine Zusatz-Heizschicht 11 bei einer Anordnung auf einem zu beheizenden Strukturbauteil elektrisch gegenüber dem Strukturbauteil zu isolieren, ist zwischen der Basis-Heizschicht 10 und der zumindest einen Zusatz-Heizschicht 11, 12 eine elektrisch isolierende Isolations- oder Trennvorrichtung 20 angeordnet. Weiterhin sind Isolations- oder Trennvorrichtungen 20 zwischen benachbarten Abschnitten eines Bandes B von Rovingen R innerhalb einer Basis-Heizschicht 10 oder eine Zusatz-Heizschicht 11, 12 vorgesehen (Figuren 2 und 3). Die Isolations- oder Trennvorrichtungen 20 können auch Teil des Strukturbauteils sein, auf dem die Basis-Heizschicht 10 und die Zusatz-Heizschichten 11, 12 angeordnet sind, oder separate Teile sein. Die Isolations- oder Trennvorrichtungen können aus Glas gebildet sein. Weiterhin sind sämtliche Heizschichten 10, 11, 12 auf einer Isolationsschicht angeordnet, so dass der in den Heizschichten fließende Heizstrom gegenüber dem Teil des Bauteils 1 isoliert ist, auf dem die Heizschichten 10, 11, 12 angeordnet sind.

In diesem Ausführungsbeispiel sind sechs Rovinge R nebeneinander auf dem Trägermaterial abgelegt und mit diesem strukturell integriert. Die Rovinge R liegen entlang ihrer gesamten Längserstreckung nebeneinander, d.h. es liegt kein Längsabschnitt eines Rovings R in der Dickenrichtung der Heizschicht gesehen oberhalb oder unterhalb eines Längsabschnitts eines anderen Rovings R desselben Bands B von Rovingen. Die Rovinge R verlaufen parallel zueinander und mäanderförmig in der Heizschicht 11. In diesem mäanderförmigen Ablagemuster, in dem das Band B von Rovingen R in der Ausführungsform nach der Figur 2 angeordnet ist, sind parallel zueinander verlaufende Längsabschnitte 11a, 11 b, 11 c, 11 d, 11 e des Bandes B von Rovingen R ausgebildet. Das Band B von Rovingen R ist an seinen Enden mit einem Anschlussstück A11-1 bzw. A11-2 verbunden, das jeweils wiederum mit einer Leitung L11-1 bzw. L11-2 an eine Strom- oder Spannungsversorgung E angeschlossen ist. Somit kann die Heizschicht 11 durch die Energieversorgungs-Vorrichtung E bestromt werden, so dass die Heizschicht 11 entsprechend dieser Bestromung Wärme an das Bauteil und an dessen Umgebung abgeben kann.

Das Schalenteil 4 kann insbesondere aus einem Faserverbundwerkstoff(FVW) oder einem Faserverbund-Kunststoff (FVK) gebildet sein. Die je nach Ausführungsform vorgesehenen Heizschichten sind auf einer elektrisch nicht-leitenden Schicht angeordnet, so dass die Heizschichten gegenüber den übrigen Abschnitten des Schalenteils isoliert sind.

Die Heizschichten 10, 11, 12 können generell als gesondertes Teil auf dem Bauteil aufgebracht sein oder einstückig mit diesem hergestellt sein. Dabei kann das Bauteil zumindest im Bereich der Heizschicht aus einem Kohlefaser-Halbzeug gebildet sein. In einem weiteren Verfahrensschritt können die Halbzeuge durch ein Harz-Injektionsverfahren oder Infusionsverfahren zu einem einheitlichen oder einstückigen Bauteil hergestellt sein.

Die an dem zu beheizenden Strukturbauteil angeordneten Isolationsschichten können insbesondere aus Glas, Aramid öder Kunststoffen und insbesondere aus einem Glasfaser-Kunststoff (GFK) gebildet sein. Weiterhin können die Isolationsschichten miteinander verbunden sein oder auch eine einheitliche Isolationsschicht bilden. Auch können die Isolationsschichten oder einzelne der Isolationsschichten jeweils integraler Bestandteil des zu beheizenden Strukturbauteils sein. Dabei können die Isolationsschichten einzeln oder insgesamt oder kann eine Isolationsschicht einheitlich oder einstückig mit dem zu beheizenden Strukturbauteil gebildet und insbesondere hergestellt sein. Insbesondere kann vorgesehen sein, dass das zu beheizende Strukturbauteil oder ein Schalenbauteil desselben aus einem elektrisch nicht-leitenden Material und dabei insbesondere aus einem Glasfaser-Kunststoff (GFK), einem Faserverbund-Werkstoff (FVW) oder Faserverbund-Kunststoff (FVK) oder einem metallischen Material gebildet ist. Dabei kann das zu beheizende Strukturbauteil oder das Schalenbauteil desselben selbst die Isolationsschicht sein oder die Isolationsschichten aufweisen.

Die zumindest eine auf dem Bauteil angeordnete Heizschicht ist vorzugsweise aus Kohlenstoff-Material gebildet, die über elektrische Anschlussvorrichtungen elektrisch angeschlossen sind und bei dem Anliegen einer entsprechenden Spannung Strom führen, so dass diese entsprechend erwärmt werden können. Insbesondere kann die zumindest eine Heizschicht aus elektrisch leitfähigen Rovingen in einer vorbestimmten Struktur und Dichte oder einem Bündel oder einem Verbund oder Band von Rovingen gebildet sein.

Unter "Roving" wird in diesem Zusammenhang ein Bündel aus endlosen Kohlenstoff-Filamenten oder elektrisch leitenden Kabeln verstanden, die in dem Roving unverdreht und/oder gestreckt sein können. Die Kabel können dabei insbesondere aus mittels Glasfasern ummantelten elektrischen wie z.B. metallischen Leitern gebildet sein. Die elektrisch leitenden Einzel-Filamente können aus Kohlenstoff-Filamenten und/oder Kohlenstoff-Fasern und/oder metallischen Legierungen und/oder aus Glasfasern mit z.B. metallischer Beschichtung gebildet sein. Auch können die Rovings insbesondere ausschließlich aus Fasern und insbesondere Kohlenstofffasern gebildet sein. Die Rovinge können mit oder ohne Matrix-Material versehen sein. Dabei können für die erfindungsgemäß verwendeten Rovings Materialien in Form von Endlos-Rovingen, Endlos-Gamen, Endlos-Zwirnen, Endlos-Schnüren, Endlos-Gewirke, Endlos-Webware, Endlos-Kordeln oder Endlos-Maschenware verwendet werden. Solche Endlos-Rovinge können zur Verwendung beim erfindungsgemäßen Verfahren auf Spulen oder Trommeln aufgewickelt sein, um Rovinge zur Anwendung für das erfindungsgemäße Verfahren in geeigneten Längenabschnitten von diesen zu entnehmen.

In weiteren Ausführungsbeispielen der Erfindung kann ein "Roving" nach der Erfindung auch aus mehreren Rovingen gebildet sein, die in diesen Fällen Unter-Rovinge sind. Insbesondere können dabei die Unter-Rovinge miteinander verflochten oder verdrillt sein. Eine derartige Kombination aus einer Mehrzahl von Unter-Rovingen, die nicht in einer ebenen Lage verlaufen müssen, wird in diesem Zusammenhang als "Bündel von Rovingen" verstanden.

Die Rovinge können in verschiedener Weise auf der jeweiligen Isolationsschicht abgelegt sein. Dabei können die Rovinge derart auf den Isolationsschichten abgelegt sein, dass die Oberflächen der Rovinge die flächige Erstreckung der Isolationsschichten möglichst ausfüllen, während gleichzeitig die einzelnen Abschnitte der Rovinge durch zwischen diesen gelegenes nicht leitendes Material und insbesondere Glas-Gewebe oder Kunststofffolie voneinander isoliert sind.

Zur Bildung der Heizschicht können Rovinge als einzelne Rovinge oder als zumindest ein Verbund oder als zumindest ein Band von Rovingen angeordnet sein. Unter "Band von Rovingen" wird in diesem Zusammenhang eine Anordnung von in ihrer Längsrichtung nebeneinander verlaufenden Rovingen verstanden, die somit an keinem ihrer Längsabschnitte in der Dickenrichtung der Heizschicht gesehen übereinander gelegen sind. Unter "Verbund von Rovingen" wird in diesem Zusammenhang eine Anordnung von in ihrer Längsrichtung nebeneinander oder auch übereinander verlaufenden Rovingen verstanden, die somit an zumindest einem ihrer Längsabschnitte in der Dickenrichtung der Heizschicht gesehen übereinander gelegen sind.

Innerhalb der Heizschicht können sich Rovinge abschnittsweise überlappen, d.h. dass Längsabschnitte der Rovinge in der Dickenrichtung der Heizschicht gesehen übereinander gelegen sein können. In einem Äüsführungsbeispiel der Erfindung jedoch sind die Rovinge zur Bildung einer Heizschicht derart angeordnet, dass die Rovinge an keinem ihrer Längsabschnitte in der Dickenrichtung der Heizschicht gesehen übereinander gelegen sind.

Mit den in Bezug auf die Längsrichtung des Rovings gelegenen Endstücken desselben kann jeweils ein elektrisch leitendes Verbindungsstück verbunden sein, mit denen wiederum die elektrischen Leitungen L verbunden und an der Energieversorgungs-Vorrichtung angeschlossen sind. Dadurch kann mit der Steuerungsfunktion der Energieversorgungs-Vorrichtung Strom mit vorbestimmter Stromstärke und vorbestimmtem zeitlichem Verlauf durch den Roving fließen, um diese und somit das Bauteil, auf dem der Roving angeordnet ist, zu erwärmen. Grundsätzlich können in Dickenrichtung des Bauteils gesehen mehrere Rovinge übereinander angeordnet sein, die parallel zueinander oder auch gegensinnig zueinander verlaufen können.

Die Rovinge oder das zumindest eine Bündel oder Band von Rovingen können bzw. kann parallel zueinander und schwingungsförmig verlaufen. Grundsätzlich können in Dickenrichtung des Bauteils gesehen mehrere Rovinge übereinander angeordnet sein, die parallel zueinander oder auch gegensinnig zueinander verlaufen können. Andere Formen, in denen Rovinge oder zumindest ein Bündel oder Band von Rovingen zur Bildung einer Heizschicht eines Heizsystems angeordnet sein können bzw. kann, sind nach den Anforderungen des jeweiligen Anwendungsfalls vorzusehen.

Wie in den Figuren 2, 3, 4 und 5 dargestellt ist, weist das jeweils dargestellte Heizsystem S, S10, S11, S12 eine Energieversorgungs-Vorrichtung mit einer Messspannungs-Versorgungsvorrichtung zur Erzeugung der Messspannung U_{Mess} und einer Lastspannungs-Versorgungsvorrichtung zur Erzeugung der Lastspannung U_{Last} auf, die über Leitungen L mit zwei elektrischen Anschlussvorrichtungen an die Heizschicht angeschlossen ist. So weist das in den Figuren 2 und 4 dargestellte Heizsystem S11 eine Energieversorgungs-Vorrichtung E11 mit einer Messspannungs-Versorgungsvorrichtung zur Erzeugung der Messspannung U_{Mess} und einer Lastspannungs-Versorgungsvorrichtung zur Erzeugung der Lastspannung U_{Last} auf, die mit zwei elektrischen Anschlussvorrichtungen A11-1, A11-2 an die Heizschicht angeschlossen ist. In analoger Weise sind bei der Ausführungsform der Figuren 3 und 5 zur Versorgung von drei Heizschichten drei Energieversorgungs-Vorrichtungen E10, E11, E12 jeweils mit einer Messspannungs-Versorgungsvorrichtung zur Erzeugung der Messspannung U_{Mess} und einer Lastspannungs-Versorgungsvorrichtung zur Erzeugung der Lastspannung U_{Last} vorgesehen, die jeweils mit zwei elektrischen Anschlussvorrichtungen A10-1, A10-2; A11-1, A11-2; A12-1, A12-2 an die Heizschichten 10, 11, 12 angeschlossen sind.

Die Energieversorgungs-Vorrichtungen E10, E11, E12 sind derart ausgeführt, dass diese eine Messspannungs-Versorgungsvorrichtung zum Aufbringen einer Messspannung aufweisen, die über Messleitungs-Anschlüsse an den elektrischen Leiter angeschlossen ist. Bei den Ausführungsformen der Figuren 2 und 3 wird an die jeweilige Heizschicht die Messspannung und die Lastspannung zeitlich hintereinander angelegt, so dass eine Messung des Widerstands dann erfolgt, wenn in der jeweiligen Heizschicht die Messspannung anliegt. Da in die Heizschichten der Ausführungsformen der Figuren 4 und 5 eine eigene Messleitung ML integriert ist, kann an die jeweilige Heizschicht die Messspannung auch dann angelegt werden, wenn die Lastspannung an die jeweiligen Heizschicht angelegt ist. Die Messvorrichtung ist zur Messung einer durch die Messspannung verursachten Stromstärke in der Messleitung vorgesehen. Die dabei verwendete Messspannung kann insbesondere geringer als 1/10 der Spannung zum Erwärmen der Heizschicht 10, 11, 12 sein.

Bei den in den Figuren 4 und 5 dargestellten Ausführungsbeispielen, die in ihrem Aufbau den Heizschichten der Figuren 2 bzw. 3 entsprechen, ist in die Heizschicht 10, 11 bzw. 12 jeweils eine elektrische Leitung ML zum Zwecke der Messung des Widerstands oder einer Veränderung des Widerstands eingelegt oder integriert. In den Figuren sind zur besseren Veranschaulichung die Bänder B der Heizschichten ohne die Rovinge R dargestellt. Das Heizsystem nach diesem Ausführungsbeispiel ist also aus zumindest einer elektrothermischen Heizschicht gebildet, wobei in der zumindest einen elektrothermischen Heizschicht eine elektrische Messleitung gelegen ist, die in der Heizschicht integriert ist.

Die Messleitung der erfindungsgemäßen Ausführungsbeispiele kann durch einen einzelnen elektrischen Leiter, einen Roving, ein Bündel oder Band von Rovingen gebildet sein.

Bei der Verwendung einer Kombination von Heizsystemen wie in der Figur 5 dargestellt muss nicht in jeder Heizschicht eine Messleitung ML integriert sein. Je nach Anwendungsfall kann auch nur in einer oder in mehreren der Heizschichten jeweils eine Messleitung ML integriert sein.

Die dargestellten Heizsysteme sind als ebene Heizschichten dargestellt, weisen jedoch nach einer Aufbringung auf ein Struktur-Bauteil eine beliebige dreidimensionale Gestalt auf. In der Ausführungsform der Kombination aus jeweils einer Basis-Heizschicht 10 und zwei Zusatz-Heizschichten 11, 12 nach den Figuren 3 und 5, die in der Figur 4 gezeigt ist, sind die äußere Heizvorrichtung 10 und die zwei Zusatz-Heizschichten 11, 12 rechteckförmig gebildet. Generell können diese Heizvorrichtungen auch eine andere Form haben und z.B. rund oder elliptisch geformt sein. Die Heizschichten 10, 11, 12 sind jeweils an eine Energieversorgungs-Vorrichtung E10, E11 bzw. E12 angeschlossen und bilden jeweils ein Heizsystem S, S10, S11 bzw. S12.

Im Einzelnen ist die Basis-Heizschicht 10 über elektrische Anschlussvorrichtungen A10-1, A10-2 an die Energieversorgungs-Vorrichtung E10 angeschlossen, wobei die elektrischen Anschlussvorrichtungen A10-1, A10-2 die Rovinge R an den Enden des Bandes B elektrisch verbinden. Mittels Leitungen werden die Anschlussvorrichtungen A10-1, A10-2 mit der Energieversorgungsvorrichtung E10 verbunden. In analoger Weise sind auch die Rovinge R an den Enden des Bandes B der zwei Zusatz-Heizschichten 11, 12 mittels jeweils einer elektrischen Anschlussvorrichtung A11-1, A11-2 bzw. A12-1, A12-2 verbunden, die jeweils über elektrische Leitungen an die jeweils zugeordneten Energieversorgungs-Vorrichtung E11, E12 angeschlossen sind.

Mittels der Energieversorgungs-Vorrichtungen E10, E11, E12 kann an jedes der Heizsysteme S10, S11, S12 unabhängig voneinander eine Lastspannung angelegt werden, die in jeder jeweils zugehörigen Heizschicht 10, 11 bzw. 12 einen elektrischen Heizstrom mit unterschiedlichen und voneinander unabhängigen Stromstärken bewirkt. Das aus den Heizsystemen S10, S11, S12 gebildete Gesamt-Heizsystem S kann somit die Oberfläche 3 des Bauteils 1 hinsichtlich der Heizleistung und auch in zeitlicher Hinsicht bereichsweise unterschiedlich ansteuern. Dabei können die Energieversorgungs-Vorrichtungen E10, E11, E12 insbesondere derart ausgeführt sein, dass an die Zusatz-Heizschichten 11, 12 relativ kurzzeitig relativ hohe Lastspannungen angelegt und an die Basis-Heizschicht 10 über relativ lange Zeitspannen relativ geringe Lastspannungen angelegt werden. Mit einer solchen System-Auslegung kann erreicht werden, das relativ große Flächen auf energetisch effiziente Weise mit relativ großem Heizeffekt beheizt werden können. Ein Anwendungsfall ist dabei insbesondere die Enteisung oder die Verhinderung einer Vereisung von Oberflächen von aerodynamischen Körpern.

Die Basis-Heizschicht 10 und/oder die zumindest eine Zusatz-Heizschicht 11, 12 kann auf der Innenseite oder der Außenseite des zu beheizenden Strukturbauteils 1 oder eines Schalenteils 4 des zu beheizenden Strukturbauteils angeordnet sein. Es kann auch vorgesehen sein, dass die Basis-Heizschicht 10 auf der Außenseite eines Strukturbauteils oder Schalenteils angeordnet ist und zumindest eine Zusatz-Heizschicht 11, 12 auf der Innenseite des Schalenteils angeordnet ist, und umgekehrt.

Bei der Verwendung von Rovingen können auch andere Ablagemuster oder Anordnungen von Rovingen oder zumindest eines Bandes oder Verbundes von Rovingen zur Bildung einer Heizschicht 10, 11, 12 vorgesehen sein. Durch ein Ablagemuster ist auch eine Streckenlänge für das jeweilige Roving bzw. das jeweilige Bündel oder Band von Rovingen und somit ein spezifischer elektrischer Widerstand derselben gegeben. Beispielartig sind verschiedene Ablagemuster in den Figuren 4 bis 6 dargestellt. In dem Beispiel der Figur 4 ist eine Roving-Anordung 30 mit sechs Rovingen 31a, 31b, 31c, 31d, 31e, 31f geradlinig und parallel nebeneinander abgelegt, wobei zwischen den Rovingen, d.h. quer zu deren Längserstreckung jeweils ein Abstand 37 als Isolationsbereich vorgesehen ist. Die Rovinge sind an ihren Enden mit einem diese elektrisch kontaktierenden und verbindenden Verbindungs- oder Anschlussstück 35a bzw. 35b verbunden, das jeweils wiederum mit einer Leitung 36a bzw. 36b an eine Strom- oder Spannungsversorgung (nicht dargestellt) angeschlossen ist. Stattdessen kann auch vorgesehen sein, mehrere Bündel oder Bänder von Rovingen nebeneinander als Bestandteile einer Heizschicht anzuordnen, die dann insbesondere voneinander beabstandet sind. Das Bündel oder Band von Rovingen kann in verschiedenen Gestaltungen zur Bildung der Heizschicht abgelegt sein. In der Figur 5 ist eine Anordnung 40 von Bündeln oder Bändern 41 von Rovingen als Teil einer Heizschicht dargestellt, die entlang ihrer Längsrichtung sinusförmig und parallel zueinander verlaufen. Weiterhin zeigt die Figur 6 zwei Heizschichten H-A, H-B mit jeweils einer mäanderförmigen Ablage und jeweils einer Anordnung 60a, 60b eines Bandes 61 von Rovingen als Bestandteil der jeweiligen Heizschicht. Die Bänder 61 von Rovingen sind elektrisch seriell geschaltet, da die einen Enden 65b, 65c der Bänder 61 a, 61 b über eine Verbindungsleitung 66 elektrisch miteinander verbunden sind und das jeweils andere Ende 65a, 65d der Bänder 61 a, 61 b jeweils über eine elektrische Verbindungsleitung 67a, 67b an eine Strom- oder Spannungsversorgung (nicht dargestellt) angeschlossen ist.

Die elektrischen Anschlussvorrichtung A10-1, A10-2, A11-1, A11-2 und A12-1, A12-2 sehen eine Kontaktierung der Kohlenstofffasern der abgelegten elektrisch leitenden Materials mit den zu den Energieversorgungs-Vorrichtungen führenden Leitungen vor. Dabei kann insbesondere vorgesehen sein, dass eine Verbindung eines metallischen Kontaktkörpers mit den Endabschnitten der elektrisch leitenden Rovinge R realisiert ist, die an der Randseite oder dem Randquerschnitt enden und Endflächen haben. Beispielsweise sind die Rovinge derart auf das Trägerteil aufgelegt, dass sich deren Enden zu ihrer Kontaktierung über das Trägerteil hinaus erstrecken. Hierbei wird ein stromleitender und insbesondere metallischer Kontaktkörper mit den Endabschnitten der elektrisch leitenden Rovings elektrisch verbunden. Der Kontaktkörper kann insbesondere plattenförmig oder folienförmig gebildet sein, so dass verhindert wird, das bei der Einspeisung von Strom in die elektrisch leitenden Rovinge lokal zu große elektrische Übergangswiderstände und die damit verbundenen lokal hohen Spannungsabfälle auftreten. Der Kontaktkörper kann insbesondere eine Kupferfolie sein. Die Verbindung des Kontaktkörpers mit den elektrisch leitenden Rovingen kann durch einen Metall enthaltenden Klebstoff erfolgen. Dabei kann das im Klebstoff enthaltene Metall aus Metall-Partikeln bestehen. Der Trägerstoff des Klebstoffs kann insbesondere aus einem elektrisch leitenden Polymer gebildet sein.

Bei den Ausführungsformen der Erfindung können die Rovinge und insbesondere jeweilige Endabschnitte der Rovinge somit ein Polymer und insbesondere ein Epoxidharz, das mit metallischen Partikeln z.B. aus Silber oder Kupfer versehen ist, aufweisen. Die Partikelgröße ist vorzugsweise kleiner als 45 Microns. Die Viskosität liegt zwischen 1.800 und 3.500 cPs. Das Polymer kann insbesondere ein thermoplastisches Polymer, ein duroplastisches Poylymer oder ein Elastomer sein. Bei der Herstellung der Kontaktierung wird das Polymer in flüssigem Zustand auf die Enden der Rovings aufgetragen oder getränkt und mit den Leitern der Versorgungsvorrichtung oder der Messvorrichtung verbunden. Anschließend wird das Polymer ausgehärtet. Dadurch ergibt sich eine Kontaktierung nicht nur der Endquerschnitte der Rovings oder deren Filamente, sondern auch - je nach der Durchführung des Auftragens des Polymers - eine Kontaktierung eines Endabschnitts der Rovings oder Filamente über eine vorbestimmte Länge in deren Längsrichtung. Durch diese Realisierung der Kontaktierung kann ein Volumenwiderstand bei 23 Grad Celsius von kleiner als 0,0004 Ohm-cm erreicht werden.

Nach einem weiteren Aspekt der Erfindung kann die Auswertungs-Vorrichtung zur Ermittlung des elektrischen Widerstands der Heizschicht 10, 11, 12 in einer Flugsteuerungs-Vorrichtung integriert sein. Dabei kann die Messvorrichtung funktional mit einer Sensorwert-Verarbeitungsvorrichtung in Verbindung stehen, die eine Vergleichsfunktion aufweist, die Temperaturwerte mit zumindest einem Vergleichswert vergleicht und einen Signalwert an eine Systemfunktion sendet, wenn der Grenzwert erreicht oder unterschritten wird. Der Grenzwert kann insbesondere einem unteren Temperaturwert entsprechen, der derart definiert ist, dass bei dieser Temperatur, Geschwindigkeit und bestimmten Luftparametern eine Eisbildung an der Außenfläche 5 des Schalenteils 4 möglich oder wahrscheinlich ist.

Alternativ oder zusätzlich kann die Sensorwert-Verarbeitungsvorrichtung eine Überwachungsfunktion aufweisen, die zur Ermittlung der Möglichkeit einer Eisbildung an der Außenfläche 5a derart gestaltet ist, dass diese Luftdaten und insbesondere die Außentemperatur, die Flughöhe und/oder den Luftdruck empfängt und mit den Sensorwerten einen Wahrscheinlichkeits-Grenzwert für eine Eisbildung ermittelt. Bei diesem Ausführungsbeispiel weist die Sensorwert-Verarbeitungsvorrichtung eine Vergleichsfunktion auf, die den ermittelten Wahrscheinlichkeitswert für eine Eisbildung mit einem Soll- Wahrscheinlichkeitswert für eine Eisbildung für die maximal zulässige Wahrscheinlichkeit einer Eisbildung vergleicht und bei Überschreiten des Soll-Wahrscheinlichkeitswerts einen Signalwert als Warnsignal an eine Systemfunktion wie z.B. ein Flugsteuerungssystem oder eine Cockpitanzeige sendet. Die Cockpitanzeige kann derart gestaltet sein, dass diese dem Piloten anzeigt, dass der Flugzustand geändert werden sollte und dabei z.B. die Flughöhe verringert werden muss, um ein Vereisen des Schalenteils 5 zu verhindern.

Bei der Verwendung zumindest eines Heizsystems an dem Bauteil 1 nach den vorgenannten Ausführungsbeispielen kann die mit der Sensorwert-Verarbeitungsvorrichtung funktional gekoppelte Systemfunktion weiterhin als Regelfunktion zur Regelung der Temperatur der jeweiligen Heizschicht bzw. des erfassten Bereichs des Schalenteils 5 gestaltet sein. Dabei empfängt die Systemfunktion von der Sensorwert-Verarbeitungsvorrichtung die Temperaturwerte, die aus ermittelten Widerstandswerten ermittelt wurden, und vergleicht diese mit eine Referenzwert oder einer Temperatur als Regelgröße. Dieser Referenzwert oder Temperaturwert liegt oberhalb einer Temperatur, bei der eine Eisbildung am Schalenteil 5 auftreten kann oder diese vermieden werden kann. Die Regelfunktion ist mit der Sensorwert-Verarbeitungsvorrichtung funktional verbunden und empfängt von dieser die Temperaturwerte als Eingangsgrößen, die aus ermittelten Widerstandswerten ermittelt wurden. Weiterhin steuert die Regelfunktion die Energieversorgungs-Vorrichtung derart an, dass die zumindest eine Heizschicht derart erwärmt wird, dass die jeweilige Heizschicht oder der jeweilige Bereich des Schalenteils eine Soll-Temperatur möglichst einhält. Die Regelfunktion erzeugt somit auf der Basis einer Soll-Temperatur für die jeweilige Heizschicht dementsprechende Kommandosignale, die an die jeweilige Energieversorgungs-Vorrichtung übermittelt werden, die in entsprechender Weise die zumindest eine Heizschicht bestromt. Bei dem Vorhandensein mehrere Heizschichten können auch mehrere Heizschichten angesteuert werden, um die Temperatur der jeweiligen Heizschicht zu regeln.

Bei der Verwendung zumindest eines Heizsystems nach den vorgenannten Ausführungsbeispielen kann die Systemfunktion weiterhin derart gestaltet sein, dass diese in dem Fall, in dem die Heizvorrichtung eingeschaltet ist und zugleich der einer Wahrscheinlichkeit einer Eisbildung am Schalenteil 5 entsprechende Grenzwert überschritten wird, ein Warnsignal ausgibt. Die Heizvorrichtung kann derart gestaltet sein, dass diese verschiedene Heizstufen, d.h. verschiedene Stufen an freigebender Wärmeleistung erzeugen kann. In diesem Fall kann die Systemfunktion insbesondere derart ausgeführt sein, dass das Warnsignal bei dem Vorliegen der höchsten Heizstufe der Heizvorrichtung, bei der die maximale Wärmeleistung erzeugt wird, und dem gleichzeitigen Überschreiten des einer Wahrscheinlichkeit einer Eisbildung am Schalenteil 5 entsprechende Grenzwerts erzeugt wird. Das Warnsignal kann an eine Flugführungsanzeige gesendet werden und diese kann derart ausgeführt sein, dass diese eine Empfehlung z.B. im Flight Director, für den Piloten erzeugt, nach der das Flugzeug in einen Flugzustand gebracht wird, in der die Eisbildung am Flügel vermieden wird. Alternativ oder zusätzlich kann vorgesehen sein, dass das Warnsignal an eine Flugsteuerungsvorrichtung gesendet wird, die eine Steuerungsfunktion aufweist, durch die das Flugzeug in einen Flugzustand gebracht wird, in dem die Eisbildung am Flügel vermieden wird.

Das Warnsignal kann bedeuten, dass der elektrothermische Heizkörper defekt ist. In einem Ausführungsbeispiel der Erfindung kann deshalb vorgesehen sein, dass die Überwachungsfunktion ermittelt, ob die atmosphärischen Bedingungen bei dem Ausfall des elektrothermischen Heizkörpers eine kritische Situation für das Flugzeug bedeuten können. Hierbei kann vorgesehen sein, dass in einer Bewertungsfunktion die Flughöhe und optional die gemessene Luft-Temperatur verwendet werden. Falls die Anwendung der Bewertungsfunktion ergibt, dass sich aus der unzulässigen (d.h. zu hohen) Wahrscheinlichkeit einer Eisbildung eine kritische Flugsituation ergeben kann, wird eine Warnung an das Flugsteuerungssystem oder an die Cockpitanzeige geschickt, die dem Piloten Handlungsempfehlungen anzeigt, mit denen er das Flugzeug in einen sichereren Flugzustand bringen kann. Dabei kann z.B. angezeigt werden, dass der Flugzustand verändert und dabei insbesondere die Flughöhe verringert werden muss, um ein Vereisen des Flügels zu verhindern. Alternativ oder zusätzlich kann auch eine automatische Steuerungsfunktion realisiert sein, die diese Maßnahmen automatisch umsetzt.

Anhandder Figuren wird ein weiterer Aspekt der Erfindung beschrieben, nach dem ein Struktur-Bauteil mit einem Heizsystem S mit zumindest einer Energieversorgungs-Vorrichtung E10, E11, E12 vorgesehen ist. Das Heizsystem S weist auf:
▪ eine Basis-Heizvorrichtung mit einer Isolationsschicht, mit einer darauf angeordneten elektrothermischen Basis-Heizschicht 10, die aus zumindest einem Bündel oder einem Verbund oder einem Band von Rovingen gebildet ist, und mit einer elektrischen Anschlussvorrichtung A10-1, A10-2, über die die zumindest eine Energieversorgungs-Vorrichtung E10, E11, E12 an die Basis-Heizschicht 10 angeschlossen ist, wobei die Enden jedes Rovings an jeweils eine Elektrode der elektrischen Anschlussvorrichtung angeschlossen sind,
▪ eine Zusatz-Heizvorrichtung mit einer Isolationsschicht, mit einer darauf angeordneten elektrothermischen Zusatz-Heizschicht 11, die aus zumindest einem Bündel oder einem Verbund oder einem Band von Rovingen gebildet ist, und mit einer elektrischen Anschlussvorrichtung A11-1, A11-2, über die die Energieversorgungs-Vorrichtung E10, E11, E12 an die Zusatz-Heizschicht 11 angeschlossen ist,

Dabei sind die Basis-Heizvorrichtung und die Zusatz-Heizvorrichtung zur Herstellung einer funktional zusammenhängenden Heizwirkung räumlich einander zugeordnet und die Energieversorgungs-Vorrichtung E10, E11, E12 derart gestaltet, dass der Zusatz-Heizschicht 11 in der Aktivierungsphase in zumindest einem zeitlichen Teilabschnitt Strom zugeführt wird, um das Strukturbauteil im Bereich der Zusatzheizschicht auf eine angenommene Soll-Temperatur zu erwärmen, und dass der Basis-Heizschicht 10 über die Aktivierungsphase hinaus permanent Strom zugeführt wird, so dass die Basis-Heizschicht 10 permanent und die Zusatz-Heizschicht 11 in dem zeitlichen Teilabschnitt Wärme erzeugt.

Die genannten Heizschichten können insbesondere integraler und lastübertragender Bestandteil des Strukturbauteils sein und dabei insbesondere nach dem erfindungsgemäßen Verfahren hergestellt sein. Die Heizschichten und die Basis-Heizvorrichtung mit einer Isolationsschicht sowie Zusatz-Heizvorrichtung mit einer Isolationsschicht sind nach einem Ausführungsbeispiel der Erfindung gestaltet und wurden voranstehend beschrieben.

Nach einem Ausführungsbeispiel der Erfindung ist die Stärke des Stroms in den zweiten Zeitabschnitten um 50% (ein Wert sollte genannt werden, um die Angaben spezifischer zu machen) stärker ist als der Strom, der durch die Basis-Heizschicht 10 fließt. Dabei kann zusätzlich vorgesehen sein, dass der Strom während Teilabschnitten zum Erwärmen größer ist als der bei Basis-Heizschicht 10. Das Fließen eines "wesentlich geringeren" Heizstroms bedeutet, dass die Stärke des Stroms dabei weniger als 50% (s.o.) beträgt als der Strom, der durch die Basis-Heizschicht 10 fließt.

Unter einer "weitgehend gleichbleibenden Stärke" eines elektrischen Stroms oder einer "permanenten" Stromzufuhr wird ein elektrischer Strom verstanden, dessen Stärke um maximal 25% von einem Mittelwert oder Referenzwert dieses Stroms abweicht.

Dabei kann auch vorgesehen sein, dass in der Zusatz-Heizschicht 11 auf intermittierende oder pulsierende Weise Strom fließt. Der zeitliche Verlauf der Stromstärke kann regelmäßig periodisch sein.

Das Heizsystem 1 kann auch aus mehreren Zusatz-Heizschichten 11 gebildet sein, die durch die Energieversorgungs-Vorrichtung 5 in der beschriebenen Weise bestromt werden, d.h. in ersten Zeitabschnitten mit einer größeren Stromstärke und in zweiten Zeitabschnitten mit einer kleineren Stromstärke, als der Strom, der durch die Basis-Heizschicht 10 fließt. Dabei kann vorgesehen sein, dass die ersten Zeitabschnitte zur selben Zeit in allen oder mehreren Basis-Heizschichten 10 vorgesehen sind. Alternativ kann vorgesehen sein, dass die ersten Zeitabschnitte in allen oder mehreren Basis-Heizschichten 10 zeitversetzt vorgesehen sind.

Zur strukturellen Integration der erfindungsgemäß vorgesehenen Heizschichten 10, 11, 12 in ein Bauteil 1 kann vorgesehen sein, dass das Material zur Bildung der jeweiligen Heizschicht auf einem Trägerteil-Halbzeug, das aus einem elektrisch isolierenden Material gebildet ist, aufgebracht wird. Das Trägerteil-Halbzeug ist als ein flächiges oder mattenförmiges Gebilde geformt und hat die Funktion, die auf diese aufzubringenden Rovinge elektrisch gegenüber dem Bauteil zu isolieren, auf dem die Heizschicht anzuordnen ist. Die Oberfläche des Bauteils, auf dem die Heizschicht anzuordnen ist, kann insbesondere eine Oberfläche eines Schalenbauteils sein.

Bei einem weiteren Ausführungsbeispiel der Erfindung können die Rovinge R derart über die Fläche eines Trägerteil-Halbzeugs und somit über die Oberfläche 3 des Bauteils 1, auf dem die Heizschicht angeordnet ist, verteilt sein, dass jeder Roving R in der Dickenrichtung des Trägerteil-Halbzeugs oder der zu bildenden Heizschicht 10, 11, 12 gesehen auf derselben Ablageebene verläuft. Es werden dabei also keine Überlagerungen der einzelnen Rovinge oder Überlagerungen von Abschnitten desselben Rovings in der genannten Dickenrichtung zugelassen. Diese Anordnungsweise hat den Vorteil, dass z.B. die Anordnung, der Verlauf, die Dicke, die Beschaffenheit und/oder die Anzahl der Rovinge nach vorgebbaren Optimierungskriterien optimierbar ist oder sind. Weiterhin sind zeitlich veränderliche Heizströme mit phasenweise hohen Spitzen in der Heizschicht möglich, da die in der erfindungsgemäßen Heizschicht auftretenden Temperaturen kontrollierbar und insbesondere regelbar sind. Die zur Bildung der Heizschicht angeordneten Rovinge R können als Band von Rovingen oder Verbund von Rovingen angeordnet sein.

Unter "Band von Rovingen" wird in diesem Zusammenhang eine Anordnung von in ihrer Längsrichtung nebeneinander verlaufenden Rovingen verstanden, die somit an keinem ihrer Längsabschnitte in der Dickenrichtung der Heizschicht gesehen übereinander gelegen sind. Unter "Verbund von Rovingen" wird in diesem Zusammenhang eine Anordnung von in ihrer Längsrichtung nebeneinander oder auch übereinander verlaufenden Rovingen verstanden, die somit an zumindest einem ihrer Längsabschnitte in der Dickenrichtung der Heizschicht gesehen übereinander gelegen sind.

Das Trägerteil-Halbzeug, auf dem zur Herstellung einer erfindungsgemäßen Heizschicht Kohlenstoff-Leiter und z.B. ein Band von Rovingen oder Rovinge aufgebracht werden können, dient bei dem fertigen Bauteil 1 als Isolationsschicht, die zwischen dem Leitungsbereich aus z.B. einem Verbund oder Band von Rovingen gelegen ist. Das Bauteil kann Teil der Isolationsschicht sein oder die Isolationsschicht kann durch ein zusätzlich auf die Isolationsschicht aufgebrachtes Material aufweisen. Ein derartiges zusätzlich auf die Isolationsschicht aufgebrachtes Material kann ein Glas-Roving sein, der elektrisch nicht-leitend ist. Bei diesem Ausführungsbeispiel kann insbesondere vorgesehen sein, dass zwischen zwei Leitungsbereichen aus jeweils einem Roving bzw. einem Verbund von Rovingen mit einer in der flächigen Erstreckung der jeweiligen Heizschicht gesehenen Breite bis zu 10 cm und insbesondere bis zu 3 cm zumindest ein Glas-Roving eingelegt ist.

Die elektrothermische Schicht, insbesondere falls diese auf der Oberseite des Strukturbauteils oder des Schalententeils angeordnet ist, kann auf ihrer Oberseite mit einer elektrisch nicht-leitenden Schicht abgedeckt sein, die aus Glas-Gewebe, textilem Material oder Kunststofffolie gebildet sein kann.

Bei der Anordnung der elektrothermischen Schicht auf der Oberseite des Strukturbauteils oder des Schalententeils kann weiterhin das Aufbringen einer Blitzschutz-Schicht vorgesehen sein. Die Blitzschutz-Schicht ist in der Dickenrichtung des Strukturbauteils gesehen oberhalb der elektrisch nicht-leitenden Schicht gelegen und kann insbesondere aus einer gestanzten Folie aus Bronze gebildet sein.

Die elektrisch nicht-leitenden Isolationsschichten, also die erste und gegebenenfalls weiteren Isolationsschichten können aus einem Glasgewebe, textilem Material oder einer elektrisch nicht-leitenden Kunststofffolie gebildet sein.

Ein Ausführungsbeispiel einer erfindungsgemäß vorgesehenen Zusatz-Heizschicht 11, 12 ist in der Figur 2 dargestellt und anhand der Figur 2 beschrieben worden.

Das erfindungsgemäß hergestellte Bauteil eignet sich insbesondere für die Anwendung und Integration in Flugzeug-Bauteile oder Flugzeug-Strukturen. In der Figur 1 ist als Beispiel eines solchen Anwendungsfalls ein solches Bauteil 1 in Form einer Vorderkantenklappe dargestellt. Mittels der Energieversorgungs-Vorrichtungen E10, E11, E12 kann an jedes der Heizsysteme S10, S11, S12 unabhängig voneinander eine Lastspannung angelegt werden, die in jeder jeweils zugehörigen Heizschicht 10, 11 bzw. 12 einen elektrischen Heizstrom mit unterschiedlichen und voneinander unabhängigen Stromstärken bewirken. Das aus den Heizsystemen S10, S11, S12 gebildete Gesamt-Heizsystem S kann somit die Oberfläche 3 des Bauteils 1 hinsichtlich der Heizleistung und auch in zeitlicher Hinsicht bereichsweise unterschiedlich ansteuern. Dabei können die Energieversorgungs-Vorrichtungen E10, E11, E12 insbesondere derart ausgeführt sein, dass an die Zusatz-Heizschichten 11, 12 relativ kurzzeitig relativ hohe Lastspannungen angelegt und an die Basis-Heizschicht 10 über relativ langen Zeitspannen relativ geringe Lastspannungen angelegt werden. Mit einer solchen System-Auslegung kann erreicht werden, das relativ große Flächen auf energetisch effiziente Weise mit relativ großem Heizeffekt beheizt werden können. Ein Anwendungsfall ist dabei insbesondere die Enteisung oder die Verhinderung einer Vereisung von Oberflächen von aerodynamischen Körpern.

Zur Bildung einer elektrothermischen Schicht 10, 11, 12 kann insbesondere ein Band B aus Rovingen R mäanderförmig abgelegt sein, wie dies in den Ausführungsbeispielen gemäß der Figuren 1 und 2 dargestellt ist. Mäanderförmig bezeichnet einen Verlauf von Rovingen R bzw. des Bandes B von Rovingen R, bei denen Längsabschnitte desselben Bandes B bzw. derselben Rovinge R in Bezug auf die Koordinaten zur Beschreibung der flächigen Erstreckung der elektrisch isolierenden Schicht, auf der die Rovinge abgelegt werden, in einander entgegen gesetzten Richtungen verlaufen, so dass zwischen diesen Längsabschnitten Krümmungsabschnitte vorgesehen ist, wobei in Längsrichtung der Rovinge R oder des Bandes B aufeinander folgende Krümmungsabschnitte zueinander entgegen gesetzte Krümmungen haben. Mit anderen Worten: "Mäanderförmig" heißt in diesem Zusammenhang, dass Längsabschnitte ein und desselben Rovings nebeneinander und parallel zueinander abgelegt sind, wobei jeweils nebeneinander liegende Längsabschnitte in der Längserstreckung des Rovings hintereinander liegende Längabschnitte sind, so dass sich ein mäanderförmiger oder serpentinenförmiger Verlauf des Rovings ergibt.

Grundsätzlich kann der Verlauf der Rovinge auch von der Form des Strukturbauteils bestimmt und aufgrund dieser optimiert sein. Beispielsweise kann der Verlauf von einem oder mehreren Rovingen um eine Ausnehmung, z.B. eine Bohrung zur Aufnahme eines Verbindungselements oder Versorgungsdurchbrüche oder andere Störstellen der Oberfläche des Strukturbauteils herumgeführt werden, wenn an dieser Stelle eine elektrothermische Schicht einer Heizvorrichtung vorgesehen werden soll.

Nach einem Ausführungsbeispiel der Erfindung sind mehrere Zusatz-Heizschichten vorgesehen, die neben und/oder innerhalb einer Basis-Heizschicht 10 auf der Oberfläche eines Strukturbauteils angeordnet sind und die an die Energieversorgungs-Vorrichtung angeschlossen sind. Dabei ist die Funktion der Energieversorgungs-Vorrichtung zur Steuerung des Stroms in den Heizschichten derart gestaltet, dass sich für den in den Zusatz-Heizschichten jeweils fließenden Strom in jeder Zusatz-Heizschicht erste und zweite Zeitabschnitte mit unterschiedlichen Stromstärken des Heizstroms bilden, die sich einander abwechseln. Dabei sind die Stromstärken in den jeweils ersten Heizphasen wesentlich größer als die Stromstärken in den jeweils zweiten Heizphasen. Beispielsweise tritt bei einem Heiz-System mit drei Zusatz-Heizschichten die erste Heizphase nacheinander in der ersten, der zweiten und der dritten Zusatz-Schicht auf und es liegen bei dem Auftreten einer ersten Heizphase in einer ersten Zusatz-Schicht zweite Heizphasen in den jeweils beiden anderen Zusatz-Schichten vor.

Bei dem Wechsel zwischen einer ersten und einer zweiten Heizphasen zweier Zusatz-Heizschichten können jedoch Überlappungen der Heizphasen dergestalt auftreten, dass die Stromstärke entsprechend einer ersten Heizphase in einer Zusatz-Schicht noch andauert, während bereits in einer weiteren Zusatz-Schicht ebenfalls eine Stromstärke entsprechend einer ersten Heizphase herrscht. Vorzugsweise beträgt der Überlappungszeitraum maximal 10% der Zeitdauer oder des Mittelwerts der Zeitdauern, die für die jeweiligen ersten Heizphasen vorgesehen ist bzw. sind. Auch bei diesem Ausführungsbeispiel kann vorgesehen sein, dass die Stärke des Stroms in den ersten Zeitabschnitten um 50% (s.o.) stärker ist als der Strom, der durch die Basis-Heizschicht 10 fließt. Weiterhin kann dabei vorgesehen sind, dass die Stärke des Stroms in den zweiten Zeitabschnitten weniger als 50% (s.o.) beträgt als der Strom, der durch die Basis-Heizschicht 10 fließt.

Nach der Erfindung ist generell innerhalb der Basis-Heizschicht 10 eine Mehrzahl von inneren Heizvorrichtungen angeordnet, d.h. es können auch mehr als zwei Zusatz-Heizschichten 11, 12 innerhalb der äußeren Heizvorrichtung 10 angeordnet sein. Die Basis-Heizschicht 10, die Zusatz-Heizschichten 11, 12 sind auf einem Basiskörper 9 mit einer elektrisch isolierenden Schicht angeordnet, so dass die Heizschichten 10, 11, 12 oberhalb der isolierenden Schicht gelegen sind. In der Ausführungsform der Kombination aus jeweils einer Basis-Heizschicht und zwei Zusatz-Heizschichten 11, 12, die in der Figur 1 gezeigt ist, sind die äußere Heizvorrichtung und die zwei Zusatz-Heizschichten rechteckförmig gebildet. Generell können diese Heizvorrichtungen auch eine andere Form haben und z.B. rund oder elliptisch geformt sein.

Der Basiskörper 9 kann ein separates Teil oder Bauteil sein, das auf das zu beheizende Bauteil aufgebracht wird, oder der Basiskörper kann Teil des zu beheizenden Bauteils sein. In letzterem Fall kann der Basiskörper einstückig mit dem zu beheizenden Bauteil hergestellt sein. Insbesondere kann der Basiskörper die Außenhaut eines Schalenbauteils und dabei die Außenhaut eines Schalenbauteils eines Flügels, einer Klappe oder eines Vorflügels sein. In einem Ausführungsbeispiel der Erfindung ist das zu beheizenden Bauteil ein Bauteil eines Flugzeugs. Dabei kann das zu beheizenden Bauteil insbesondere ein Bauteil sein, das ein in die Strömung ragendes Teil aufweist, wie z.B. die in die Strömung ragende Vorderseite eines Leitwerks, einer Höhenflosse, eines Flügels, eines Winglets, eines Vorflügels oder einer Vorderkantenklappe oder des Rumpfs, eines Triebwerks oder eines am Flugzeug angebrachten Zusatz-Bauteils.

Als Beispiel ist in der Figur 2 die Anordnung von einer Basis-Heizschicht 10 und zwei Zusatz-Heizschichten 11, 12 auf der Vorderseite 21 oder der in die Strömung ragende Abschnitt eines Vorflügels oder einer Vorderkantenklappe 20 gezeigt. Zur Orientierung ist in die Figur 2 ein X1-X2-X3-Koordinatensystem eingetragen, dessen X1-Achse die Spannweitenrichtung, X2-Achse die Flügeltiefenrichtung und X3-Achse die Flügeldickenrichtung des Vorflügels ist. Beispielartig sind auf der Vorderseite 21 zwei Kombinationen aus jeweils einer Basis-Heizschicht 10 und zwei innerhalb derselben angeordneten Zusatz-Heizschichten 11, 12 angeordnet. Dabei sind die beiden Kombinationen aus jeweils einer Basis-Heizschicht 10 und zwei innerhalb derselben angeordneten Zusatz-Heizschichten 11, 12 bzw. einer Basis-Heizvorrichtung und zwei innerhalb derselben angeordneten Zusatz-Heizvorrichtung derart auf dem Vorflügel 10 angeordnet, dass die zwei Zusatz-Heizschichten 11, 12 in der Flügeltiefenrichtung X2 gesehen nebeneinander liegen.

Generell kann eine Kombination aus jeweils einer Basis-Heizschicht 10 und zwei innerhalb desrelben angeordneten Zusatz-Heizschichten 11, 12 oder können mehrere Kombinationen aus jeweils einer Basis-Heizschicht 10 und zwei innerhalb derselben angeordneten Zusatz-Heizschichten 11, 12 an dem Flugzeug-Bauteil wie einem Vorflügel angeordnet sein. Bei der Anordnung von mehrere Kombinationen aus jeweils einer Basis-Heizschicht 10 und zwei innerhalb derselben angeordneten Zusatz-Heizschichten 11, 12 können diese insbesondere in der Spannweitenrichtung X1 des Vorflügels nebeneinander und alternativ oder zusätzlich auch in der Flügeltiefenrichtung X2 nebeneinander angeordnet sein.

Bei der Integration des erfindungsgemäßen Heizsystems in einem Flugzeug-Bauteil kann insbesondere vorgesehen sein, dass der Basiskörper 4 als elektrisch isolierende Schicht gebildet ist und Teil des Flugzeug-Bauteils ist und dabei insbesondere ein Schalenteil des Flugzeug-Bauteils bildet.

Die Energieversorgungs-Vorrichtung 5 ist an der ersten 10a, an der ersten 11 a und der zweiten 11 b elektrischen Anschlussvorrichtung der ersten Zusatz-Heizschicht 11 sowie an der ersten 112a und der zweiten 12b elektrischen Anschlussvorrichtung der zweiten Zusatz-Heizschicht 12 elektrisch angeschlossen. Die Energieversorgungs-Vorrichtung 5 ist derart gestaltet, dass in einer Aktivierungsphase des Heizsystems 1 der Basis-Heizschicht 10 permanent Strom zugeführt und der ersten 11 und der zweiten 12 Zusatz-Heizschicht in vorbestimmter Weise abwechselnd Strom zugeführt wird, so dass der der erste 11 und der zweite 12 Heizungs-Zusatzkörper zeitlich abwechselnd Wärme erzeugen. Dadurch, dass dem erste Heizungs-Zusatzkörper 11 und der zweite Heizungs-Zusatzkörper 12 zeitlich abwechselnd Strom zugeführt wird, werden diese wechselweise erwärmt. Auf diese Weise erfolgt eine Wärmewirkung für die Oberfläche der gesamten Basis-Heizschicht 10 auf eine energetisch effiziente Weise. Auch können die erste Zusatz-Heizschicht 11 und die zweite Zusatz-Heizschicht 12 aus einem Material gestaltet sein, dessen Temperatur sich bei einer entsprechenden Bestromung mit einem hohen Temperaturgradienten erhöht, da jeder Zusatz-Heizschicht 11, 12 nur in einem entsprechend kurzen Zeitabschnitt Strom zur Wärmeerzeugung zugeführt wird.

Bei dem erfindungsgemäßen Verfahren zur Herstellung eines Bauteils mit einer Heizschicht oder zur Herstellung eines Heizkörper-Halbzeuges zur Herstellung eines solchen Bauteils ist vorgesehen, auf einem Trägerteil-Halbzeug mit einem elektrisch nicht leitfähigen Trägermaterial eine oder mehrere Lagen von Kohlenstoff-Rovingen in Form von einer oder mehreren Lagen von Bündeln oder Bändern von Rovingen und/oder von metallischen Leitern in einem vorbestimmten Ablagemuster aufzulegen und an diesem mit einem Stickverfahren zu befestigen.

Bei dem bestimmungsgemäßen Einsatz des Bauteils mit einer Heizschicht werden die Rovinge an eine Stromversorgungs-Vorrichtung angeschlossen und bei Anlegen einer entsprechenden Spannung als Ohmscher Leiter verwendet, so dass diese entsprechend ihres spezifischen Widerstands und der angelegten Spannung eine vorbestimmte Wärmeleistung abgeben, um das Bauteil und/oder die Umgebung des Bauteils in vorbestimmter Weise zu erwärmen.

Unter "Roving" wird in diesem Zusammenhang ein Bündel aus endlosen Kohlenstoff-Filamenten oder elektrisch leitenden Kabeln verstanden, die in dem Roving unverdreht und/oder gestreckt sein können. Die Kabel können dabei insbesondere aus mittels Glasfasern ummantelten elektrischen wie z.B. metallischen Leitern gebildet sein. Die elektrisch leitenden Einzelfilamente können aus Kohlenstoff-Filamenten und/oder Kohlenstoff-Fasern und/oder metallischen Legierungen und/oder aus Glasfasern mit z.B. metallischer Beschichtung gebildet sein. Auch können die Rovings insbesondere ausschließlich aus Fasern und insbesondere Kohlenstofffasern gebildet sein. Die Rovinge können mit oder ohne Matrix-Material versehen sein. Dabei können für die erfindungsgemäß verwendeten Rovings Materialien in Form von Endlos-Rovingen, Endlos-Garnen, Endlos-Zwirnen, Endlos-Schnüren, Endlos-Gewirke, Endlos-Webware, Endlos-Kordeln oder Endlos-Maschenware verwendet werden. Solche Endlos-Rovinge können zur Verwendung beim erfindungsgemäßen Verfahren auf Spulen oder Trommeln aufgewickelt sein, um Rovinge zur Anwendung für das erfindungsgemäße Verfahren in geeigneten Längenabschnitten von diesen zu entnehmen.

In weiteren Ausführungsbeispielen der Erfindung kann ein "Roving" nach der Erfindung auch aus mehreren Rovingen gebildet sein, die in diesen Fällen Unter-Rovinge sind. Insbesondere können dabei die Unter-Rovinge miteinander verflochten oder verdrillt sein. Eine derartige Kombination aus einer Mehrzahl von Unter-Rovingen, die nicht in einer ebenen Lage verlaufen müssen, wird in diesem Zusammenhang als "Bündel von Rovingen" verstanden.

Die auf dem Trägerteil-Halbzeug abgelegten Rovinge können sich auch abschnittsweise überlappen, d.h. dass Längsabschnitte der Rovinge in der Dickenrichtung der Heizschicht gesehen übereinander gelegen sein können. In einem Ausführungsbeispiel der Erfindung jedoch sind die Rovinge derart angeordnet, dass die Rovinge an keinem ihrer Längsabschnitte in der Dickenrichtung der Heizschicht gesehen übereinander gelegen sind.

Zur Bildung der Heizschicht können Rovinge als einzelne Rovinge oder als zumindest ein Verbund oder als zumindest ein Band von Rovingen abgelegt sein. Unter "Band von Rovingen" wird in diesem Zusammenhang eine Anordnung von in ihrer Längsrichtung nebeneinander verlaufenden Rovingen verstanden, die somit an keinem ihrer Längsabschnitte in der Dickenrichtung der Heizschicht gesehen übereinander gelegen sind. Unter "Verbund von Rovingen" wird in diesem Zusammenhang eine Anordnung von in ihrer Längsrichtung nebeneinander oder auch übereinander verlaufenden Rovingen verstanden, die somit an zumindest einem ihrer Längsabschnitte in der Dickenrichtung der Heizschicht gesehen übereinander gelegen sind.

Das Trägerteil-Halbzeug ist als ein flächiges oder mattenförmiges Gebilde geformt und hat die Funktion, die auf dieses aufzubringenden Rovinge elektrisch gegenüber dem Bauteil zu isolieren, auf dem die Heizschicht anzuordnen ist. Das Trägerteil-Halbzeug kann insbesondere aus einem textilen Halbzeug und insbesondere einem Gewebe, wie z.B. einem Multiaxial-Gelege oder einem Kunststoff in Form einer Folie oder Kombinationen davon gebildet sein. Die Oberfläche des Bauteils, auf dem die Heizschicht anzuordnen ist, kann insbesondere eine Oberfläche eines Schalenbauteils sein. Dabei werden die Rovinge über die Fläche des Trägerteil-Halbzeugs verteilt, wobei jeder Roving in der Dickenrichtung des Trägerteil-Halbzeugs oder der zu bildenden Heizschicht gesehen auf derselben Ablageebene verläuft. Es werden also dabei keine Überlagerungen der einzelnen Rovinge oder Überlagerungen von Abschnitten desselben Rovings in der genannten Dickenrichtung zugelassen. Diese Anordnungsweise hat den Vorteil, dass z.B. die Anordnung, der Verlauf, die Dicke, die Beschaffenheit und/oder die Anzahl der Rovinge nach vorgebbaren Optimierungskriterien optimierbar sind. Weiterhin sind zeitlich veränderliche Heizströme mit phasenweise hohen Spitzen in der Heizschicht möglich, da die in der erfindungsgemäßen Heizschicht auftretenden Temperaturen kontrollierbar und insbesondere regelbar ist.

Die jeweiligen Heizschichten können aus einer oder mehreren Lagen von Rovingen oder einer oder mehreren Lagen von zumindest einem Bündel oder Band von Rovingen und/oder von metallischen Leitern in einem vorbestimmten Ablagemuster gebildet sein.

Das Bauteil mit einer Heizschicht weist eine elektrisch isolierende Schicht auf oder ist aus einer solchen gebildet. Demgemäß wird zur Herstellung des Bauteils ein Trägermaterial-Halbzeug und ein elektrisch isolierendes Material verwendet oder ist das Trägermaterial-Halbzeug aus einem elektrisch isolierenden Material gebildet. Das elektrisch isolierende Material kann insbesondere aus Glas, Aramid oder Kunststoffen gebildet sein.

Das Trägerteil-Halbzeug kann aus einem textilen Halbzeug insbesondere in Form eines Gewebe oder eines Multiaxial-Geleges oder einem sich flächig erstreckenden Kunststoff in Form einer Folie gebildet sein.

Das nach dem erfindungsgemäßen Verfahren hergestellte Bauteil auf der Basis eines entsprechenden Bauteil-Halbzeug kann insbesondere ein FVW- und/oder ein FVK-Bauteil sein. Das Bauteil kann generell eine oder mehrere Heizschichten aufweisen. Bei dem Vorsehen von mehreren Heizschichten können diese von einer Energieversorgungs-Vorrichtung unterschiedlich angesteuert und somit bestromt werden. Auch kann vorgesehen sein, dass jede der Heizschichten von ein und derselben Energieversorgungs-Vorrichtung angesteuert wird.

Ein Ausführungsbeispiel einer nach dem erfindungsgemäßen Verfahren hergestellten Heizschicht 11 ist in der Figur 9 dargestellt. In diesem Ausführungsbeispiel sind sechs Rovinge R nebeneinander auf dem Trägermaterial abgelegt und mit diesem strukturell integriert. Die Rovinge R liegen entlang ihrer gesamten Längserstreckung nebeneinander, d.h. es liegt kein Längsabschnitt eines Rovings R in der Dickenrichtung der Heizschicht gesehen oberhalb oder unterhalb eines Längsabschnitts eines anderen Rovings R desselben Bands B von Rovingen. Die Rovinge R verlaufen parallel zueinander und mäanderförmig in der Heizschicht 11. In diesem mäanderförmigen Ablagemuster, in dem das Band B von Rovingen R in der Ausführungsform nach der Figur 2 angeordnet ist, bilden sich parallel zueinander verlaufende Längsabschnitte 11 a, 11 b, 11 c, 11 d, 11 e des Bandes B von Rovingen R aus. Das Band B von Rovingen R ist an seinen Enden mit einem Anschlussstück A11-1 bzw. A11-2 verbunden, das jeweils wiederum mit einer Leitung L11-1 bzw. L11-2 an eine Strom- oder Spannungsversorgung E angeschlossen ist. Somit kann die Heizschicht 11 durch die Energieversorgungs-Vorrichtung E bestromt werden, so dass die Heizschicht 11 entsprechend dieser Bestromung Wärme an das Bauteil und an dessen Umgebung abgeben kann.

Das erfindungsgemäß hergestellte Bauteil eignet sich insbesondere für die Anwendung und Integration in Flugzeug-Bauteile oder Flugzeug-Strukturen wie dies anhand der Figur 3 beschrieben wurde.

Die Zusatz-Heizschichten 11, 12 können insbesondere nach dem in der Figur 2 dargestellten Ausführungsbeispiel gebildet sein.

Erfindungsgemäß wird zur Herstellung des Bauteil-Halbzeuges oder des Bauteils nach einer Definition technischer Vorgaben (Schritt 1) in einem Schritt S2 zur Auslegung der Anordnung der Heizschichten in einem Heizschicht-Definitionsschritt die geometrische Definition und/oder die Gestaltung der auf dem herzustellenden Bauteil vorgesehenen Heizschicht oder der Heizschichten definiert. In einem Ausführungsbeispiel des erfindungsgemäßen Verfahrens wird dabei von einem herzustellenden Bauteil mit einer vorgegebenen dreidimensionalen Form ausgegangen. An diesem wird in Untersuchungen (Schritt S3) und sowie mit elektrischen Berechungen und/oder in Simulationen, analytischen Untersuchungen und/oder Tests an einem Modell des herzustellenden Bauteils ermittelt, welche Heizleistung durch eine oder mehrere Heizschichten an dem herzustellenden Bauteil erreicht werden soll. Hierzu können insbesondere anforderungsgemäße Einsatzbedingungen simuliert werden. Als Ergebnis dieser Untersuchungen kann eine oder können mehrere der folgenden Kriterien stehen:
▪ die Anzahl und die Anordnung von zumindest einer auf dem herzustellenden Bauteil vorzusehenden Heizschichten, wobei zur Anordnung der zumindest einen Heizschicht die Lage der jeweiligen Heizschicht auf dem Bauteil bezeichnet;
▪ die Größe der jeweiligen Heizschicht; sowie
▪ die für jede vorgesehene Heizschicht zu erzielende flächenspezifische Heizleistung bei einer vorgegebenen und der Heizschicht bereitgestellten Spannung, wobei die Spannung zeitlich konstant oder zeitveränderlich sein kann.

Das Ergebnis des Heizschicht-Definitionsschritts und dabei insbesondere die ermittelte zu erzielende flächenspezifische Heizleistung kann in einem Iterationsverfahren zu einer Anpassung der Gestaltung der auf dem herzustellenden Bauteil vorgesehenen Heizschicht oder der Heizschichten führen, d.h. zur Anpassung der Anzahl und der Anordnung von zumindest einer auf dem herzustellenden Bauteil vorzusehenden Heizschicht und/oder der Größe der jeweiligen Heizschicht (Schritt S4).

Bei diesen Untersuchungen kann vorgesehen sein, dass auch das Material des Trägerteils berücksichtigt wird.

In einem Ausführungsbeispiel des Heizschicht-Definitionsschritts kann die Anordnung und insbesondere Lage der Anordnung von zumindest einer Heizschicht und/oder die Größe der jeweiligen Heizschicht vorgeben sein. Solche Vorgaben können sich aus dem jeweiligen Anwendungsfall, der für das jeweils herzustellende Bauteil vorgesehen ist, ergeben. Bei diesem Ausführungsbeispiel des Heizschicht-Definitionsschritts wird aufgrund solcher Vorgaben die für jede vorgesehene Heizschicht bei einer vorgegebenen und der Heizschicht bereitgestellten Spannung zu erzielende flächenspezifische Heizleistung der Heizschichten oder der jeweiligen Heizschicht z.B. in einem Optimierungsverfahren ermittelt.

Auf der Basis der vorgenannten alternativen Definitionen der Heizschichten erfolgt dann die Durchführung eines Roving-Definitionsschritts (Schritt S5), bei dem die Definition der Gestaltung der Rovinge oder des zumindest einen Bündels oder Bands von Rovingen auf der zumindest einen Heizschicht vorgenommen wird. Dies beinhaltet die Festlegung
▪ der Art der Anordnung der elektrisch leitenden Rovinge oder des zumindest einen Bündels oder Bands von Rovingen für die jeweilige Heizschicht ▪ der Art und der Anzahl der Rovinge oder des Bündels von Rovingen R für die jeweilige Heizschicht sowie des Bands von Rovingen und dabei auch die Anzahl der Rovinge für das zumindest eine vorgesehene Bündel oder Band von Rovingen, wobei in diesem Fall auch die Eigenschaften des Bündels oder Bands von Rovingen festzulegen sind.

Zu der Art oder den Eigenschaften des Bündels oder Bands von Rovingen gehört oder gehören insbesondere auch die Querschnittsabmessungen und dabei auch die Art der jeweils zu verwendenden Rovings, also insbesondere deren Dicke und/oder der Anteil der in ihnen enthaltenen elektrischen Leitern und/oder der Roving-Feinheit (Texzahl). Mit Hilfe der Orientierung der elektrischen Leiter, d.h. der Rovinge oder der Bündel oder Bänder von Rovingen, im Ablagemuster und des spezifischen elektrischen Widerstands der verwendeten Rovinge oder Bündel oder Bänder von Rovingen sowie durch geeignete elektrische Verschaltung ist der elektrische Gesamtwiderstand variabel einstellbar. Als Vorgabe kann auch festgelegt sein, dass einzelne Heizschichten der herzustellenden Heizstruktur zyklisch oder permanent beheizt werden.

Die Art der Anordnung der Rovinge kann die Festlegung beinhalten, in welcher Weise und in welchem Verlauf die Rovinge als einzelne Rovinge oder in Bündeln oder Bändern von Rovingen in der Heizschicht angeordnet sein sollen. Falls die Rovinge als Bündel oder Bänder von Rovingen in der Heizschicht angeordnet sein sollen, wird weiterhin festgelegt, wieviele Rovinge und welche Art von Rovingen pro Bündel und/oder Band vorzusehen sind. Mit der Art der Rovinge kann insbesondere festgelegt werden: die Dicke und/oder der Anteil oder die Anzahl von Leitungsteilen im Querschnitt des jeweiligen Rovings und/oder die Anzahl von übereinander liegenden Lagen von Rovingen bzw. Bündeln oder Bändern von Rovingen. Zur Art der Anordnung kann auch festgelegt werden, ob zwischen den Rovingen und/oder zwischen den Bündeln oder Bändern von Rovingen Abstände vorgesehen sind. In diesen Abständen oder in den sich aus diesen ergebenden Zwischenräumen kann zur Bildung einer Isolationsvorrichtung 20, 21, 22 Isoliermaterial, das z.B. aus Glasfaser-Stränge gebildet sein kann, eingelegt sein, um die Rovinge oder Bündel oder Bänder von Rovingen gegeneinander elektrisch zu isolieren.

Die Art der Anordnung kann insbesondere die Feststellung beinhalten, dass ein Band B aus Rovingen R mäanderförmig abgelegt werden sollen, wie dies in den Ausführungsbeispielen gemäß der Figuren 2 und 4 dargestellt ist. Mäanderförmig bezeichnet einen Verlauf von Rovingen R bzw. des Bandes B von Rovingen R, bei denen Längsabschnitte desselben Bandes B bzw. derselben Rovinge R in Bezug auf die Koordinaten zur Beschreibung der flächigen Erstreckung der elektrisch isolierenden Schicht, auf der die Rovinge abgelegt werden, in einander entgegengesetzten Richtungen verlaufen, so dass zwischen diesen Längsabschnitten Krümmungsabschnitte vorgesehen sind, wobei in Längsrichtung der Rovinge R oder des Bandes B aufeinander folgende Krümmungsabschnitte zueinander entgegengesetzte Krümmungen haben. Mit anderen Worten: "Mäanderförmig" heißt in diesem Zusammenhang, dass Längsabschnitte ein und desselben Rovings nebeneinander und parallel zueinander abgelegt sind, wobei jeweils nebeneinander liegende Längsabschnitte in der Längserstreckung des Rovings hintereinander liegende Längabschnitte sind, so dass sich ein mäanderförmiger oder serpentinenförmiger Verlauf des Rovings ergibt.

Weiterhin wird in dem Roving-Definitionsschritt das Ablagemuster von Rovingen und oder zumindest einem Bündel oder Band von Rovingen festgelegt. Durch ein Ablagemuster ist auch eine Streckenlänge für das jeweilige Roving bzw. das jeweilige Bündel oder Band von Rovingen und somit ein spezifischer elektrischer Widerstand derselben gegeben. Beispielartig sind verschiedene Ablagemuster in den Figuren 6 bis 8 dargestellt, die voranstehend anhand dieser Figuren beschrieben wurden.

Der Roving-Definitionsschritt kann insbesondere einen Optimierungsprozess enthalten, der Computer-gestützt ablaufen kann. Nach einem Ausführungsbeispiel eines solchen Optimierungsprozesses werden als Eingangswerte des Optimierungsprozesses vorgegeben: für den Fall, dass die Rovings zur Bildung der Heizschicht einzeln abgelegt werden sollen, eine Art einer Anordnung oder Ablageform der elektrisch leitenden Rovinge oder, für den Fall, dass Bündel oder Bänder von Rovingen zur Bildung der jeweiligen Heizschicht abgelegt werden sollen, eine Anordnung oder Ablageform zumindest eines Bündels oder Bands von Rovingen.

In der Variante dieses Ausführungsbeispiels, bei der die Heizschicht durch Ablage von einzelnen Rovingen gebildet wird, optimiert der in einem Computer implementierte Optimierungsprozess aus der jeweiligen vorgenannten Vorgabe die Anzahl der Rovinge für die jeweilige Heizschicht. Als Optimierungsziel kann neben der Minimierung der Anzahl der Rovinge insbesondere auch die Flächenabdeckung mit dem elektrisch leitenden Material oder des Bandes B von Rovingen R verwendet werden . In einer Weiterführung kann der Optimierungsprozess derart gestaltet sein, dass dieser zusätzlich die Art der Rovings, die durch die Dicke und/oder den Querschnittsanteil der elektrischen Leiter in den Rovings definiert sind, optimiert und bestimmt.

In der anderen Variante dieses Ausführungsbeispiels, die alternativ oder zusätzlich zu der vorgenannten Variante vorgesehen sein kann, ermittelt der in einem Computer implementierte Optimierungsprozess aus der jeweiligen vorgenannten Vorgabe die Anzahl der Bänder B von Rovingen sowie dabei auch die Anzahl der Rovinge für das zumindest eine vorgesehene Band B von Rovingen. In einer Weiterführung kann der Optimierungsprozess derart gestaltet sein, dass dieser zusätzlich auch die Eigenschaften des Bands B von Rovingen optimiert und bestimmt.

Die vorgenannten Ausführungsbeispiele der Optimierungsprozesse können derart gestaltet sein, dass diese aufsetzen auf einem vorgegebenen Ablagemuster oder einer vorgegebenen Ablageform der Rovinge bzw. Bündel oder Bänder von Rovingen zur Bildung einer Heizschicht. In einem weiteren Ausführungsbeispiel kann vorgesehen sein, dass die Ermittlung des Ablagemusters oder der Ablageform der Rovinge bzw. Bündel oder Bänder von Rovingen im Rahmen und innerhalb der Optimierung erfolgt. Dies kann derart realisiert sein, dass vorgenannte optimale Ergebnisse für vorgegebene Ablagemuster ermittelt werden und diese optimalen Ergebnisse miteinander ermittelt werden. Aus dem Vergleich der optimalen Ergebnisse wird das beste optimale Ergebnis mit einem bestimmten Ablagemuster ausgefüllt.

Diese Optimierung kann für die zweidimensionale Form der Heizschicht durchgeführt werden, die aus dem dreidimensionalen Bauteil z.B. aufgrund einer Abwicklung von dessen Oberfläche erzeugt wird. Alternativ kann weiterhin vorgesehen sein, dass die Optimierung für die dreidimensionale Heizschicht durchgeführt wird, die der dreidimensionalen Form des Bauteils an dem für die Heizschicht vorgesehenen Bereich desselben entspricht.

Nach einem Ausführungsbeispiel der Erfindung ist die Herstellung eines zweidimensionalen Heizstruktur-Halbzeugs aus Rovingen (Schritte S6 und S7) vorgesehen, um daraus ein dreidimensionales Heizstruktur-Halbzeug (Schritte S8 und S11) herzustellen. Dabei kann das Ablegen der elektrisch leitenden Rovinge oder der Bündel von Rovingen R oder der Bänder B von Rovingen R auf die Auftrags-Oberfläche des Trägerteils oder das Trägermaterial-Halbzeug, das zur Ausbildung des Trägerteils des herzustellenden Bauteils vorgesehen ist, maschinell und insbesondere automatisch oder CNC-gesteuert ablaufen (Schritt S6). Zur Herstellung einer zweidimensionalen Heizstruktur-Halbzeugs wird zumindest ein elektrisch leitender Roving und/ oder zumindest ein Bündel von Rovingen und/oder zumindest ein Band von Rovingen (Schritt 6a) auf einer elektrisch isolierenden Schicht eines Trägerteil-Halbzeugs, das flach in eine Maschine eingespannt ist, aufgebracht und an dem Trägerteil-Halbzeug befestigt. Die Befestigung der Rovinge kann insbesondere mittels eines Näh- und/oder Stickverfahrens erfolgen. Das Befestigen der Rovinge durch ein Näh- oder Stickverfahren (Schritt 6b) auf dem Trägerteil-Halbzeug kann insbesondere einzeln oder auch gruppenweise erfolgen. D.h. es kann vorgesehen sein, dass jeder Roving oder jedes Bündel von Rovingen oder jeweils ein Band von Rovingen einzeln durch ein Stickverfahren auf dem Trägerteil-Halbzeug befestigt wird und/oder dass mehrere Rovinge zusammen durch ein Stickverfahren auf dem Trägerteil-Halbzeug befestigt werden. Bei der gruppenweisen Befestigung der Rovinge ist insbesondere vorgesehen, dass insbesondere Gruppen von bis zu drei Rovingen zusammen befestigt werden, bevor anschließend ein Roving oder mehrere Rovinge aufgelegt und befestigt wird bzw. werden. Bei der einzelnen Befestigung der Rovinge auf dem Trägerteil-Halbzeug kann zusätzlich vorgesehen sein, dass Gruppen von Rovingen durch ein Stickverfahren auf dem Trägerteil-Halbzeug befestigt werden.

Alternativ oder zusätzlich kann vorgesehen sein, dass ein einzelner Roving, durch ein Klebeverfahren auf dem Trägerteil-Halbzeug befestigt wird oder dass mehrere Rovinge, ein Band oder Bündel von Rovingen auf dem Trägerteil-Halbzeug befestigt werden.

In einem Ausführungsbeispiel wird zumindest ein Roving-Bündel oder Roving-Band oder werden die Roving-Bündel oder Roving-Bänder beim Auflegen der Rovinge und mit dem Befestigen derselben auf dem Trägermaterial nach und nach gebildet. D.h. nach und nach werden in diesem Ausführungsbeispiel die Rovinge nebeneinander auf das Trägermaterial aufgelegt, bis diese auf dem Trägermaterial ein Bündel oder Band von Rovingen bilden. Bei der Befestigung der Rovinge auf dem Trägermaterial kann vorgesehen sein, dass Rovinge einzeln auf dem Trägermaterial und/oder dass mehrere Rovinge als Gruppe oder Bündel von Rovingen zusammen auf dem Trägermaterial befestigt werden. In einem weiteren Ausführungsbeispiel kann vor dem Auflegen der Rovinge vorgesehen sein, dass diese in einem oder mehreren Bündeln oder Bändern zusammengefasst und miteinander befestigt werden. Die Befestigung von Rovingen untereinander vor dem Auflegen kann mit Stickverfahren, Nähverfahren und/oder Klebeverfahren erfolgen. Anschließend wird das vorgefertigte Bündel oder Band von Rovingen auf dem Trägermaterial abgelegt und das Bündel oder Band von Rovingen auf dem Trägermaterial befestigt. Insbesondere die Befestigung von Rovingen, eines Bündels oder eines Bands von Rovingen an dem Trägerteil-Halbzeug kann mit Stickverfahren, Nähverfahren und/oder Klebeverfahren erfolgen. Hierbei kann vorgesehen sein zusätzlich zwischen einer Schicht von Rovingen oder zumindest eines Bandes von Rovingen R eine elektrisch isolierende Schicht insbesondere aus einem Glasgewebe vorzusehen, um die Schicht aus elektrisch leitenden Rovingen bzw. Bündel oder Bänder aus Rovingen gegenüber dem Trägerteil des Bauteils elektrisch zu isolieren (Schritt 6c).

Bei dem Auflegen von Rovingen (Schritt 6b oder 6c) kann je nach Anwendungsfall vorgesehen sein, dass Rovinge nebeneinander ohne Überlappung zur Ausbildung eines Bandes von Rovingen auf dem Trägerteil-Bauteil oder der elektrisch isolierenden Schicht abgelegt und auf diesem bzw. dieser befestigt werden. Es kann jedoch auch vorgesehen sein, dass sich bei diesem Schritt Rovinge abschnittsweise überlappen, d.h. in Dickenrichtung der Heizschicht gesehen abschnittsweise übereinander liegen.

Weiterhin kann vorgesehen sein, dass die Schritte 6b und 6c abwechselnd erfolgen, um in der Dickenrichtung der Heizschicht gesehen nacheinander eine Lage aus Rovingen R, eine elektrisch isolierende Schicht und wiederum zumindest eine Kombination aus einer Lage aus Rovingen R und/oder eines Bandes und/oder eines Bündels von Rovingen und einer elektrisch isolierenden Schicht abzulegen. Bei dieser Vorgehensweise kann insbesondere vorgesehen sein, dass die jeweils weitere Lage von Rovingen R auf der jeweils zusätzlich auf eine Lage von Rovingen R aufgelegten elektrisch isolierenden Schicht aufgenäht oder aufgestickt wird.

Die erfindungsgemäß vorgesehene elektrisch isolierende Schicht auf dem Trägerteil des herzustellenden Bauteils bzw. des Bauteil-Halbzeugs kann insbesondere aus Glas, Aramid oder Kunststoffen gebildet sein. Die elektrisch isolierende Schicht kann auf dem Bauteil-Halbzeug oder dem Trägerteil als separate Schicht aufgebracht und z.B. aufgeklebt sein. Wenn die Herstellung des Trägerteils in einem Kunststoff-Herstellungsverfahren erfolgt, kann vorgesehen sein, dass das Trägerteil zusammen mit der elektrisch isolierenden Schicht als einstückiges Bauteil in dem Kunststoff-Herstellungsverfahren hergestellt wird.

Nach dem Ablegen der Schicht von elektrisch leitenden Rovingen R bzw. der Bündel oder des zumindest einen Bandes B aus Rovingen R auf ein Trägerteil kann im Schritt 7 eine Kontaktierung der Endabschnitte der Rovings aus elektrisch leitenden Fasern z.B. durch Verbindung eines metallischen Kontaktkörpers mit den Endabschnitten der Rovings mittels eines elektrisch leitenden und z.B. Metall enthaltenden Klebstoffes erfolgen.

In einem alternativen Ausführungsbeispiel der Erfindung kann das Ablegen der elektrisch leitenden Rovinge bzw. der Bündel oder Bänder aus Rovingen im Schritt S6 bereits auf einem Trägerteil vorgesehen sein, dessen Oberfläche dreidimensional definierbar ist. Dabei ist die Gestalt des Trägerteils jedoch so vorzusehen, dass dessen Oberfläche eine abwickelbare Gestalt hat. Unter einer abwickelbaren Auftrags-Oberfläche wird in diesem Zusammenhang insbesondere eine dreidimensionale Oberfläche verstanden, die sich ohne innere Formveränderung, d.h. längentreu in die Ebene transformieren lässt. Umgekehrt wird in diesem Zusammenhang unter einer nicht abwickelbaren Auftrags-Oberfläche eine Gestalt der Auftrags-Oberfläche verstanden, die in zwei Dimensionen gekrümmt ist. In diesem Fall kann die AuftragsOberfläche zumindest bereichsweise z.B. eine Kugelform, eine ellipsoide Form oder die Form einer Sattelfläche haben. Nach dem hier beschriebenen Ablegen der Schicht von elektrisch leitenden Rovings erfolgt wiederum eine Kontaktierung von Endabschnitten der Rovings gemäß Schritt S7.

In dem erfindungsgemäßen Schritt S7 der Kontaktierung der Kohlenstoff-Fasern des abgelegten elektrisch leitenden Materials erfolgt eine Verbindung eines metallischen Kontaktkörpers mit den Endabschnitten der elektrisch leitenden Rovinge, die an der Randseite oder dem Randquerschnitt enden und Endflächen haben. Vorzugsweise sind die Rovings derart auf das Trägerteil aufgelegt, dass sich deren Enden zu ihrer Kontaktierung über das Trägerteil hinaus erstrecken. Hierbei wird ein stromleitender und insbesondere metallischer Kontaktkörper mit den Endabschnitten der elektrisch leitenden Rovings elektrisch verbunden. Der Kontaktkörper kann insbesondere plattenförmig oder folienförmig gebildet sein, so dass verhindert wird, das bei der Einspeisung von Strom in die elektrisch leitenden Rovings lokal zu große elektrische Übergangswiderstände und die damit verbundenen lokal hohen Ströme auftreten. Der Kontaktkörper kann insbesondere eine Kupferfolie sein. Die Verbindung des Kontaktkörpers mit den elektrisch leitenden Rovings kann durch einen Metall enthaltenden Klebstoff erfolgen. Dabei kann das im Klebstoff enthaltene Metall aus Metall-Partikeln bestehen. Der Trägerstoff des Klebstoffs kann insbesondere aus einem elektrisch leitenden Polymer gebildet sein.

Wenn die Kontaktierungsstellen bei dem Auslegungsverfahren (Schritte 1 und 2) vorgegeben oder berechnet worden sind, sind diese entsprechend dieser Vorgabe bzw. Berechnung vorzusehen.

Das Komplettieren oder Stabilisieren der Heizstruktur mit elektrisch nichtleitenden Materialien zur elektrischen Isolierung der Kohlenstofffaserheizstruktur kann auf verschiedene Weise und z.B. unter Verwendung von Bindermaterial oder durch ein entsprechendes Vernähen erfolgen. Dabei ist vor der Durchführung eines Harz-Infusionsverfahrens oder Harz-Injektionsverfahrens ein Binderprozess zur Fixierung von zumindest einer Lage von elektrisch leitenden Rovings bzw. der Bündel oder Bänder aus Rovingen und einer Lage elektrisch nichtleitenden Materials vorgesehen.

Weiterhin ist vorgesehen, dass auf die auf das Trägerteil aufgelegte Schicht aus elektrisch leitenden Rovings bzw. der Bündel oder Bänder aus Rovingen eine Isolationsschicht zur elektrischen Isolation der Schicht aus elektrisch leitenden Rovings aufgelegt wird.

Nach einem weiteren Ausführungsbeispiel ist zusätzlich vorgesehen, auf das Gebinde aus mindestens einer Lage von elektrisch leitenden Rovings, dem Bindermaterial und der Isolationsschicht ein Blitzschutz-Material aufzulegen. Das Blitzschutz-Material kann insbesondere eine gestanzte Folie, ein Gewebe, Geflecht oder eine Gitterstruktur aus elektrisch leitendem metallischen und/oder nicht-metallischen Material bestehen.

Das Gebinde aus zumindest einer Lage aus elektrisch leitenden Rovings, dem Bindermaterial und der Isolationsschicht sowie gegebenenfalls dem Blitzschutz-Material ist insbesondere derart vorgesehen, dass dieses Gebinde eine in sich ausreichend stabile Konfiguration bildet, so dass diese stabile Konfiguration dem Drapierwerkzeug entnommen werden kann und in einen zweiten nachgeschalteten Prozess auf einem beheizbaren Formwerkzeug und/oder auf einem nichtbeheizbaren Formwerkzeug in einen Ofen gebracht oder einem Ofen zugeführt werden kann, in dem der Binderprozess durchgeführt werden kann. Dadurch wird vor der Durchführung eines Harz-Infusionsverfahrens oder Harz-Injektionsverfahrens ein Binderprozess zur Fixierung von zumindest einer Lage von elektrisch leitenden Rovings durchgeführt.

Alternativ oder zusätzlich kann vorgesehen sein, dass mehrere separate Heizstrukturen bestehend aus elektrisch leitenden Rovings, die als separat ansteuerbarer elektrischer Widerstand ausgeführt sind, auf das Trägerteil abgelegt werden. Dieses kann sowohl beim einstufigen als auch beim zweistufigen Auflegen der zumindest einen Lage aus elektrisch leitenden Rovings vorgesehen sein. Dabei wird zwischen jeweils zwei Lagen aus elektrisch leitenden Rovings zumindest eine Isolationsschicht aufgelegt.

Nach einem Ausführungsbeispiel zur Herstellung eines Heizkörper-Halbzeugs aus mehreren Lagen und/oder separaten Heizstrukturen aus elektrisch leitenden Rovings wird also auf ein Trägerteil, das sich auf einem ersten Werkzeug befindet, eine Lage aus elektrisch leitenden Rovingen R aufgelegt und diese auf eine beschriebene Weise kontaktiert. Anschließend wird diese Lage von elektrisch leitenden Rovingen R auf einem zweiten Werkzeug aufgelegt, das eine Oberfläche aufweist, die sich von der Oberfläche des ersten Werkzeugs unterscheidet und insbesondere eine Gestalt hat, die dreidimensional zu definieren ist. Auf die auf dem zweiten Werkzeug aufgelegte Lage aus elektrisch leitenden Rovingen R wird dann eine Isolationsschicht aufgelegt. Diese Schritte können nach diesem Ausführungsbeispiel einmal oder mehrfach wiederholt werden, so dass dann mehrere Lagen aus elektrisch leitenden Rovingen R, jeweils von einer Isolationsschicht getrennt, auf dem zweiten Werkzeug liegen. Optional wird anschließend bei diesem Ausführungsbeispiel das Bindermaterial und optional das Blitzschutz-Material aufgebracht. Bei der Verwendung von Bindermaterial erfolgen dann gegebenenfalls der Binderprozess und die Durchführung eines Harz-Infusionsverfahrens oder Harz-Injektionsverfahrens.

Nach einem weiteren Ausführungsbeispiel zur Herstellung eines Heizkörper-Halbzeugs aus mehreren Lagen von elektrisch leitenden Rovings bzw. Bündeln oder Bändern von Rovingen wird also auf einen sich auf einem ersten Werkzeug befindlichen Trägerteil zunächst eine erste Lage aus elektrisch leitenden Rovingen bzw. Bündel oder Bänder von Rovingen aufgelegt und diese nach einer beschriebenen Weise kontaktiert. Auf die auf dem zweiten Werkzeug aufgelegte Lage aus elektrisch leitenden Rovings wird dann eine Isolationsschicht aufgelegt. Diese Schritte können nach diesem Ausführungsbeispiel einmal oder mehrfach wiederholt werden, so dass dann mehrere Lagen aus elektrisch leitenden Rovings, jeweils von einer Isolationsschicht getrennt, auf dem zweiten Werkzeug liegen.

Das Halbzeug aus einem Trägerteil-Halbzeug mit einer elektrisch isolierenden Schicht, auf der die Rovinge bzw. Bündel oder Bänder von Rovingen aufgebracht sind, wird anschließend auf ein Werkzeug mit einer dreidimensionalen Auflageflächen-Kontur aufgelegt (Schritt S8). Das Werkzeug mit der dreidimensionalen Auflageflächen-Kontur Teil kann dasselbe Werkzeug sein, in dem das Trägerteil-Halbzeug eingespannt war, als die Rovinge bzw. Bündel oder Bänder von Rovingen auf dem Trägerteil-Halbzeug aufgebracht wurden.

Die Kontaktierung der Rovinge R oder des Bandes aus Rovingen R (Schritt 7) kann auch nach dem Schritt 8 erfolgen.

Nach dem erfindungsgemäßen Verfahren ist also insbesondere vorgesehen, dass bei der Ablage von elektrisch leitenden Rovingen bzw. des zumindest einen Bündels oder Bands von Rovingen auf das Trägerteil (Schritt S6) das Trägerteil eine zweidimensional definierbare Oberfläche hat und dass vor oder nach der Kontaktierung von Endabschnitten der Rovings bzw. des zumindest einen Bündels oder Bands von Rovingen ein Ablegen der Halbzeugkombination aus Trägerteil und der darauf abgelegten elektrisch leitenden Rovings auf ein Formwerkzeug erfolgt, dessen Oberfläche eine dreidimensional definierbare Gestalt hat.

Optional wird anschließend bei diesem Ausführungsbeispiel das Bindermaterial und optional das Blitzschutz-Material aufgebracht (Schritt S8). Alternativ oder zusätzlich kann vorgesehen sein, dass das Bindermaterial in einem der vorhergehenden Schritte im Trägerteil-Halbzeug und/oder der elektrischen isolierenden Schicht und/oder in den darauf aufgebrachten Rovingen bzw. dem darauf aufgebrachten zumindest einen Bündel oder Band von Rovingen enthalten war. Bei der Verwendung von Bindermaterial erfolgen dann gegebenenfalls der Binderprozess (Schritt S9) zur Stabilisierung des Halbzeugs und die Durchführung eines Harz-Infusionsverfahrens oder Harz-Injektionsverfahrens (Schritt 10).

In einem weiteren Schritt wird das nach einer der beschriebenen Ausführungsformen von Verfahrensschritten entstandene Gebinde aus zumindest einer Lage von elektrisch leitenden Rovings, dem Bindermaterial und der Isolationsschicht sowie gegebenenfalls dem Blitzschutz-Material in einem Harz-Infusionsverfahren und/oder Harz-Injektionsverfahren unter Verwendung eines Harzes konsolidiert (Schritt 10). Dabei kann vorgesehen sein, dass in ersten Arbeitsschritten das Trägerteil und die elektrisch isolierende Schicht als jeweils trockene Halbzeuge aufgelegt werden und die elektrisch isolierende Schicht in einem Kunststoff-Herstellungsverfahren einstückig hergestellt wird.

Anschließend kann eine spanende Nachbearbeitung des aushärteten Heistruktur-Halbzeugs vorgesehen sein (Schritt S11).

Daraufhin kann der Anschluss der elektrischen Leitungen an den metallischen Kontaktkörper erfolgen (Schritt S12).

Weiterhin kann danach eine Funktionsprüfung durch Thermoaufnahmen vorgesehen sein (Schritt S13). Dabei kann vorgesehen sein, dass die Funktionsfähigkeit der Heizstruktur durch Thermoaufnahmen nachgewiesen wird. Durch die Thermoaufnahmen wird eine integrale Aussage zur Temperaturverteilung auf der Oberfläche der Heizstruktur erhalten, wodurch die Aufheizgeschwindigkeit in den einzelnen Heizzonen nachweisbar ist. Durch dieses Thermographie-Verfahren sind durch Erkennung von Hotspots Fehlstellen an Kontaktstellen Kohlenstoff/Metall oder Kohlenstofffaser/Kohlenstofffaser dedektierbar.

Erfindungsgemäß wird mit dem zuvor beschriebenen Verfahren ein Bauteil mit zumindest einer elektrothermischen Heizschicht hergestellt. Die zumindest eine elektrothermische Zusatz-Heizschicht 10, 11, 12 weist insbesondere auf: eine Mehrzahl von Rovingen R, die mit elektrischen Leitern gebildet ist, wobei die Mehrzahl von Rovingen R derart angeordnet ist, dass sich diese flächig über die Heizschicht 11, 12 verteilt, und elektrische Anschlussvorrichtungen 11a, 11b; 12a, 12b zum Anschluss der Heizschicht 10, 11, 12 an eine Energieversorgungs-Vorrichtung E10, E11, E12. Die Mehrzahl von Rovingen R kann dabei zumindest ein Band B von Rovingen R bilden, wobei das zumindest eine Band B von Rovingen R derart angeordnet ist, dass sich dieses flächig über die Heizschicht 10, 11, 12 verteilt. Die elektrischen Leiter der Rovinge R können Kohlenstoffleiter sein oder aus diesen gebildet sein, wobei das zumindest eine Band B von Rovingen R derart angeordnet ist, dass sich dieses in einer Lage flächig über die Heizschicht 10, 11, 12 verteilt. Insbesondere kann der jeweils verwendete Roving R aus Kohlenstoff-Filamenten gebildet sein, die in den Rovingen R parallel zueinander und zumindest abschnittsweise in Längsrichtung der Rovinge R verlaufen.

Die Heizschicht kann dabei derart gestaltet sein, dass die Rovinge R mäanderförmig innerhalb der zumindest einen elektrothermischen Heizschicht 10, 11, 12 verlaufen. Dabei kann die elektrothermische Heizschicht 10, 11, 12 aus in ihrer Dickenrichtung gesehen einer Lage zumindest eines Bandes B von Rovingen R gebildet sein.

Generell kann die elektrothermische Heizschicht 10, 11, 12, auch zusätzlich zu den Kohlenstoffleitern, aus metallischen Leitern gebildet sein.

In der Figur 10 ist eine Vorderkantenklappe eines Flugzeugs dargestellt, auf dem zwei Anordnungen von jeweils mehreren Heizschichten nach der Erfindung angeordnet sind. Die Figur 9 zeigt ein Ausführungsbeispiel der Erfindung mit einem Strukturbauteil 1 eines Flugzeugs mit einem Träger-Bauteil 3 und einem Schalenteil 5, das eine umströmte Außenfläche 105a und einen inneren Bereich 107 aufweist. Das Strukturbauteil 1 ist in der Darstellung der Figur 10 eine Vorderkanten-Klappe eines Flugzeugs. Das Strukturbauteil 1 des Flugzeugs ist insbesondere ein Bauteil, das eine Oberfläche aufweist, die entgegen die Strömung, die das Flugzeug im Flug umströmt, gerichtet ist. Dabei kann das Strukturbauteil die Vorderkante eines Flügels, eines Leitwerks oder einer Vorderkantenklappe eines Flügels sein. Das Strukturbauteil weist demgemäß eine Außenhaut oder ein Schalenteil 5 mit einer Außenseite, die von der Strömung umströmt oder angeströmt wird, und einer entgegengesetzt zu der Außenfläche 105a gelegenen Innenfläche 105b auf.

Erfindungsgemäß ist eine Temperatur-Messvorrichtung in Gestalt eines Pyrometers oder Strahlungsthermometers 100 im inneren Bereich 107 des Strukturbauteils 1 angeordnet. Das Pyrometer 100 kann insbesondere eine Thermographie-Kamera sein.

Der Strahlungsempfänger empfängt die von der Innenfläche 105b des Schalenteils ausgehende Wärmestrahlung, deren Intensität von seiner Temperatur der Innenfläche 5b abhängt, und erzeugt aufgrund der Wärmestrahlung Sensorwerte zur Ermittlung der Temperatur der Innenfläche 105b des Schalenteils 105. Wenn die dem Pyrometer 100 zugewandten Innenfläche 105b des Schalenteils 105 kälter als der Strahlungsempfänger des Pyrometers 100 ist, ist der Strahlungsfluss negativ, d.h. der Strahlungssensor des Pyrometers 100 gibt Wärmestrahlung an die Innenfläche 105b ab, und umgekehrt. Die Ermittlung der Temperatur der Innenfläche 105b des Schalenteils 5 kann insbesondere auf der Basis des Emissionsgrads ε der Innenfläche 105b erfolgen, also der Wärmeabstrahl-Fähigkeit der Innenfläche 105b.

Das Pyrometer 100 ist auf die Innenfläche 105b des Schalenteils 105 gerichtet, um die Wärmestrahlung zu messen, die von einem Bereich der Innenfläche 105b des Schalenteils 5 ausgeht, und somit die Temperatur des Schalenteils 105 erfassen zu können. Zu diesem Zweck ist das Pyrometer 100 in einem geeigneten Abstand zu der Innenfläche 5b an dem Träger-Bauteil 103 angeordnet. Das Träger-Bauteil 3 kann Teil des Struktur-Bauteils 1 oder eines Zusatz-Bauteils an demselben sein und ist derart gestaltet, dass das Pyrometer 100 in geeigneter Position und Lage relativ zu der Innenfläche 105b oder zu einem Bereich derselben angeordnet werden kann. Weiterhin kann das Pyrometer 100 derart an dem Träger-Bauteil angebracht sein, dass die Lage und/oder die Position des Pyrometers 100 einstellbar ist bzw. sind. Unter Lage wird in diesem Zusammenhang die Drehstellung des Pyrometers 100 relativ zur Innenfläche 105b verstanden.

Weiterhin weist die Temperatur-Messvorrichtung eine Sensorwert- Verarbeitungsvorrichtung auf, die aus den von dem Pyrometer 100 erfassten Sensorwerten Temperaturwerte ermittelt. Die Sensorwert-Verarbeitungsvorrichtung ist über eine Signal-Leitung mit dem Pyrometer 100 funktional verbunden und kann entfernt von dem Pyrometer 10 angeordnet sein. Insbesondere kann die Sensorwert-Verarbeitungsvorrichtung in einer Flugsteuerungs-Vorrichtung integriert sein.

Die Sensorwert-Verarbeitungsvorrichtung kann eine Vergleichsfunktion aufweisen, die Temperaturwerte mit zumindest einem Vergleichswert vergleicht und einen Signalwert an eine Systemfunktion sendet, wenn der Grenzwert erreicht oder unterschritten wird. Der Grenzwert kann insbesondere einem unteren Temperaturwert entsprechen, der derart definiert ist, dass bei dieser Temperatur eine Eisbildung an der Außenfläche 105a des Schalenteils 105 möglich oder wahrscheinlich ist.

Alternativ oder zusätzlich kann die Sensorwert-Verarbeitungsvorrichtung eine Übenivachungsfunktion aufweisen, die zur Ermittlung der Möglichkeit einer Eisbildung an der Außenfläche 105a derart gestaltet ist, dass diese Luftdaten und insbesondere die Außentemperatur, die Flughöhe und/oder den Luftdruck empfängt und mit den Sensorwerten einen Wahrscheinlichkeits-Grenzwert für eine Eisbildung ermittelt. Bei diesem Ausführungsbeispiel weist die Sensorwert-Verarbeitungsvorrichtung eine Vergleichsfunktion auf, die den ermittelten Wahrscheinlichkeitswert für eine Eisbildung mit einem Soll- Wahrscheinlichkeitswert für eine Eisbildung für die maximal zulässige Wahrscheinlichkeit einer Eisbildung vergleicht und bei Überschreiten des Soll-Wahrscheinlichkeitswerts einen Signalwert als Warnsignal an eine Systemfunktion wie z.B. ein Flugsteuerungssystem oder eine Cockpitanzeige sendet. Die Cockpitanzeige kann derart gestaltet sein, dass diese dem Piloten anzeigt, dass der Flugzustand verändert und dabei insbesondere die Flughöhe verringert werden muss, um ein Vereisen des Schalenteils 105 zu verhindern.

Am Schalenteil 105 kann eine Heizvorrichtung zur Verhinderung einer Eisbildung an dem Schalenteil 105 angeordnet sein. Bei diesem Ausführungsbeispiel kann die Systemfunktion derart gestaltet sein, dass diese die Heizvorrichtung einschaltet, wenn ein Grenzwert, der einer vorbestimmten Wahrscheinlichkeit einer Eisbildung am Schalenteil 105 entspricht, überschritten wird.

Eine Ausführungsform des erfindungsgemäßen Strukturbauteils oder Bauteils eines Flugzeugs ist in der Figur 11 dargestellt. Das Bauteil ist als Vorderteil einer Vorderkantenklappe eines Flügels ausgeführt. Diese Ausführungsform kann bei lediglich anderer Formgebung des Bauteils auch das Vorderteil eines Hauptflügels, eines Höhenflosse oder einer anderen Klappe oder eines Seiteleitwerks und generell eines aerodynamischen Körpers sein. Das Bauteil weist an seiner Oberfläche mehrere elektrothermische Heizschichten auf, die aufgrund einer entsprechenden Ansteuerung durch die Energieversorgungs-Vorrichtung (nicht dargestellt) Wärme abgeben, um dadurch eine Vereisung der Oberfläche des Bauteils zu verhindern. Die Anzahl und Größe der Heizschichten, die Anordnung derselben auf einer Oberfläche des Bauteils 1 sowie die elektrische Auslegung der Heizschichten und der Energieversorgungs-Vorrichtung hängt vom Anwendungsfall ab und ist auf diesen jeweils anzupassen. Generell weist die Oberfläche bei diesem Ausführungsbeispiel der Erfindung zumindest eine Heizschicht auf.

Bei dem in der Figur 11 konkret dargestellten Ausführungsbeispiel sind auf einer Oberfläche 103 des Bauteils 1 oder eines Basiskörpers 4, das im gezeigten Ausführungsbeispiel ein Schalenteil 4 der Vorderkantenklappe 1 ist, zwei Heizschicht-Anordnungen H1, H2 mit jeweils einer Basis-Heizschicht 101 bzw. 102 und einer Mehrzahl von innerhalb der jeweiligen Basis-Heizschicht 101, 102 angeordneten inneren Heizvorrichtungen oder Zusatz-Heizschichten 111, 112 bzw. 121, 122 integriert.

Die Basis-Heizschichten 101, 102 und die Zusatz-Heizschichten 111, 112 bzw. 121, 122 sind derart gestaltet und angeordnet, dass die Basis-Heizschicht die erste und die zweite Zusatz-Heizschicht in ihrer flächigen Erstreckung umgibt. Die Heizschichten sind nach einem Ausführungsbeispiel der Erfindung gestaltet. Zu diesem Zweck ist insbesondere vorgesehen, dass die Basis-Heizschicht zwei Ausnehmungen aufweist, wobei in der ersten der Ausnehmungen die erste Zusatz-Heizschicht 111 bzw. 121 und in der zweiten der Ausnehmungen die zweite Zusatz-Heizschicht 121 bzw. 122 gelegen ist. Jede der Heizschichten wird von der Energieversorgungs-Vorrichtung bestromt. Die mit einer elektrothermischen Schicht gebildete Basis-Heizschicht 101 ist über eine elektrische Anschlussvorrichtung mittels elektrischer Leitungen an die Energieversorgungs-Vorrichtung angeschlossen. Weiterhin sind auch die zwei Zusatz-Heizschichten 111, 112 jeweils über eine elektrische Anschlussvorrichtung an die Energieversorgungs-Vorrichtung angeschlossen. Somit können die Basis-Heizschicht 110 und die zwei innerhalb desselben angeordneten Zusatz-Heizschichten 111, 112 durch die Energieversorgungs-Vorrichtung mit unterschiedlichen Funktionen bestromt werden, so dass die Heizschichten 110, 111, 112 entsprechend dieser Bestromung Wärme an das Bauteil abgeben, an dem die Heizschichten 110, 111, 112 angebracht sind.

Die Energieversorgungs-Vorrichtung kann funktional insbesondere derart gestaltet sein, dass in einer Aktivierungsphase der Heizvorrichtung der Basis-Heizschicht 110, 120 permanent Strom zugeführt und der ersten 111 bzw. 121 und der zweiten 112 bzw. 122 Zusatz-Heizschicht in vorbestimmter Weise abwechselnd Strom zugeführt werden, so dass die erste 111 bzw. 121 und die zweite 112 bzw. 122 Zusatz-Heizschicht zeitlich abwechselnd Wärme erzeugen. Auf diese Weise erfolgt eine Wärmewirkung für die Oberfläche der gesamten Heiz-Vorrichtung 110 bzw. 120 auf eine energetisch effiziente Weise.

Generell kann eine Heiz-Vorrichtung 110, 120 nur eine Zusatz-Heizschicht aufweisen, die innerhalb oder außerhalb der Basis-Heizschicht gelegen sein kann. In diesem generellen Ausführungsbeispiel kann die Funktion zur Steuerung einer Heizphase des gesamten Heizsystems derart gestaltet sein,
▪ dass in der Heizphase des Heizsystems der Basis-Heizschicht 110, 120 permanent Strom und z.B. Strom in weitgehend gleichbleibender Stärke (innerhalb einer Bandbreite von 10 Prozent eines Mittelwertes) zum Erwärmen der Basis-Heizschicht 110, 120 zugeführt wird und
▪ dass innerhalb derselben Heizphase in ersten Zeitabschnitten elektrischer Strom durch die Zusatz-Heizschicht fließt, der stärker ist als der Strom der durch die Basis-Heizschicht 110 fließt, und sich die ersten Zeitabschnitte abwechseln mit zweiten Zeitabschnitten, in denen kein elektrischer Strom oder ein Strom in der Zusatz-Heizschicht fließt, der geringer ist als der Strom der durch die Basis-Heizschicht 110 fließt.

Insbesondere können die Zusatz-Heizschichten eines Heizsystems zeitlich derart abwechselnd oder sich ergänzend angesteuert werden, dass diese abwechselnd Wärme erzeugen.

Dadurch kann ein energetisch effizientes Erwärmen einer Oberfläche an einem Flugzeug-Bauteil vorgenommen werden.

In einem weiteren Ausführungsbeispiel kann auch nur eine oder können mehrere Basis-Heizschichten ohne eine Zusatz-Heizschicht in dem Bauteil integriert sein.

Das Schalenteil 105 kann insbesondere aus einem Faserverbundwerkstoff(FVW) oder einem Faserverbund-Kunststoff (FVK) gebildet sein. Die je nach Ausführungsform vorgesehenen Heizschichten sind auf einer elektrisch nicht-leitenden Schicht angeordnet, so dass die Heizschichten gegenüber den übrigen Abschnitten des Schalenteils isoliert sind.

Die zumindest eine auf dem Bauteil angeordnete Heizschicht ist vorzugsweise aus Kohlenstoff-Material gebildet, die über elektrische Anschlussvorrichtungen elektrisch angeschlossen ist und bei dem Anliegen einer entsprechenden Spannung Strom führt, so dass sie entsprechend erwärmt werden kann. Insbesondere kann die zumindest eine Heizschicht aus elektrisch leitfähigen Rovingen in einer vorbestimmten Struktur und Dichte oder aus einem Bündel oder einem Verbund oder Band von Rovingen gebildet sein.

Unter "Roving" wird in diesem Zusammenhang ein Bündel aus endlosen Kohlenstoff-Filamenten oder elektrisch leitenden Kabeln verstanden, die in dem Roving unverdreht und/oder gestreckt sein können. Die Kabel können dabei insbesondere aus mittels Glasfasern ummantelten elektrischen wie z.B. metallischen Leitern gebildet sein. Die elektrisch leitenden Einzel-Filamente können aus Kohlenstoff-Filamenten und/oder Kohlenstoff-Fasern und/oder metallischen Legierungen und/oder aus Glasfasern mit z.B. metallischer Beschichtung gebildet sein. Auch können die Rovings insbesondere ausschließlich aus Fasern und insbesondere Kohlenstofffasern gebildet sein. Die Rovinge können mit oder ohne Matrix-Material versehen sein. Dabei können für die erfindungsgemäß verwendeten Rovings Materialien in Form von Endlos-Rovingen, Endlos-Garnen, Endlos-Zwirnen, Endlos-Schnüren, Endlos-Gewirke, Endlos-Webware, Endlos-Kordeln oder Endlos-Maschenware verwendet werden. Solche Endlos-Rovinge können zur Verwendung beim erfindungsgemäßen Verfahren auf Spulen oder Trommeln aufgewickelt sein, um Rovinge zur Anwendung für das erfindungsgemäße Verfahren in geeigneten Längenabschnitten von diesen zu entnehmen.

Zur Bildung der Heizschicht können Rovinge als einzelne Rovinge oder als zumindest ein Verbund oder ein Band von Rovingen angeordnet sein. Unter "Band von Rovingen" wird in diesem Zusammenhang eine Anordnung von in ihrer Längsrichtung nebeneinander verlaufenden Rovingen verstanden, die somit an keinem ihrer Längsabschnitte in der Dickenrichtung der Heizschicht gesehen übereinander gelegen sind. Unter "Verbund von Rovingen" wird in diesem Zusammenhang eine Anordnung von in ihrer Längsrichtung nebeneinander oder auch übereinander verlaufenden Rovingen verstanden, die somit an zumindest einem ihrer Längsabschnitte in der Dickenrichtung der Heizschicht gesehen übereinander gelegen sind.

Mit den in Bezug auf die Längsrichtung des Rovings gelegenen Endstücken desselben kann jeweils ein elektrisch leitendes Verbindungsstück verbunden sein, mit denen wiederum die elektrischen Leitungen verbunden und an der Energieversorgungs-Vorrichtung angeschlossen sind. Dadurch kann mit der Steuerungsfunktion der Energieversorgungs-Vorrichtung Strom mit vorbestimmter Stromstärke und vorbestimmtem zeitlichem Verlauf durch den Roving fließen, um diesen und somit das Bauteil, auf dem der Roving angeordnet sind, zu erwärmen. Grundsätzlich können in Dickenrichtung des Bauteils gesehen mehrere Rovinge übereinander angeordnet sein, die parallel zueinander oder auch gegensinnig zueinander verlaufen können.

Die Rovinge oder das zumindest eine Bündel oder Band von Rovingen können bzw. kann parallel zueinander und schwingungsförmig verlaufen. Grundsätzlich können in Dickenrichtung des Bauteils gesehen mehrere Rovinge übereinander angeordnet sein, die parallel zueinander oder auch gegensinnig zueinander verlaufen können. Andere Formen, in denen Rovinge oder zumindest ein Bündel oder Band von Rovingen zur Bildung einer Heizschicht eines Heizsystems angeordnet sein können bzw. kann, sind nach den Anforderungen des jeweiligen Anwendungsfalls vorzusehen.

Bei der Verwendung zumindest eines Heizsystems an dem Bauteil 1 nach den vorgenannten Ausführungsbeispielen kann die mit der Sensorwert-Verarbeitungsvorrichtung funktional gekoppelte Systemfunktion weiterhin als Regelfunktion zur Regelung der Temperatur des von dem Pyrometer 100 erfassten Bereichs des Schalenteils 105 gestaltet sein. Dabei empfängt die Systemfunktion von der Sensorwert-Verarbeitungsvorrichtung die Temperaturwerte, die aus Sensorwerten des Pyrometers 100 ermittelt wurden, und vergleicht diese mit einem Referenzwert oder einer Temperatur als Regelgröße. Dieser Referenzwert oder Temperaturwert liegt oberhalb einer Temperatur, bei der eine Eisbildung am Schalenteil 105 auftreten kann oder diese vermieden werden kann. Die Regelfunktion ist mit der Sensorwert-Verarbeitungsvorrichtung funktional verbunden und empfängt von dieser die Temperaturwerte als Eingangsgrößen, die aus Sensorwerten des Pyrometers 100 ermittelt wurden. Weiterhin steuert die Regelfunktion die Energieversorgungs-Vorrichtung derart an, dass die zumindest eine Heizschicht derart erwärmt wird, dass der von dem Pyrometer 100 erfasste Bereich des Schalenteils eine Soll-Temperatur möglichst einhält. Die Regelfunktion erzeugt somit auf der Basis einer Soll-Temperatur für den von dem Pyrometer 100 erfassten Bereich des Schalenteils 105 entsprechende Kommandosignale, die an die Energieversorgungs-Vorrichtung übermittelt werden, die in entsprechender Weise die zumindest eine Heizschicht bestromt. Bei dem Vorhandensein mehrere Heizschichten können auch mehrere Heizschichten angesteuert werden, um die Temperatur an dem von dem Pyrometer 100 erfassten Bereich des Schalenteils 105 zu regeln.

Bei der Verwendung zumindest eines Heizsystems nach den vorgenannten Ausführungsbeispielen kann die Systemfunktion weiterhin derart gestaltet sein, dass diese in dem Fall, in dem die Heizvorrichtung eingeschaltet ist und zugleich der einer Wahrscheinlichkeit einer Eisbildung am Schalenteil 105 entsprechende Grenzwert überschritten wird, ein Warnsignal ausgibt. Die Heizvorrichtung kann derart gestaltet sein, dass diese verschiedene Heizstufen, d.h. verschiedene Stufen an freigebender Wärmeleistung erzeugen kann. In diesem Fall kann die Systemfunktion insbesondere derart ausgeführt sein, dass das Warnsignal bei dem Vorliegen der höchsten Heizstufe der Heizvorrichtung, bei der die maximale Wärmeleistung erzeugt wird, und dem gleichzeitigen Überschreiten des einer Wahrscheinlichkeit einer Eisbildung am Schalenteil 5 entsprechenden Grenzwerts erzeugt wird. Das Warnsignal kann an eine Flugführungsanzeige gesendet werden und diese kann derart ausgeführt sein, dass diese eine Empfehlung z.B. im Flight Director, für den Piloten erzeugt, nach der das Flugzeug in einen Flugzustand gebracht wird, in der die Eisbildung am Flügel vermieden wird. Alternativ oder zusätzlich kann vorgesehen sein, dass das Warnsignal an eine Flugsteuerungsvorrichtung gesendet wird, die eine Steuerungsfunktion aufweist, durch die das Flugzeug in einen Flugzustand gebracht wird, in der die Eisbildung am_Flügel vermieden wird.

Das Warnsignal kann bedeuten, dass der elektrothermische Heizkörper defekt ist. In einem Ausführungsbeispiel der Erfindung kann deshalb vorgesehen sein, dass die Überwachungsfunktion ermittelt, ob die atmosphärischen Bedingungen bei dem Ausfall des elektrothermischen Heizkörpers eine kritische Situation für das Flugzeug bedeuten können. Hierbei kann vorgesehen sein, dass in einer Bewertungsfunktion die Flughöhe und optional die gemessene Luft-Temperatur verwendet wird. Falls die Anwendung der Bewertungsfunktion ergibt, dass sich aus der unzulässigen (d.h. zu hohen) Wahrscheinlichkeit einer Eisbildung eine kritische Flugsituation ergeben kann, wird eine Warnung an das Flugsteuerungssystem oder an die Cockpitanzeige geschickt, die dem Piloten Handlungsempfehlungen anzeigt, mit denen er das Flugzeug in einen sichereren Flugzustand bringen kann. Dabei kann z.B. angezeigt werden, dass der Flugzustand verändert und dabei insbesondere die Flughöhe verringert werden muss, um ein Vereisen des Flügels zu verhindern. Alternativ oder zusätzlich kann auch eine automatische Steuerungsfunktion realisiert sein, die diese Maßnahmen automatisch umsetzt.

Das Pyrometer 100 kann ein Gesamtstrahlungs-Pyrometer, das die Ausstrahlung einer Messoberfläche über den gesamten Spektralbereich erfasst, oder ein Bandstrahlungs-Pyrometer, dessen Linsen, Fenster und Strahlungssensor nur jeweils in einem beschränkten Wellenlängenbereich arbeiten, sein.

Alternativ kann das Pyrometer 100 ein Quotientenpyrometer oder Verhältnispyrometer oder 2-Farben-Pyrometer sein, das das Verhältnis der Intensitäten von zwei unterschiedlichen "Farben" erfasst, so dass die Temperatur der Innenfläche 5b nicht aufgrund der Helligkeit, sondern aufgrund der Farbe der Strahlung bestimmt wird. Weiterhin kann auf die innere Seite des Strukturteiles ein "Anstrich" oder ein Material-Auftrag mit definiertem Emissionskoeffizienten aufgebracht werden, da die gemessene Temperatur von diesem stark beeinflusst wird. Alternativ kann vorgesehen sein, dass der Emissionskoeffizient von der Oberfläche bestimmt wird. In diesen Fällen ist der jeweilige Emissionskoeffizient in der Auswertungsfunktion zur Auswertung der erfassten Messwerte berücksichtigt. Die Auswertungsfunktion kann weiterhin derart gestaltet sein, dass diese weitere Wärmestrahler, die insbesondere durch Reflexionen die gemessene Temperatur auf der Innenseite des Strukturteiles beeinflussen, "rausrechnet" oder abschottet, d.h. kompensiert.

Weiterhin kann das Schalenteil 105 derart ausgebildet sein, dass dessen Innenfläche 5b nicht stark oder nur in geringem Maße wellenlängenabhängig ist.

Auch kann vorgesehen sein, dass eine Farbe der Innenfläche 5b als Referenzfarbe oder Vergleichswert ermittelt wird, die einer Wahrscheinlichkeit einer Eisbildung entspricht, deren Unterschreiten vermieden werden soll. Die Auswertungsfunktion, die dem Pyrometer zugeordnet ist, kann in diesem Fall eine Vergleichsfunktion aufweisen, die die jeweils ermittelte Farbe der Innenfläche 105b mit der Referenzfarbe vergleicht und ein Signal generiert, wenn der Wert für die Referenzfarbe überschritten wird. Der Vorteil dieses Ausführungsbeispiel ist, dass der Emissionsgrad der Innenfläche 5b bei der Ermittlung der Temperatur derselben keine Rolle spielt und nicht erfasst werden muss. Bei der Verhältnisbildung für die Messung spielt es keine Rolle, wenn der Emissionsgrad für das betreffende Messgut nicht stark wellenlängenabhängig ist.

In einem Ausführungsbeispiel ist das Pyrometer 100 als Schmalband-Pyrometer ausgebildet, das nur einen durch einen Filter auf einen bestimmten Wellenlängenbereich eingeschränkten kleinen Teil des Strahlungsspektrums auswertet. Das Strahlungsspektrum ist dabei derart ausgelegt, dass dieses einen Bereich von Temperaturen der Innenfläche 105b beschreibt, bei denen eine Eisbildung an dem Schalenteil 105 wahrscheinlich ist.

Die jeweiligen Sensorwerte oder Bereiche, die einer Wahrscheinlichkeit der Eisbildung an der Außenfläche 105a des Schalenteils entsprechen, werden insbesondere aufgrund von Tests definiert.

Als Strahlungssensor oder Detektor des Pyrometers 100 sind insbesondere thermische (z. B. Bolometer, pyroelektrische Sensoren oder Thermosäulen aus Thermoelementen) oder photoelektrische Detektoren oder Fotodioden vorgesehen.

Nach einem Ausführungsbeispiel ist also ein Strukturbauteil eines Flugzeugs mit einem Trägerbauteil 103 und einem Schalenteil 105 vorgesehen, das eine umströmte Außenfläche und einen inneren Bereich 107 aufweist. Das Strukturbauteil weist dabei weiterhin zumindest einen an dem Schalenteil angeordneten elektrothermischen Heizkörper auf, der von einer an dieser elektrisch angeschlossenen Energieversorgung bestromt werden kann. Durch die Erwärmung des Heizkörpers wird das Schalenteil 105 erwärmt, um ein Vereisen desselben zu verhindern oder ein Enteisen desselben zu erreichen. Weiterhin ist ein Pyrometer 100 vorgesehen, das im inneren Bereich 107 an einem Trägerbauteil 103 des Strukturbauteils 1 angeordnet ist und auf das Schalenteil 105 gerichtet ist.

## Patentansprüche

1. Struktur-Bauteil mit einem Heizsystem (S) mit zumindest einer Energieversorgungs-Vorrichtung (E10, E11, E12), wobei das Heizsystem (S) aufweist:
▪ eine Basis-Heizvorrichtung mit einer Isolationsschicht, mit einer darauf angeordneten elektrothermischen Basis-Heizschicht (10) und mit einer elektrischen Anschlussvorrichtung (A10-1, A10-2), über die die zumindest eine Energieversorgungs-Vorrichtung (E10, E11, E12) an die Basis-Heizschicht (10) angeschlossen ist,
▪ eine Zusatz-Heizvorrichtung mit einer Isolationsschicht, mit einer darauf angeordneten elektrothermischen Zusatz-Heizschicht (11) und mit einer elektrischen Anschlussvorrichtung (A11-1, A11-2), über die die Energieversorgungs-Vorrichtung (E10, E11, E12) an die Zusatz-Heizschicht (11) angeschlossen ist,
**dadurch gekennzeichnet,**
**dass** die Basis-Heizschicht (10) und die Zusatz-Heizschicht (11) jeweils aus zumindest einem Bündel oder einem Verbund oder einem Band von Rovingen gebildet ist,
**dass** die Enden jedes Rovings der Basis-Heizschicht (10) an jeweils eine Elektrode der elektrischen Anschlussvorrichtung angeschlossen sind,
**dass** die Basis-Heizvorrichtung und die Zusatz-Heizvorrichtung zur Herstellung einer funktional zusammenhängenden Heizwirkung räumlich einander zugeordnet sind und die Energieversorgungs-Vorrichtung (E10, E11, E12) derart gestaltet ist, dass der Zusatz-Heizschicht (11) in der Aktivierungsphase in zumindest einem zeitlichen Teilabschnitt Strom zugeführt wird, um das Strukturbauteil im Bereich der Zusatzheizschicht auf eine angenommene Soll-Temperatur zu erwärmen, und dass der Basis-Heizschicht (10) über die Aktivierungsphase hinaus permanent Strom zugeführt wird, so dass die Basis-Heizschicht (10) permanent und die Zusatz-Heizschicht (11) in dem zeitlichen Teilabschnitt Wärme erzeugt.

2. Struktur-Bauteil (1) nach dem Anspruch 1, **dadurch gekennzeichnet, dass** die Energieversorgungs-Vorrichtung (E10, E11, E12) derart gestaltet ist, dass in ersten Zeitabschnitten der Heizphase in der Zusatz-Heizschicht (11) Strom mit einer Stärke fließt, die um 50% größer ist als der Strom, der durch die Basis-Heizschicht (10) fließt, und dass in zweiten Zeitabschnitten der Heizphase, die auf jeweils einen ersten Zeitabschnitt folgen, in der Zusatz-Heizschicht (11) Strom mit einer Stärke fließt, die um 50% geringer ist als der Strom, der durch die Basis-Heizschicht (10) fließt.

3. Struktur-Bauteil (1) nach dem Anspruch 1 oder 2, **dadurch gekennzeichnet, dass** das Heizsystem (1) aufweist: eine weitere Zusatz-Heizvorrichtung mit einer Isolationsschicht, mit einer darauf angeordneten weiteren elektrothermischen Zusatz-Heizschicht (12) und mit einer elektrischen Anschlussvorrichtung (A12-1, A12-2), über die die Energieversorgungs-Vorrichtung (E10, E11, E12) an die weitere Zusatz-Heizschicht (12) angeschlossen ist,
▪ wobei die Funktion der Energieversorgungs-Vorrichtung (E10, E11, E12) zur Steuerung des Stroms in den Heizschichten derart gestaltet ist, dass sich für den in den Zusatz-Heizschichten jeweils fließenden Strom in jeder Zusatz-Heizschicht erste und zweite Zeitabschnitte mit unterschiedlichen Stromstärken des Heizstroms bilden, die sich einander abwechseln,
▪ wobei die Stromstärken in den jeweils ersten Heizphasen wesentlich größer sind als die Stromstärken in den jeweils zweiten Heizphasen.

4. Struktur-Bauteil nach dem Anspruch 3, **dadurch gekennzeichnet, dass** die erste elektrothermische Zusatz-Heizschicht (11) und die weitere elektrothermische Zusatz-Heizschicht (12) in Bezug auf die flächige Erstreckung der Basis-Heizschicht (10) innerhalb derselben angeordnet sind.

5. Struktur-Bauteil nach einem der voranstehenden Ansprüche, **dadurch gekennzeichnet, dass** die elektrothermischen Zusatz-Heizschichten (11, 12) aus zumindest einem über die elektrischen Anschlussvorrichtungen (11a, 11 b; 12a, 12b) an die Energieversorgungs-Vorrichtung (E10, E11, E12) angeschlossenen Band (B) von Rovingen (R) mit Kohlenstoffleitern gebildet sind, wobei das zumindest eine Band (B) von Rovingen (R) derart angeordnet ist, dass sich dieses flächig über die Zusatz-Heizschichten (11, 12) verteilt.

6. Struktur-Bauteil nach einem der voranstehenden Ansprüche, **dadurch gekennzeichnet, dass** die elektrothermische Basis-Heizschicht (10) aus zumindest einem über die elektrischen Anschlussvorrichtungen (10a, 10b) an die Energieversorgungs-Vorrichtung (E10, E11, E12) angeschlossenen zumindest einen Band (B) von Rovingen (R) mit Kohlenstoffleitern gebildet sind, wobei das zumindest eine Band (B) von Rovingen (R) derart angeordnet ist, dass sich dieses in einer Lage flächig über die Basis-Heizschicht (10) verteilt.

7. Struktur-Bauteil nach dem Anspruch 5 oder 6, **dadurch gekennzeichnet, dass** der Roving (R) aus Kohlenstoff-Filamenten gebildet ist, die in den Rovingen parallel zueinander und zumindest abschnittsweise in Längsrichtung der Rovinge verlaufen.

8. Struktur-Bauteil nach einem der Ansprüche 5 bis 7, **dadurch gekennzeichnet, dass** die zumindest eine elektrothermische Zusatz-Heizschicht (11, 12) aus zumindest einem über die elektrischen Anschlussvorrichtungen an die Energieversorgungs-Vorrichtung (E10, E11, E12) angeschlossenen eine Band (B) von Rovingen (R) gebildet ist, das mäanderförmig innerhalb der jeweiligen Heizschicht (10, 11, 12) verläuft.

9. Struktur-Bauteil nach einem der Ansprüche 5 bis 8, **dadurch gekennzeichnet, dass** der Heizbereich der ersten und/oder der zweiten inneren Heizvorrichtung (11, 12) aus in der Dickenrichtung des jeweiligen Heizbereichs gesehen einer Lage zumindest eines Bandes (B) von Rovingen (R) gebildet ist.

10. Struktur-Bauteil nach einem der Ansprüche 1 bis 4, **dadurch gekennzeichnet, dass** die elektrothermische Schicht aus metallischen Leitern gebildet ist.

## Claims

1. A structural component comprising a heating system (S) with at least one energy supply device (E10, E11, E12), wherein the heating system (S) comprises:
- a base heating device comprising an insulation layer, with an electrothermal base heating layer (10) arranged thereon, and with an electrical connecting device (A10-1, A10-2) via which the at least one energy supply device (E10, E11, E12) is connected to the base heating layer (10),
- an additional heating device comprising an insulation layer, with an electrothermal additional heating layer (11) arranged thereon, and with an electrical connecting device (A11-1, A11-2) via which the energy supply device (E10, E11, E12) is connected to the additional heating layer (11),
**characterized**
**in that** the base heating layer (10) and the additional heating layer (11) are each formed of at least one bundle or one compound structure or one ribbon of rovings,
**in that** the ends of each roving of the base heating layer (10) are in each case connected to an electrode of the electrical connecting device,
**in that**, for the purpose of producing a functionally cohesive heating effect, the base heating device and the additional heating device are spatially associated with each other, and the energy supply device (E10, E11, E12) is configured in such a manner that in the activation phase current is supplied during at least a partial period of time to the additional heating layer (11) in order to heat the structural component in the region of the additional heating layer to a supposed setpoint temperature, and in that, beyond the activation phase current is permanently supplied to the base heating layer (10) so that the base heating layer (10) permanently generates heat and the additional heating layer (11) generates heat in the partial period of time.

2. The structural component (1) according to claim 1, **characterized in that** the energy supply device (E10, E11, E12) is configured in such a manner that in first periods of time of the heating phase current flows in the additional heating layer (11) at an intensity which is 50% higher than the current flowing through the base heating layer (10), and **in that** in second periods of time of the heating phase, which second periods of time follow respectively a first period of time, current flows in the additional heating layer (11) at an intensity which is 50% lower than the current flowing through the base heating layer (10).

3. The structural component (1) according to claim 1 or 2, **characterized in that** the heating system (1) comprises: a further additional heating device comprising an insulation layer with a further electrothermal additional heating layer (12) arranged thereon and comprising an electrical connecting device (A12-1, A12-2) via which the energy supply device (E10, E11, E12) is connected to the further additional heating layer (12),
- wherein the function of the energy supply device (E10, E11, E12) for controlling the current in the heating layers is configured in such a manner that, in relation to the current which in each case flows in the additional heating layers, in each additional heating layer first and second periods of time with different current intensities of the heating current form, which periods of time alternate,
- wherein the current intensities in the respective first heating phases are significantly higher than the current intensities in the respective second heating phases.

4. The structural component according to claim 3, **characterized in that** the first electrothermal additional heating layer (11) and the further electrothermal additional heating layer (12) in relation to the sheet-like extension of the base heating layer (10) are arranged within said base heating layer (10).

5. The structural component according to any of the preceding claims, **characterized in that** the electrothermal additional heating layers (11, 12) are formed of at least one ribbon (B) of rovings (R) which is connected via the electrical connecting devices (11a, 11b; 12a, 12b) to the energy supply device (E10, E11, E12), wherein the rovings comprise carbon conductors, wherein the at least one ribbon (B) of rovings (R) is arranged in such a manner that it is distributed in a sheet-like manner over the additional heating layers (11, 12).

6. The structural component according to any of the preceding claims, **characterized in that** the electrothermal base heating layer (10) is formed of at least one ribbon (B) of rovings (R) which is connected via the electrical connecting devices (10a, 10b) to the energy supply device (E10, E11, E12), wherein the rovings comprise carbon conductors, wherein the at least one ribbon (B) of rovings (R) is arranged in such a manner that it is distributed in a sheet-like manner over the base heating layer (10).

7. The structural component according to claim 5 or 6, **characterized in that** the roving (R) is formed of carbon filaments that extend in the rovings parallel to each other and at least in some sections in the longitudinal direction of the rovings.

8. The structural component according to any of claims 5 to 7, **characterized in that** the at least one electrothermal additional heating layer (11, 12) is formed of at least one ribbon (B) of rovings (R), which ribbon is connected to the energy supply device (E10, E11, E12) via the electrical connecting devices and extends in a meandering manner within the respective heating layer (10, 11, 12).

9. The structural component according to any of claims 5 to 8, **characterized in that** the heating region of the first and/or of the second internal heating device (11, 12), when viewed in the direction of thickness of the respective heating region, comprises a layer of at least one ribbon (B) of rovings (R).

10. The structural component according to any of claims 1 to 4, **characterized in that** the electrothermal layer is formed of metallic conductors.

## Revendications

1. Elément de construction structuré avec un système de chauffage (S) avec au moins un dispositif d'alimentation en énergie (E10, E11, E12), le système de chauffage (S) présentant :
- un dispositif de chauffage de base avec une couche d'isolation, avec une couche de chauffage de base électrothermique (10) placée dessus et avec un dispositif de branchement électrique (A10-1, A10-2) par lequel le dispositif d'alimentation en énergie (E10, E11, E12) qui existe au moins est branché à la couche de chauffage de base (10),
- un dispositif de chauffage supplémentaire avec une couche d'isolation, avec une couche de chauffage supplémentaire électrothermique (11) placée dessus et avec une couche de branchement électrique (A11-1, A11-2) par laquelle le dispositif d'alimentation en énergie (E10, E11, E12) qui existe au moins est branché à la couche de chauffage supplémentaire (11),
**caractérisé en ce**
**que** la couche de chauffage de base (10) et la couche de chauffage supplémentaire (11) sont formées respectivement par au moins un faisceau ou un ensemble composite ou une bande de roving,
**que** les extrémités de chaque roving de la couche de chauffage de base (10) sont raccordées à respectivement une électrode du dispositif de branchement électrique,
**que** le dispositif de chauffage de base et le dispositif de chauffage supplémentaire correspondent l'un à l'autre dans l'espace pour réaliser un effet de chauffage cohérent fonctionnellement et que le dispositif d'alimentation en énergie (E10, E11, E12) est configuré de telle manière que du courant électrique est amené à la couche de chauffage supplémentaire (11) dans la phase d'activation dans au moins un tronçon temporel pour réchauffer l'élément de construction structuré à une température nominale estimée dans la zone de la couche de chauffage supplémentaire et que du courant électrique est amené de manière permanente à la couche de chauffage de base (10) au-delà de la phase d'activation si bien que la couche de chauffage de base (10) produit de la chaleur de manière permanente et la couche de chauffage supplémentaire (11) dans le tronçon temporel.

2. Elément de construction structuré (1) selon la revendication 1, **caractérisé en ce que** le dispositif d'alimentation en énergie (E10, E11, E12) est configuré de telle manière que du courant électrique passe dans la couche de chauffage supplémentaire (11) dans des premières périodes de temps de la phase de chauffage avec une intensité qui est de 50% supérieure au courant qui passe par la couche de chauffage de base (10) et que du courant électrique passe dans la couche de chauffage supplémentaire (11) dans des secondes périodes de temps de la phase de chauffage qui suivent respectivement une première période de chauffage avec une intensité qui est de 50% inférieure au courant qui passe par la couche de chauffage de base (10).

3. Elément de construction structuré (1) selon la revendication 1 ou 2, **caractérisé en ce que** le système de chauffage (1) présente un autre dispositif de chauffage supplémentaire avec une couche d'isolation, avec une autre couche de chauffage supplémentaire électrothermique (12) placée dessus et avec un dispositif de branchement électrique (A12-1, A12-2) par lequel le dispositif d'alimentation en énergie (E10, E11, E12) est branché à l'autre couche de chauffage supplémentaire (12),
• cependant que le fonctionnement du dispositif d'alimentation en énergie (E10, E11, E12) est configuré, pour la commande du courant dans les couches de chauffage, de telle manière que des premières et des secondes périodes de temps avec des intensités de courant différentes du courant de chauffage qui alternent se forment dans chaque couche de chauffage supplémentaire pour le courant qui passe respectivement dans les couches de chauffage supplémentaires,
• cependant que les intensités de courant sont substantiellement plus grandes dans les premières phases de chauffage respectives que les intensités de courant dans les secondes phases de chauffage respectives.

4. Elément de construction structuré (1) selon la revendication 1, **caractérisé en ce que** la première couche de chauffage supplémentaire électrothermique (11) et l'autre couche de chauffage supplémentaire électrothermique (12) sont placées, par rapport à l'extension en surface de la couche de chauffage de base (10), à l'intérieur de celle-ci.

5. Elément de construction structuré (1) selon l'une des revendications précédentes, **caractérisé en ce que** les couches de chauffage supplémentaires électrothermiques (11) sont formées à partir d'au moins une bande (B) de roving (R) avec des conducteurs carbone branchée au dispositif d'alimentation en énergie (E10, E11, E12) par les dispositifs de branchement électrique (11 a, 11 b ; 12a, 12b), cependant que la bande qui existe au moins (B) de roving (R) est placée de telle manière qu'elle se répartit en surface sur les couches de chauffage supplémentaires (11, 12).

6. Elément de construction structuré (1) selon l'une des revendications précédentes, **caractérisé en ce que** la couche de chauffage de base électrothermique (10) est formée à partir d'au moins une bande (B) de roving (R) avec des conducteurs carbone branchée au dispositif d'alimentation en énergie (E10, E11, E12) par les dispositifs de branchement électrique (10a, 10b), cependant que la bande qui existe au moins (B) de roving (R) est placée de telle manière qu'elle se répartit en une couche en surface sur la couche de chauffage de base (10).

7. Elément de construction structuré selon la revendication 5 ou 6, **caractérisé en ce que** le roving est formé par des filaments de carbone qui sont parallèles les uns aux autres dans les roving et au moins par section dans le sens longitudinal des roving.

8. Elément de construction structuré (1) selon l'une des revendications 5 à 7, **caractérisé en ce que** la couche de chauffage supplémentaire électrothermique (11) qui existe au moins est formée par au moins une bande (B) de roving (R) branchée au dispositif d'alimentation en énergie (E10, E11, E12) par les dispositifs de branchement électrique, bande qui est en forme de méandres à l'intérieur de la couche de chauffage respective (10, 11, 12).

9. Elément de construction structuré (1) selon l'une des revendications 5 à 8, **caractérisé en ce que** la zone de chauffage du premier et/ou du second dispositif de chauffage intérieur (11, 12) est formée par une couche d'au moins une bande (B) de roving (R), ceci étant vu dans le sens de l'épaisseur de la plage de chauffage respective.

10. Elément de construction structuré (1) selon l'une des revendications 1 à 4, **caractérisé en ce que** la couche électrothermique est formée par des conducteurs métalliques.
